(19) Europäisches Patentamt / European Patent Office / Office européen des brevets

(11) **EP 2 978 224 A1**

(12) # EUROPEAN PATENT APPLICATION

published in accordance with Art. 153(4) EPC

(43) Date of publication:
**27.01.2016 Bulletin 2016/04**

(21) Application number: **14767880.9**

(22) Date of filing: **17.03.2014**

(51) Int Cl.:
***H04N 21/23*** *(2011.01)* ***H04N 21/43*** *(2011.01)*

(86) International application number:
**PCT/KR2014/002239**

(87) International publication number:
**WO 2014/148785 (25.09.2014 Gazette 2014/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.03.2013 US 201361802736 P**
**16.04.2013 US 201361812710 P**

(71) Applicant: **LG Electronics Inc.**
**Seoul 150-721 (KR)**

(72) Inventors:
- **BAEK, Jongseob**
  **Seocho-gu, Seoul 137-893 (KR)**
- **KIM, Byounggill**
  **Seocho-gu, Seoul 137-893 (KR)**
- **KIM, Woochan**
  **Seocho-gu, Seoul 137-893 (KR)**
- **KIM, Jaehyung**
  **Seocho-gu, Seoul 137-893 (KR)**
- **KO, Woosuk**
  **Seocho-gu, Seoul 137-893 (KR)**
- **HONG, Sungryong**
  **Seocho-gu, Seoul 137-893 (KR)**
- **MUN, Chulkyu**
  **Seocho-gu, Seoul 137-893 (KR)**
- **CHOI, Jinyong**
  **Seocho-gu, Seoul 137-893 (KR)**
- **HWANG, Jaeho**
  **Seocho-gu, Seoul 137-893 (KR)**
- **KWAK, Kookyeon**
  **Seocho-gu, Seoul 137-893 (KR)**
- **JEONG, Byeongkook**
  **Seocho-gu, Seoul 137-893 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(54) **BROADCAST SIGNAL TRANSMITTING METHOD, BROADCAST SIGNAL RECEIVING METHOD, BROADCAST SIGNAL TRANSMITTING APPARATUS, AND BROADCAST SIGNAL RECEIVING APPARATUS**

(57) The present invention provides a broadcast signal transmitting method. The method for transmitting a broadcast signal according to the present invention may comprise: a step of encoding data pipe (DP) data according to a code rate, the step of encoding DP data comprising a sub-step of forward error correction (FEC) encoding the DP data, a sub-step of bit-interleaving the FEC encoded DP data, and a sub-step of mapping the bit-interleaved DP data to constellation according to the code rate; a step of generating at least one signal frame by mapping the encoded DP data; and a step of modulating data of the generated signal frame by an orthogonal frequency division multiplexing (OFDM) scheme and transmitting a broadcast signal including the modulated data of the signal frame.

FIG. 33

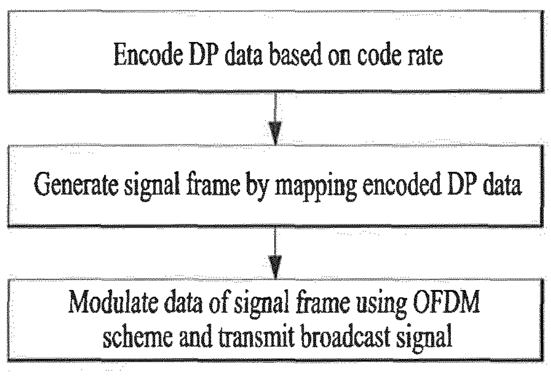


EP 2 978 224 A1

## Description

[Technical Field]

The present invention relates to an apparatus for transmitting broadcast signals, an apparatus for receiving broadcast signals and methods for transmitting and receiving broadcast signals.

[Background Art]

As analog broadcast signal transmission comes to an end, various technologies for transmitting/receiving digital broadcast signals are being developed. A digital broadcast signal may include a larger amount of video/audio data than an analog broadcast signal and further include various types of additional data in addition to the video/audio data.
That is, a digital broadcast system can provide HD (high definition) images, multi-channel audio and various additional services. However, data transmission efficiency for transmission of large amounts of data, robustness of transmission/reception networks and network flexibility in consideration of mobile reception equipment need to be improved for digital broadcast.

[Disclosure]

[Technical Problem]

Accordingly, the present invention is directed to an apparatus for transmitting broadcast signals and an apparatus for receiving broadcast signals for future broadcast services and methods for transmitting and receiving broadcast signals for future broadcast services.

[Technical Solution]

The object of the present invention can be achieved by providing a broadcast signal transmission method including encoding data pipe (DP) data based on a code rate, wherein the encoding of the DP data includes forward error correction (FEC)-encoding the DP data, bit-interleaving the FEC-encoded DP data, and mapping the bit-interleaved DP data to constellations based on the code rate, generating at least one signal frame by mapping the encoded DP data, and modulating data of the generated signal frame using an orthogonal frequency division multiplexing (OFDM) scheme and transmitting a broadcast signal including the modulated data of the signal frame.
The broadcast signal transmission method may further include signal space diversity (SSD)-encoding the DP data mapped to the constellations, the SSD-encoding may include grouping the DP data mapped to the constellations in units of N cells, and applying an NxN matrix to the grouped N cells, and N may denote a number of dimensions of the SSD-encoding.
N may be one of 2, 3, and 4.
If N is 3, the NxN matrix may be expressed as one of embodiments to be described below in relation to the NxN matrix.
The grouping of the DP data mapped to the constellations in units of N cells may further include grouping each of real number components and imaginary number components of the DP data mapped to the constellations, in units of N cells.
The encoding of the DP data may further include interleaving the DP data mapped to the constellations.
The interleaving of the DP data mapped to the constellations may further include splitting the DP data into real number components and imaginary number components and delaying the imaginary number components, and writing the delayed DP data in a memory based on a certain cycle T and reading cells written in the memory using T random interleavers.
In another aspect of the present invention, provided herein is a broadcast signal reception method including receiving a broadcast signal and demodulating data of a signal frame included in the received broadcast signal, using an orthogonal frequency division multiplexing (OFDM) scheme, parsing the signal frame by demapping data pipe (DP) data, and decoding the DP data based on a code rate, wherein the decoding of the DP data includes demapping the DP data from constellations based on the code rate, bit-deinterleaving the DP data demapped from the constellations, and forward error correction (FEC)-decoding the bit-deinterleaved DP data.
The broadcast signal reception method may further include signal space diversity (SSD)-decoding the DP data.
A number of dimensions of the SSD-decoding may be one of 2, 3, and 4.
The decoding of the DP data may further include deinterleaving the DP data.
The deinterleaving of the DP data may further include writing the DP data in a memory using T random deinterleavers and reading the DP data written in the memory based on a certain cycle T, and splitting the read DP data into real number components and imaginary number components and delaying the real number components.

In another aspect of the present invention, provided herein is a broadcast signal transmission apparatus including an encoding module for encoding data pipe (DP) data based on a code rate, wherein the encoding module includes a forward error correction (FEC) encoding module for FEC-encoding the DP data, a bit interleaving module for bit-interleaving the FEC-encoded DP data, and a constellation mapping module for mapping the bit-interleaved DP data to constellations based on the code rate, a frame building module for generating at least one signal frame by mapping the encoded DP data, and an orthogonal frequency division multiplexing (OFDM) module for modulating data of the generated signal frame using an OFDM scheme and transmitting a broadcast signal including the modulated data of the signal frame.

The broadcast signal transmission apparatus may further include a signal space diversity (SSD) encoding module for SSD-encoding the DP data mapped to the constellations, the SSD encoding module may group the DP data mapped to the constellations in units of N cells, and apply an NxN matrix to the grouped N cells, and N may denote a number of dimensions of the SSD-encoding.

N may be one of 2, 3, and 4.

If N is 3, the NxN matrix may be expressed as one of embodiments to be described below in relation to the NxN matrix.

The SSD encoding module may group each of real number components and imaginary number components of the DP data mapped to the constellations, in units of N cells.

The encoding module may further include an interleaving module for interleaving the DP data mapped to the constellations.

The interleaving module for interleaving the DP data mapped to the constellations may split the DP data into real number components and imaginary number components, delay the imaginary number components, write the delayed DP data in a memory based on a certain cycle T, and read cells written in the memory using T random interleavers.

In another aspect of the present invention, provided herein is a broadcast signal reception apparatus including an orthogonal frequency division multiplexing (OFDM) module for receiving a broadcast signal and demodulating data of a signal frame included in the received broadcast signal, using an OFDM scheme, a frame parsing module for parsing the signal frame by demapping data pipe (DP) data, and a decoding module for decoding the DP data based on a code rate, wherein the decoding module includes a constellation demapping module for demapping the DP data from constellations based on the code rate, a bit deinterleaving module for bit-deinterleaving the DP data demapped from the constellations, and a forward error correction (FEC) decoding module for FEC-decoding the bit-deinterleaved DP data.

The broadcast signal reception apparatus may further include a signal space diversity (SSD) decoding module for SSD-decoding the DP data.

A number of dimensions of the SSD-decoding may be one of 2, 3, and 4.

The decoding module may further include a deinterleaving module for deinterleaving the DP data.

The deinterleaving module for deinterleaving the DP data may write the DP data in a memory using T random deinterleavers, read the DP data written in the memory based on a certain cycle T, split the read DP data into real number components and imaginary number components, and delay the real number components.

[Advantageous Effects]

The present invention may provide an efficient broadcast signal transmission method, broadcast signal reception method, broadcast signal transmission apparatus, and broadcast signal reception apparatus.

In addition, the present invention may improve efficiency of data transmission and may increase robustness of transmission/reception of a broadcast signal.

[Description of Drawings]

FIG. 1 illustrates a structure of an apparatus for transmitting broadcast signals for future broadcast services according to an embodiment of the present invention.
FIG. 2 illustrates an input formatting module according to an embodiment of the present invention.
FIG. 3 illustrates an input formatting module according to another embodiment of the present invention.
FIG. 4 illustrates an input formatting module according to another embodiment of the present invention.
FIG. 5 illustrates a coding & modulation module according to an embodiment of the present invention.
FIG. 6 illustrates a frame structure module according to an embodiment of the present invention.
FIG. 7 illustrates a waveform generation module according to an embodiment of the present invention.
FIG. 8 illustrates a structure of an apparatus for receiving broadcast signals for future broadcast services according to an embodiment of the present invention.

FIG. 9 illustrates a synchronization & demodulation module according to an embodiment of the present invention.

FIG. 10 illustrates a frame parsing module according to an embodiment of the present invention.

FIG. 11 illustrates a demapping & decoding module according to an embodiment of the present invention.

FIG. 12 illustrates an output processor according to an embodiment of the present invention.

FIG. 13 illustrates an output processor according to another embodiment of the present invention.

FIG. 14 illustrates a coding & modulation module according to another embodiment of the present invention.

FIG. 15 illustrates a demapping & decoding module according to another embodiment of the present invention.

FIG. 16 is a view illustrating a multi-dimensional signal diversity (MDSD) method according to an embodiment of the present invention.

FIG. 17 is a detailed block diagram of an MDSD block according to an embodiment of the present invention, and a rotated signal space diversity (rSSD) block.

FIG. 18 is a view illustrating precoding schemes of MDSD according to an embodiment of the present invention and rSSD.

FIG. 19 is a view illustrating precoding results of MDSD according to an embodiment of the present invention and rSSD.

FIG. 20 is a view illustrating a method for generating a $2^m$-dimensional precoding matrix of MDSD according to an embodiment of the present invention.

FIG. 21 is a view illustrating a method of generating a 3-dimensional precoding matrix of MDSD according to an embodiment of the present invention.

FIG. 22 is a block diagram of a demapping & decoding module according to another embodiment of the present invention.

FIG. 23 is a block diagram of a coding & modulation module according to another embodiment of the present invention.

FIG. 24 is a view illustrating periodic and random I/Q interleaving technology according to an embodiment of the present invention.

FIG. 25 is a view illustrating a Q1-delay process for 2D-SSD, according to an embodiment of the present invention.

FIG. 26 is a view illustrating operation of a periodic and random I/Q interleaver for 2D-SSD, according to an embodiment of the present invention.

FIG. 27 is a view illustrating operation of the periodic and random I/Q interleaving technology for 2D-SSD when N is 24, according to an embodiment of the present invention.

FIG. 28 is a view illustrating a Q2-delay process for 4D-SSD, according to an embodiment of the present invention.

FIG. 29 is a view illustrating operation of the periodic and random I/Q interleaver for 4D-SSD, according to an embodiment of the present invention.

FIG. 30 is a view illustrating operation of the periodic and random I/Q interleaving technology for 4D-SSD when N is 24, according to an embodiment of the present invention.

FIG. 31 is a detailed block diagram of a demapping & decoding module according to another embodiment of the present invention.

FIG. 32 is a view illustrating periodic and random I/Q deinterleaving technology according to an embodiment of the present invention.

FIG. 33 is a view illustrating a broadcast signal transmission method according to an embodiment of the present invention.

FIG. 34 is a view illustrating a broadcast signal reception method according to an embodiment of the present invention.

[Best Mode]

Although most terms used in the present invention have been selected from general ones widely used in the art, some terms have been arbitrarily selected by the applicant and their meanings are explained in detail in the following description as needed. Thus, the present invention should be understood based upon the intended meanings of the terms rather than their simple names or meanings.

The present invention provides apparatuses and methods for transmitting and receiving broadcast signals for future broadcast services. Future broadcast services according to an embodiment of the present invention include a terrestrial broadcast service, a mobile broadcast service, a UHDTV service, etc. The present invention may process broadcast signals for the future broadcast services through non-MIMO (Multiple Input Multiple Output) or MIMO according to one embodiment. A non-MIMO scheme according to an embodiment of the present invention may include a MISO (Multiple Input Single Output) scheme, a SISO (Single Input Single Output) scheme, etc.

While MISO or MIMO uses two antennas in the following for convenience of description, the present invention is applicable to systems using two or more antennas.

FIG. 1 illustrates a structure of an apparatus for transmitting broadcast signals for future broadcast services according to an embodiment of the present invention.

The apparatus for transmitting broadcast signals for future broadcast services according to an embodiment of the present invention can include an input formatting module 1000, a coding & modulation module 1100, a frame structure module 1200, a waveform generation module 1300 and a signaling generation module 1400. A description will be given of the operation of each module of the apparatus for transmitting broadcast signals.

Referring to FIG. 1, the apparatus for transmitting broadcast signals for future broadcast services according to an embodiment of the present invention can receive MPEG-TSs, IP streams (v4/v6) and generic streams (GSs) as an input signal. In addition, the apparatus for transmitting broadcast signals can receive management information about the configuration of each stream constituting the input signal and generate a final physical layer signal with reference to the received management information.

The input formatting module 1000 according to an embodiment of the present invention can classify the input streams on the basis of a standard for coding and modulation or services or service components and output the input streams as a plurality of logical data pipes (or data pipes or DP data). The data pipe is a logical channel in the physical layer that carries service data or related metadata, which may carry one or multiple service(s) or service component(s). In addition, data transmitted through each data pipe may be called DP data.

In addition, the input formatting module 1000 according to an embodiment of the present invention can divide each data pipe into blocks necessary to perform coding and modulation and carry out processes necessary to increase transmission efficiency or to perform scheduling. Details of operations of the input formatting module 1000 will be described later.

The coding & modulation module 1100 according to an embodiment of the present invention can perform forward error correction (FEC) encoding on each data pipe received from the input formatting module 1000 such that an apparatus for receiving broadcast signals can correct an error that may be generated on a transmission channel. In addition, the coding & modulation module 1100 according to an embodiment of the present invention can convert FEC output bit data to symbol data and interleave the symbol data to correct burst error caused by a channel. As shown in FIG. 1, the coding & modulation module 1100 according to an embodiment of the present invention can divide the processed data such that the divided data can be output through data paths for respective antenna outputs in order to transmit the data through two or more Tx antennas.

The frame structure module 1200 according to an embodiment of the present invention can map the data output from the coding & modulation module 1100 to signal frames. The frame structure module 1200 according to an embodiment of the present invention can perform mapping using scheduling information output from the input formatting module 1000 and interleave data in the signal frames in order to obtain additional diversity gain.

The waveform generation module 1300 according to an embodiment of the present invention can convert the signal frames output from the frame structure module 1200 into a signal for transmission. In this case, the waveform generation module 1300 according to an embodiment of the present invention can insert a preamble signal (or preamble) into the signal for detection of the transmission apparatus and insert a reference signal for estimating a transmission channel to compensate for distortion into the signal. In addition, the waveform generation module 1300 according to an embodiment of the present invention can provide a guard interval and insert a specific sequence into the same in order to offset the influence of channel delay spread due to multi-path reception. Additionally, the waveform generation module 1300 according to an embodiment of the present invention can perform a procedure necessary for efficient transmission in consideration of signal characteristics such as a peak-to-average power ratio of the output signal.

The signaling generation module 1400 according to an embodiment of the present invention generates final physical layer signaling information using the input management information and information generated by the input formatting module 1000, coding & modulation module 1100 and frame structure module 1200. Accordingly, a reception apparatus according to an embodiment of the present invention can decode a received signal by decoding the signaling information.

As described above, the apparatus for transmitting broadcast signals for future broadcast services according to one embodiment of the present invention can provide terrestrial broadcast service, mobile broadcast service, UHDTV service, etc. Accordingly, the apparatus for transmitting broadcast signals for future broadcast services according to one embodiment of the present invention can multiplex signals for different services in the time domain and transmit the same.

FIGS. 2, 3 and 4 illustrate the input formatting module 1000 according to embodiments of the present invention. A description will be given of each figure.

FIG. 2 illustrates an input formatting module according to one embodiment of the present invention. FIG. 2 shows an input formatting module when the input signal is a single input stream.

Referring to FIG. 2, the input formatting module according to one embodiment of the present invention can include a mode adaptation module 2000 and a stream adaptation module 2100.

As shown in FIG. 2, the mode adaptation module 2000 can include an input interface block 2010, a CRC-8 encoder block 2020 and a BB header insertion block 2030. Description will be given of each block of the mode adaptation module 2000.

The input interface block 2010 can divide the single input stream input thereto into data pieces each having the length of a baseband (BB) frame used for FEC (BCH/LDPC) which will be performed later and output the data pieces.

The CRC-8 encoder block 2020 can perform CRC encoding on BB frame data to add redundancy data thereto.

The BB header insertion block 2030 can insert, into the BB frame data, a header including information such as mode adaptation type (TS/GS/IP), a user packet length, a data field length, user packet sync byte, start address of user packet sync byte in data field, a high efficiency mode indicator, an input stream synchronization field, etc.

As shown in FIG. 2, the stream adaptation module 2100 can include a padding insertion block 2110 and a BB scrambler block 2120. Description will be given of each block of the stream adaptation module 2100.

If data received from the mode adaptation module 2000 has a length shorter than an input data length necessary for FEC encoding, the padding insertion block 2110 can insert a padding bit into the data such that the data has the input data length and output the data including the padding bit.

The BB scrambler block 2120 can randomize the input bit stream by performing an XOR operation on the input bit stream and a pseudo random binary sequence (PRBS).

The above-described blocks may be omitted or replaced by blocks having similar or identical functions.

As shown in FIG. 2, the input formatting module can finally output data pipes to the coding & modulation module.

FIG. 3 illustrates an input formatting module according to another embodiment of the present invention. FIG. 3 shows a mode adaptation module 3000 of the input formatting module when the input signal corresponds to multiple input streams.

The mode adaptation module 3000 of the input formatting module for processing the multiple input streams can independently process the multiple input streams.

Referring to FIG. 3, the mode adaptation module 3000 for respectively processing the multiple input streams can include input interface blocks, input stream synchronizer blocks 3100, compensating delay blocks 3200, null packet deletion blocks 3300, CRC-8 encoder blocks and BB header insertion blocks. Description will be given of each block of the mode adaptation module 3000.

Operations of the input interface block, CRC-8 encoder block and BB header insertion block correspond to those of the input interface block, CRC-8 encoder block and BB header insertion block described with reference to FIG. 2 and thus description thereof is omitted.

The input stream synchronizer block 3100 can transmit input stream clock reference (ISCR) information to generate timing information necessary for the apparatus for receiving broadcast signals to restore the TSs or GSs.

The compensating delay block 3200 can delay input data and output the delayed input data such that the apparatus for receiving broadcast signals can synchronize the input data if a delay is generated between data pipes according to processing of data including the timing information by the transmission apparatus.

The null packet deletion block 3300 can delete unnecessarily transmitted input null packets from the input data, insert the number of deleted null packets into the input data based on positions in which the null packets are deleted and transmit the input data.

The above-described blocks may be omitted or replaced by blocks having similar or identical functions.

FIG. 4 illustrates an input formatting module according to another embodiment of the present invention.

Specifically, FIG. 4 illustrates a stream adaptation module of the input formatting module when the input signal corresponds to multiple input streams.

The stream adaptation module of the input formatting module when the input signal corresponds to multiple input streams can include a scheduler 4000, a 1-frame delay block 4100, an in-band signaling or padding insertion block 4200, a physical layer signaling generation block 4300 and a BB scrambler block 4400. Description will be given of each block of the stream adaptation module.

The scheduler 4000 can perform scheduling for a MIMO system using multiple antennas having dual polarity. In addition, the scheduler 4000 can generate parameters for use in signal processing blocks for antenna paths, such as a bit-to-cell demux block, a cell interleaver block, a time interleaver block, etc. included in the coding & modulation module illustrated in FIG. 1.

The 1-frame delay block 4100 can delay the input data by one transmission frame such that scheduling information about the next frame can be transmitted through the current frame for in-band signaling information to be inserted into the data pipes.

The in-band signaling or padding insertion block 4200 can insert undelayed physical layer signaling (PLS)-dynamic signaling information into the data delayed by one transmission frame. In this case, the in-band signaling or padding insertion block 4200 can insert a padding bit when a space for padding is present or insert in-band signaling information into the padding space. In addition, the scheduler 4000 can output physical layer signaling-dynamic signaling information about the current frame separately from in-band signaling information. Accordingly, a cell mapper, which will be described later, can map input cells according to scheduling information output from the scheduler 4000.

The physical layer signaling generation block 4300 can generate physical layer signaling data which will be transmitted through a preamble symbol of a transmission frame or spread and transmitted through a data symbol other than the in-band signaling information. In this case, the physical layer signaling data according to an embodiment of the present invention can be referred to as signaling information. Furthermore, the physical layer signaling data according to an embodiment of the present invention can be divided into PLS-pre information and PLS-post information. The PLS-pre information can include parameters necessary to encode the PLS-post information and static PLS signaling data and the PLS-post information can include parameters necessary to encode the data pipes. The parameters necessary to encode the data pipes can be classified into static PLS signaling data and dynamic PLS signaling data. The static PLS signaling data is a parameter commonly applicable to all frames included in a super-frame and can be changed on a super-frame basis. The dynamic PLS signaling data is a parameter differently applicable to respective frames included in a super-frame and can be changed on a frame-by-frame basis. Accordingly, the reception apparatus can acquire the PLS-post information by decoding the PLS-pre information and decode desired data pipes by decoding the PLS-post information.

The BB scrambler block 4400 can generate a pseudo-random binary sequence (PRBS) and perform an XOR operation on the PRBS and the input bit streams to decrease the peak-to-average power ratio (PAPR) of the output signal of the waveform generation block. As shown in FIG. 4, scrambling of the BB scrambler block 4400 is applicable to both data pipes and physical layer signaling information.

The above-described blocks may be omitted or replaced by blocks having similar or identical functions according to designer.

As shown in FIG. 4, the stream adaptation module can finally output the data pipes to the coding & modulation module.

FIG. 5 illustrates a coding & modulation module according to an embodiment of the present invention.

The coding & modulation module shown in FIG. 5 corresponds to an embodiment of the coding & modulation module illustrated in FIG. 1.

As described above, the apparatus for transmitting broadcast signals for future broadcast services according to an embodiment of the present invention can provide a terrestrial broadcast service, mobile broadcast service, UHDTV service, etc.

Since QoS (quality of service) depends on characteristics of a service provided by the apparatus for transmitting broadcast signals for future broadcast services according to an embodiment of the present invention, data corresponding to respective services needs to be processed through different schemes. Accordingly, the coding & modulation module according to an embodiment of the present invention can independently process data pipes input thereto by independently applying SISO, MISO and MIMO schemes to the data pipes respectively corresponding to data paths. Consequently, the apparatus for transmitting broadcast signals for future broadcast services according to an embodiment of the present invention can control QoS for each service or service component transmitted through each data pipe.

Accordingly, the coding & modulation module according to an embodiment of the present invention can include a first block 5000 for SISO, a second block 5100 for MISO, a third block 5200 for MIMO and a fourth block 5300 for processing the PLS-pre/PLS-post information. The coding & modulation module illustrated in FIG. 5 is an exemplary and may include only the first block 5000 and the fourth block 5300, the second block 5100 and the fourth block 5300 or the third block 5200 and the fourth block 5300 according to design. That is, the coding & modulation module can include blocks for processing data pipes equally or differently according to design.

A description will be given of each block of the coding & modulation module.

The first block 5000 processes an input data pipe according to SISO and can include an FEC encoder block 5010, a bit interleaver block 5020, a bit-to-cell demux block 5030, a constellation mapper block 5040, a cell interleaver block 5050 and a time interleaver block 5060.

The FEC encoder block 5010 can perform BCH encoding and LDPC encoding on the input data pipe to add redundancy thereto such that the reception apparatus can correct an error generated on a transmission channel.

The bit interleaver block 5020 can interleave bit streams of the FEC-encoded data pipe according to an interleaving rule such that the bit streams have robustness against burst error that may be generated on the transmission channel. Accordingly, when deep fading or erasure is applied to QAM symbols, errors can be prevented from being generated in consecutive bits from among all codeword bits since interleaved bits are mapped to the QAM symbols.

The bit-to-cell demux block 5030 can determine the order of input bit streams such that each bit in an FEC block can be transmitted with appropriate robustness in consideration of both the order of input bit streams and a constellation mapping rule.

The constellation mapper block 5040 can map a bit word input thereto to one constellation. In this case, the constellation mapper block 5040 can additionally perform rotation & Q-delay. That is, the constellation mapper block 5040 can rotate input constellations according to a rotation angle, divide the constellations into an in-phase component and a quadrature-phase component and delay only the quadrature-phase component by an arbitrary value. Then, the constellation mapper block 5040 can remap the constellations to new constellations using a paired in-phase component and quadrature-phase component.

The cell interleaver block 5050 can randomly interleave cells corresponding to one FEC block and output the interleaved cells such that cells corresponding to respective FEC blocks can be output in different orders.

The time interleaver block 5060 can interleave cells belonging to a plurality of FEC blocks and output the interleaved cells. Accordingly, the cells corresponding to the FEC blocks are dispersed and transmitted in a period corresponding to a time interleaving depth and thus diversity gain can be obtained.

The second block 5100 processes an input data pipe according to MISO and can include the FEC encoder block, bit interleaver block, bit-to-cell demux block, constellation mapper block, cell interleaver block and time interleaver block in the same manner as the first block 5000. However, the second block 5100 is distinguished from the first block 5000 in that the second block 5100 further includes a MISO processing block 5110. The second block 5100 performs the same procedure including the input operation to the time interleaver operation as those of the first block 5000 and thus description of the corresponding blocks is omitted.

The MISO processing block 5110 can encode input cells according to a MISO encoding matrix providing transmit diversity and output MISO-processed data through two paths. MISO processing according to one embodiment of the present invention can include OSTBC (orthogonal space time block coding)/OSFBC (orthogonal space frequency block coding, Alamouti coding).

The third block 5200 processes an input data pipe according to MIMO and can include the FEC encoder block, bit interleaver block, bit-to-cell demux block, constellation mapper block, cell interleaver block and time interleaver block in the same manner as the second block 5100, as shown in FIG. 5. However, the data processing procedure of the third block 5200 is different from that of the second block 5100 since the third block 5200 includes a MIMO processing block 5220.

That is, in the third block 5200, basic roles of the FEC encoder block and the bit interleaver block are identical to those of the first and second blocks 5000 and 5100 although functions thereof may be different from those of the first and second blocks 5000 and 5100.

The bit-to-cell demux block 5210 can generate as many output bit streams as input bit streams of MIMO processing and output the output bit streams through MIMO paths for MIMO processing. In this case, the bit-to-cell demux block 5210 can be designed to optimize the decoding performance of the reception apparatus in consideration of characteristics of LDPC and MIMO processing.

Basic roles of the constellation mapper block, cell interleaver block and time interleaver block are identical to those of the first and second blocks 5000 and 5100 although functions thereof may be different from those of the first and second blocks 5000 and 5100. As shown in FIG. 5, as many constellation mapper blocks, cell interleaver blocks and time interleaver blocks as the number of MIMO paths for MIMO processing can be present. In this case, the constellation mapper blocks, cell interleaver blocks and time interleaver blocks can operate equally or independently for data input through the respective paths.

The MIMO processing block 5220 can perform MIMO processing on two input cells using a MIMO encoding matrix and output the MIMO-processed data through two paths. The MIMO encoding matrix according to an embodiment of the present invention can include spatial multiplexing, Golden code, full-rate full diversity code, linear dispersion code, etc.

The fourth block 5300 processes the PLS-pre/PLS-post information and can perform SISO or MISO processing.

The basic roles of the bit interleaver block, bit-to-cell demux block, constellation mapper block, cell interleaver block, time interleaver block and MISO processing block included in the fourth block 5300 correspond to those of the second block 5100 although functions thereof may be different from those of the second block 5100.

A shortened/punctured FEC encoder block 5310 included in the fourth block 5300 can process PLS data using an FEC encoding scheme for a PLS path provided for a case in which the length of input data is shorter than a length necessary to perform FEC encoding. Specifically, the shortened/punctured FEC encoder block 5310 can perform BCH encoding on input bit streams, pad 0s corresponding to a desired input bit stream length necessary for normal LDPC encoding, carry out LDPC encoding and then remove the padded 0s to puncture parity bits such that an effective code rate becomes equal to or lower than the data pipe rate.

The blocks included in the first block 5000 to fourth block 5300 may be omitted or replaced by blocks having similar or identical functions according to design.

As illustrated in FIG. 5, the coding & modulation module can output the data pipes (or DP data), PLS-pre information and PLS-post information processed for the respective paths to the frame structure module.

FIG. 6 illustrates a frame structure module according to one embodiment of the present invention.

The frame structure module shown in FIG. 6 corresponds to an embodiment of the frame structure module 1200 illustrated in FIG. 1.

The frame structure module according to one embodiment of the present invention can include at least one cell-mapper 6000, at least one delay compensation module 6100 and at least one block interleaver 6200. The number of cell mappers 6000, delay compensation modules 6100 and block interleavers 6200 can be changed. A description will be given of each module of the frame structure block.

The cell-mapper 6000 can allocate cells corresponding to SISO-, MISO- or MIMO-processed data pipes output from the coding & modulation module, cells corresponding to common data commonly applicable to the data pipes and cells corresponding to the PLS-pre/PLS-post information to signal frames according to scheduling information. The common data refers to signaling information commonly applied to all or some data pipes and can be transmitted through a specific data pipe. The data pipe through which the common data is transmitted can be referred to as a common data pipe and can be changed according to design.

When the apparatus for transmitting broadcast signals according to an embodiment of the present invention uses two output antennas and Alamouti coding is used for MISO processing, the cell-mapper 6000 can perform pair-wise cell mapping in order to maintain orthogonality according to Alamouti encoding. That is, the cell-mapper 6000 can process two consecutive cells of the input cells as one unit and map the unit to a frame. Accordingly, paired cells in an input path corresponding to an output path of each antenna can be allocated to neighboring positions in a transmission frame.

The delay compensation block 6100 can obtain PLS data corresponding to the current transmission frame by delaying input PLS data cells for the next transmission frame by one frame. In this case, the PLS data corresponding to the current frame can be transmitted through a preamble part in the current signal frame and PLS data corresponding to the next signal frame can be transmitted through a preamble part in the current signal frame or in-band signaling in each data pipe of the current signal frame. This can be changed by the designer.

The block interleaver 6200 can obtain additional diversity gain by interleaving cells in a transport block corresponding to the unit of a signal frame. In addition, the block interleaver 6200 can perform interleaving by processing two consecutive cells of the input cells as one unit when the above-described pair-wise cell mapping is performed. Accordingly, cells output from the block interleaver 6200 can be two consecutive identical cells.

When pair-wise mapping and pair-wise interleaving are performed, at least one cell mapper and at least one block interleaver can operate equally or independently for data input through the paths.

The above-described blocks may be omitted or replaced by blocks having similar or identical functions according to design.

FIG. 7 illustrates a waveform generation module according to an embodiment of the present invention.

The waveform generation module illustrated in FIG. 7 corresponds to an embodiment of the waveform generation module 1300 described with reference to FIG. 1.

The waveform generation module according to an embodiment of the present invention can modulate and transmit as many signal frames as the number of antennas for receiving and outputting signal frames output from the frame structure module illustrated in FIG. 6.

Specifically, the waveform generation module illustrated in FIG. 7 is an embodiment of a waveform generation module of an apparatus for transmitting broadcast signals using m Tx antennas and can include m processing blocks for modulating and outputting frames corresponding to m paths. The m processing blocks can perform the same processing procedure. A description will be given of operation of the first processing block 7000 from among the m processing blocks.

The first processing block 7000 can include a reference signal & PAPR reduction block 7100, an inverse waveform transform block 7200, a PAPR reduction in time block 7300, a guard sequence insertion block 7400, a preamble insertion block 7500, a waveform processing block 7600, other system insertion block 7700 and a DAC (digital analog converter) block 7800.

The reference signal insertion & PAPR reduction block 7100 can insert a reference signal into a predetermined position of each signal block and apply a PAPR reduction scheme to reduce a PAPR in the time domain. If a broadcast transmission/reception system according to an embodiment of the present invention corresponds to an OFDM system, the reference signal insertion & PAPR reduction block 7100 can use a method of reserving some active subcarriers rather than using the same. In addition, the reference signal insertion & PAPR reduction block 7100 may not use the PAPR reduction scheme as an optional feature according to broadcast transmission/reception system.

The inverse waveform transform block 7200 can transform an input signal in a manner of improving transmission efficiency and flexibility in consideration of transmission channel characteristics and system architecture. If the broadcast transmission/reception system according to an embodiment of the present invention corresponds to an OFDM system, the inverse waveform transform block 7200 can employ a method of transforming a frequency domain signal into a time domain signal through inverse FFT operation. If the broadcast transmission/reception system according to an embodiment of the present invention corresponds to a single carrier system, the inverse waveform transform block 7200 may not be used in the waveform generation module.

The PAPR reduction in time block 7300 can use a method for reducing PAPR of an input signal in the time domain. If the broadcast transmission/reception system according to an embodiment of the present invention corresponds to an OFDM system, the PAPR reduction in time block 7300 may use a method of simply clipping peak amplitude. Furthermore, the PAPR reduction in time block 7300 may not be used in the broadcast transmission/reception system according to an embodiment of the present invention since it is an optional feature.

The guard sequence insertion block 7400 can provide a guard interval between neighboring signal blocks and insert a specific sequence into the guard interval as necessary in order to minimize the influence of delay spread of a transmission channel. Accordingly, the reception apparatus can easily perform synchronization or channel estimation. If the broadcast transmission/reception system according to an embodiment of the present invention corresponds to an OFDM system, the guard sequence insertion block 7400 may insert a cyclic prefix into a guard interval of an OFDM symbol.

The preamble insertion block 7500 can insert a signal of a known type (e.g. the preamble or preamble symbol) agreed upon between the transmission apparatus and the reception apparatus into a transmission signal such that the reception apparatus can rapidly and efficiently detect a target system signal. If the broadcast transmission/reception system according to an embodiment of the present invention corresponds to an OFDM system, the preamble insertion block 7500 can define a signal frame composed of a plurality of OFDM symbols and insert a preamble symbol into the beginning of each signal frame. That is, the preamble carries basic PLS data and is located in the beginning of a signal frame.

The waveform processing block 7600 can perform waveform processing on an input baseband signal such that the input baseband signal meets channel transmission characteristics. The waveform processing block 7600 may use a method of performing square-root-raised cosine (SRRC) filtering to obtain a standard for out-of-band emission of a transmission signal. If the broadcast transmission/reception system according to an embodiment of the present invention corresponds to a multi-carrier system, the waveform processing block 7600 may not be used.

The other system insertion block 7700 can multiplex signals of a plurality of broadcast transmission/reception systems in the time domain such that data of two or more different broadcast transmission/reception systems providing broadcast services can be simultaneously transmitted in the same RF signal bandwidth. In this case, the two or more different broadcast transmission/reception systems refer to systems providing different broadcast services. The different broadcast services may refer to a terrestrial broadcast service, mobile broadcast service, etc. Data related to respective broadcast services can be transmitted through different frames.

The DAC block 7800 can convert an input digital signal into an analog signal and output the analog signal. The signal output from the DAC block 7800 can be transmitted through m output antennas. A Tx antenna according to an embodiment of the present invention can have vertical or horizontal polarity.

The above-described blocks may be omitted or replaced by blocks having similar or identical functions according to design.

FIG. 8 illustrates a structure of an apparatus for receiving broadcast signals for future broadcast services according to an embodiment of the present invention.

The apparatus for receiving broadcast signals for future broadcast services according to an embodiment of the present invention can correspond to the apparatus for transmitting broadcast signals for future broadcast services, described with reference to FIG. 1. The apparatus for receiving broadcast signals for future broadcast services according to an embodiment of the present invention can include a synchronization & demodulation module 8000, a frame parsing module 8100, a demapping & decoding module 8200, an output processor 8300 and a signaling decoding module 8400. A description will be given of operation of each module of the apparatus for receiving broadcast signals.

The synchronization & demodulation module 8000 can receive input signals through m Rx antennas, perform signal detection and synchronization with respect to a system corresponding to the apparatus for receiving broadcast signals and carry out demodulation corresponding to a reverse procedure of the procedure performed by the apparatus for transmitting broadcast signals.

The frame parsing module 8100 can parse input signal frames and extract data through which a service selected by a user is transmitted. If the apparatus for transmitting broadcast signals performs interleaving, the frame parsing module 8100 can carry out deinterleaving corresponding to a reverse procedure of interleaving. In this case, the positions of a signal and data that need to be extracted can be obtained by decoding data output from the signaling decoding module 8400 to restore scheduling information generated by the apparatus for transmitting broadcast signals.

The demapping & decoding module 8200 can convert the input signals into bit domain data and then deinterleave the same as necessary. The demapping & decoding module 8200 can perform demapping for mapping applied for transmission efficiency and correct an error generated on a transmission channel through decoding. In this case, the demapping & decoding module 8200 can obtain transmission parameters necessary for demapping and decoding by decoding the data output from the signaling decoding module 8400.

The output processor 8300 can perform reverse procedures of various compression/signal processing procedures which are applied by the apparatus for transmitting broadcast signals to improve transmission efficiency. In this case, the output processor 8300 can acquire necessary control information from data output from the signaling decoding module 8400. The output of the output processor 8300 corresponds to a signal input to the apparatus for transmitting broadcast signals and may be MPEG-TSs, IP streams (v4 or v6) and generic streams.

The signaling decoding module 8400 can obtain PLS information from the signal demodulated by the synchronization & demodulation module 8000. As described above, the frame parsing module 8100, demapping & decoding module 8200 and output processor 8300 can execute functions thereof using the data output from the signaling decoding module 8400.

FIG. 9 illustrates a synchronization & demodulation module according to an embodiment of the present invention.

The synchronization & demodulation module shown in FIG. 9 corresponds to an embodiment of the synchronization & demodulation module described with reference to FIG. 8. The synchronization & demodulation module shown in FIG. 9 can perform a reverse operation of the operation of the waveform generation module illustrated in FIG. 7.

As shown in FIG. 9, the synchronization & demodulation module according to an embodiment of the present invention corresponds to a synchronization & demodulation module of an apparatus for receiving broadcast signals using m Rx antennas and can include m processing blocks for demodulating signals respectively input through m paths. The m processing blocks can perform the same processing procedure. A description will be given of operation of the first processing block 9000 from among the m processing blocks.

The first processing block 9000 can include a tuner 9100, an ADC block 9200, a preamble detector 9300, a guard sequence detector 9400, a waveform transform block 9500, a time/frequency synchronization block 9600, a reference signal detector 9700, a channel equalizer 9800 and an inverse waveform transform block 9900.

The tuner 9100 can select a desired frequency band, compensate for the magnitude of a received signal and output the compensated signal to the ADC block 9200.

The ADC block 9200 can convert the signal output from the tuner 9100 into a digital signal.

The preamble detector 9300 can detect a preamble (or preamble signal or preamble symbol) in order to check whether or not the digital signal is a signal of the system corresponding to the apparatus for receiving broadcast signals. In this case, the preamble detector 9300 can decode basic transmission parameters received through the preamble.

The guard sequence detector 9400 can detect a guard sequence in the digital signal. The time/frequency synchronization block 9600 can perform time/frequency synchronization using the detected guard sequence and the channel equalizer 9800 can estimate a channel through a received/restored sequence using the detected guard sequence.

The waveform transform block 9500 can perform a reverse operation of inverse waveform transform when the apparatus for transmitting broadcast signals has performed inverse waveform transform. When the broadcast transmission/reception system according to one embodiment of the present invention is a multi-carrier system, the waveform transform block 9500 can perform FFT. Furthermore, when the broadcast transmission/reception system according to an embodiment of the present invention is a single carrier system, the waveform transform block 9500 may not be used if a received time domain signal is processed in the frequency domain or processed in the time domain.

The time/frequency synchronization block 9600 can receive output data of the preamble detector 9300, guard sequence detector 9400 and reference signal detector 9700 and perform time synchronization and carrier frequency synchronization including guard sequence detection and block window positioning on a detected signal. Here, the time/frequency synchronization block 9600 can feed back the output signal of the waveform transform block 9500 for frequency synchronization.

The reference signal detector 9700 can detect a received reference signal. Accordingly, the apparatus for receiving broadcast signals according to an embodiment of the present invention can perform synchronization or channel estimation.

The channel equalizer 9800 can estimate a transmission channel from each Tx antenna to each Rx antenna from the guard sequence or reference signal and perform channel equalization for received data using the estimated channel.

The inverse waveform transform block 9900 may restore the original received data domain when the waveform transform block 9500 performs waveform transform for efficient synchronization and channel estimation/equalization. If the broadcast transmission/reception system according to an embodiment of the present invention is a single carrier system, the waveform transform block 9500 can perform FFT in order to carry out synchronization/channel estimation/equalization in the frequency domain and the inverse waveform transform block 9900 can perform IFFT on the channel-equalized signal to restore transmitted data symbols. If the broadcast transmission/reception system according to an embodiment of the present invention is a multi-carrier system, the inverse waveform transform block 9900 may not be used.

The above-described blocks may be omitted or replaced by blocks having similar or identical functions according to design.

FIG. 10 illustrates a frame parsing module according to an embodiment of the present invention.

The frame parsing module illustrated in FIG. 10 corresponds to an embodiment of the frame parsing module described with reference to FIG. 8. The frame parsing module shown in FIG. 10 can perform a reverse operation of the operation of the frame structure module illustrated in FIG. 6.

As shown in FIG. 10, the frame parsing module according to an embodiment of the present invention can include at least one block interleaver 10000 and at least one cell demapper 10100.

The block interleaver 10000 can deinterleave data input through data paths of the m Rx antennas and processed by the synchronization & demodulation module on a signal block basis. In this case, if the apparatus for transmitting broadcast signals performs pair-wise interleaving as illustrated in FIG. 8, the block interleaver 10000 can process two consecutive pieces of data as a pair for each input path. Accordingly, the block interleaver 10000 can output two consecutive pieces of data even when deinterleaving has been performed. Furthermore, the block interleaver 10000 can perform a reverse operation of the interleaving operation performed by the apparatus for transmitting broadcast signals to output data in the original order.

The cell demapper 10100 can extract cells corresponding to common data, cells corresponding to data pipes and cells corresponding to PLS data from received signal frames. The cell demapper 10100 can merge data distributed and transmitted and output the same as a stream as necessary. When two consecutive pieces of cell input data are processed as a pair and mapped in the apparatus for transmitting broadcast signals, as shown in FIG. 6, the cell demapper 10100 can perform pair-wise cell demapping for processing two consecutive input cells as one unit as a reverse procedure of the mapping operation of the apparatus for transmitting broadcast signals.

In addition, the cell demapper 10100 can extract PLS signaling data received through the current frame as PLS-pre & PLS-post data and output the PLS-pre & PLS-post data.

The above-described blocks may be omitted or replaced by blocks having similar or identical functions according to design.

FIG. 11 illustrates a demapping & decoding module according to an embodiment of the present invention.

The demapping & decoding module shown in FIG. 11 corresponds to an embodiment of the demapping & decoding module illustrated in FIG. 8. The demapping & decoding module shown in FIG. 11 can perform a reverse operation of the operation of the coding & modulation module illustrated in FIG. 5.

The coding & modulation module of the apparatus for transmitting broadcast signals according to an embodiment of the present invention can process input data pipes by independently applying SISO, MISO and MIMO thereto for respective paths, as described above. Accordingly, the demapping & decoding module illustrated in FIG. 11 can include blocks for processing data output from the frame parsing module according to SISO, MISO and MIMO in response to the apparatus for transmitting broadcast signals.

As shown in FIG. 11, the demapping & decoding module according to an embodiment of the present invention can include a first block 11000 for SISO, a second block 11100 for MISO, a third block 11200 for MIMO and a fourth block 11300 for processing the PLS-pre/PLS-post information. The demapping & decoding module shown in FIG. 11 is exemplary and may include only the first block 11000 and the fourth block 11300, only the second block 11100 and the fourth block 11300 or only the third block 11200 and the fourth block 11300 according to design. That is, the demapping & decoding module can include blocks for processing data pipes equally or differently according to design.

A description will be given of each block of the demapping & decoding module.

The first block 11000 processes an input data pipe according to SISO and can include a time deinterleaver block 11010, a cell deinterleaver block 11020, a constellation demapper block 11030, a cell-to-bit mux block 11040, a bit deinterleaver block 11050 and an FEC decoder block 11060.

The time deinterleaver block 11010 can perform a reverse process of the process performed by the time interleaver block 5060 illustrated in FIG. 5. That is, the time deinterleaver block 11010 can deinterleave input symbols interleaved in the time domain into original positions thereof.

The cell deinterleaver block 11020 can perform a reverse process of the process performed by the cell interleaver block 5050 illustrated in FIG. 5. That is, the cell deinterleaver block 11020 can deinterleave positions of cells spread in one FEC block into original positions thereof.

The constellation demapper block 11030 can perform a reverse process of the process performed by the constellation mapper block 5040 illustrated in FIG. 5. That is, the constellation demapper block 11030 can demap a symbol domain input signal to bit domain data. In addition, the constellation demapper block 11030 may perform hard decision and output decided bit data. Furthermore, the constellation demapper block 11030 may output a log-likelihood ratio (LLR) of each bit, which corresponds to a soft decision value or probability value. If the apparatus for transmitting broadcast signals applies a rotated constellation in order to obtain additional diversity gain, the constellation demapper block 11030 can perform 2-dimensional LLR demapping corresponding to the rotated constellation. Here, the constellation demapper block 11030 can calculate the LLR such that a delay applied by the apparatus for transmitting broadcast signals to the I or Q component can be compensated.

The cell-to-bit mux block 11040 can perform a reverse process of the process performed by the bit-to-cell demux block 5030 illustrated in FIG. 5. That is, the cell-to-bit mux block 11040 can restore bit data mapped by the bit-to-cell demux block 5030 to the original bit streams.

The bit deinterleaver block 11050 can perform a reverse process of the process performed by the bit interleaver 5020 illustrated in FIG. 5. That is, the bit deinterleaver block 11050 can deinterleave the bit streams output from the cell-to-bit mux block 11040 in the original order.

The FEC decoder block 11060 can perform a reverse process of the process performed by the FEC encoder block 5010 illustrated in FIG. 5. That is, the FEC decoder block 11060 can correct an error generated on a transmission channel by performing LDPC decoding and BCH decoding.

The second block 11100 processes an input data pipe according to MISO and can include the time deinterleaver block, cell deinterleaver block, constellation demapper block, cell-to-bit mux block, bit deinterleaver block and FEC decoder block in the same manner as the first block 11000, as shown in FIG. 11. However, the second block 11100 is distinguished from the first block 11000 in that the second block 11100 further includes a MISO decoding block 11110. The second block 11100 performs the same procedure including time deinterleaving operation to outputting operation as the first block 11000 and thus description of the corresponding blocks is omitted.

The MISO decoding block 11110 can perform a reverse operation of the operation of the MISO processing block 5110 illustrated in FIG. 5. If the broadcast transmission/reception system according to an embodiment of the present invention uses STBC, the MISO decoding block 11110 can perform Alamouti decoding.

The third block 11200 processes an input data pipe according to MIMO and can include the time deinterleaver block, cell deinterleaver block, constellation demapper block, cell-to-bit mux block, bit deinterleaver block and FEC decoder block in the same manner as the second block 11100, as shown in FIG. 11. However, the third block 11200 is distinguished from the second block 11100 in that the third block 11200 further includes a MIMO decoding block 11210. The basic roles of the time deinterleaver block, cell deinterleaver block, constellation demapper block, cell-to-bit mux block and bit deinterleaver block included in the third block 11200 are identical to those of the corresponding blocks included in the first and second blocks 11000 and 11100 although functions thereof may be different from the first and second blocks 11000 and 11100.

The MIMO decoding block 11210 can receive output data of the cell deinterleaver for input signals of the m Rx antennas and perform MIMO decoding as a reverse operation of the operation of the MIMO processing block 5220 illustrated in FIG. 5. The MIMO decoding block 11210 can perform maximum likelihood decoding to obtain optimal decoding performance or carry out sphere decoding with reduced complexity. Otherwise, the MIMO decoding block 11210 can achieve improved decoding performance by performing MMSE detection or carrying out iterative decoding with MMSE detection.

The fourth block 11300 processes the PLS-pre/PLS-post information and can perform SISO or MISO decoding. The fourth block 11300 can carry out a reverse process of the process performed by the fourth block 5300 described with reference to FIG. 5.

The basic roles of the time deinterleaver block, cell deinterleaver block, constellation demapper block, cell-to-bit mux block and bit deinterleaver block included in the fourth block 11300 are identical to those of the corresponding blocks of the first, second and third blocks 11000, 11100 and 11200 although functions thereof may be different from the first, second and third blocks 11000, 11100 and 11200.

The shortened/punctured FEC decoder 11310 included in the fourth block 11300 can perform a reverse process of the process performed by the shortened/punctured FEC encoder block 5310 described with reference to FIG. 5. That is, the shortened/punctured FEC decoder 11310 can perform de-shortening and de-puncturing on data shortened/punctured according to PLS data length and then carry out FEC decoding thereon. In this case, the FEC decoder used for data pipes can also be used for PLS. Accordingly, additional FEC decoder hardware for the PLS only is not needed and thus system design is simplified and efficient coding is achieved.

The above-described blocks may be omitted or replaced by blocks having similar or identical functions according to design.

The demapping & decoding module according to an embodiment of the present invention can output data pipes and PLS information processed for the respective paths to the output processor, as illustrated in FIG. 11.

FIGS. 12 and 13 illustrate output processors according to embodiments of the present invention.

FIG. 12 illustrates an output processor according to an embodiment of the present invention.

The output processor illustrated in FIG. 12 corresponds to an embodiment of the output processor illustrated in FIG. 8. The output processor illustrated in FIG. 12 receives a single data pipe output from the demapping & decoding module and outputs a single output stream. The output processor can perform a reverse operation of the operation of the input formatting module illustrated in FIG. 2.

The output processor shown in FIG. 12 can include a BB scrambler block 12000, a padding removal block 12100, a CRC-8 decoder block 12200 and a BB frame processor block 12300.

The BB scrambler block 12000 can descramble an input bit stream by generating the same PRBS as that used in the apparatus for transmitting broadcast signals for the input bit stream and carrying out an XOR operation on the PRBS and the bit stream.

The padding removal block 12100 can remove padding bits inserted by the apparatus for transmitting broadcast signals as necessary.

The CRC-8 decoder block 12200 can check a block error by performing CRC decoding on the bit stream received from the padding removal block 12100.

The BB frame processor block 12300 can decode information transmitted through a BB frame header and restore MPEG-TSs, IP streams (v4 or v6) or generic streams using the decoded information.

The above-described blocks may be omitted or replaced by blocks having similar or identical functions according to design.

FIG. 13 illustrates an output processor according to another embodiment of the present invention.

The output processor shown in FIG. 13 corresponds to an embodiment of the output processor illustrated in FIG. 8. The output processor shown in FIG. 13 receives multiple data pipes output from the demapping & decoding module. Decoding multiple data pipes can include a process of merging common data commonly applicable to a plurality of data pipes and data pipes related thereto and decoding the same or a process of simultaneously decoding a plurality of services or service components (including a scalable video service) by the apparatus for receiving broadcast signals.

The output processor shown in FIG. 13 can include a BB descrambler block, a padding removal block, a CRC-8 decoder block and a BB frame processor block as the output processor illustrated in FIG. 12. The basic roles of these blocks correspond to those of the blocks described with reference to FIG. 12 although operations thereof may differ from those of the blocks illustrated in FIG. 12.

A de-jitter buffer block 13000 included in the output processor shown in FIG. 13 can compensate for a delay, inserted by the apparatus for transmitting broadcast signals for synchronization of multiple data pipes, according to a restored TTO (time to output) parameter.

A null packet insertion block 13100 can restore a null packet removed from a stream with reference to a restored DNP (deleted null packet) and output common data.

A TS clock regeneration block 13200 can restore time synchronization of output packets based on ISCR (input stream time reference) information.

A TS recombining block 13300 can recombine the common data and data pipes related thereto, output from the null packet insertion block 13100, to restore the original MPEG-TSs, IP streams (v4 or v6) or generic streams. The TTO, DNT and ISCR information can be obtained through the BB frame header.

An in-band signaling decoding block 13400 can decode and output in-band physical layer signaling information transmitted through a padding bit field in each FEC frame of a data pipe.

The output processor shown in FIG. 13 can BB-descramble the PLS-pre information and PLS-post information respectively input through a PLS-pre path and a PLS-post path and decode the descrambled data to restore the original PLS data. The restored PLS data is delivered to a system controller included in the apparatus for receiving broadcast signals. The system controller can provide parameters necessary for the synchronization & demodulation module, frame parsing module, demapping & decoding module and output processor module of the apparatus for receiving broadcast signals.

The above-described blocks may be omitted or replaced by blocks having similar r identical functions according to design.

FIG. 14 illustrates a coding & modulation module according to another embodiment of the present invention.

The coding & modulation module shown in FIG. 14 corresponds to another embodiment of the coding & modulation module illustrated in FIGS. 1 to 5.

To control QoS for each service or service component transmitted through each data pipe, as described above with reference to FIG. 5, the coding & modulation module shown in FIG. 14 can include a first block 14000 for SISO, a second block 14100 for MISO, a third block 14200 for MIMO and a fourth block 14300 for processing the PLS-pre/PLS-post information. In addition, the coding & modulation module can include blocks for processing data pipes equally or differently according to the design. The first to fourth blocks 14000 to 14300 shown in FIG. 14 are similar to the first to fourth blocks 5000 to 5300 illustrated in FIG. 5.

However, the first to fourth blocks 14000 to 14300 shown in FIG. 14 are distinguished from the first to fourth blocks 5000 to 5300 illustrated in FIG. 5 in that a constellation mapper 14010 included in the first to fourth blocks 14000 to 14300 has a function different from the first to fourth blocks 5000 to 5300 illustrated in FIG. 5, a rotation & I/Q interleaver block 14020 is present between the cell interleaver and the time interleaver of the first to fourth blocks 14000 to 14300 illustrated in FIG. 14 and the third block 14200 for MIMO has a configuration different from the third block 5200 for MIMO illustrated in FIG. 5. The following description focuses on these differences between the first to fourth blocks 14000 to 14300 shown in FIG. 14 and the first to fourth blocks 5000 to 5300 illustrated in FIG. 5.

The constellation mapper block 14010 shown in FIG. 14 can map an input bit word to a complex symbol. However, the constellation mapper block 14010 may not perform constellation rotation, differently from the constellation mapper block shown in FIG. 5. The constellation mapper block 14010 shown in FIG. 14 is commonly applicable to the first, second and third blocks 14000, 14100 and 14200, as described above.

The rotation & I/Q interleaver block 14020 can independently interleave in-phase and quadrature-phase components of each complex symbol of cell-interleaved data output from the cell interleaver and output the in-phase and quadrature-phase components on a symbol-by-symbol basis. The number of number of input data pieces and output data pieces of the rotation & I/Q interleaver block 14020 is two or more which can be changed by the designer. In addition, the rotation & I/Q interleaver block 14020 may not interleave the in-phase component.

The rotation & I/Q interleaver block 14020 is commonly applicable to the first to fourth blocks 14000 to 14300, as described above. In this case, whether or not the rotation & I/Q interleaver block 14020 is applied to the fourth block 14300 for processing the PLS-pre/post information can be signaled through the above-described preamble.

The third block 14200 for MIMO can include a Q-block interleaver block 14210 and a complex symbol generator block 14220, as illustrated in FIG. 14.

The Q-block interleaver block 14210 can permute a parity part of an FEC-encoded FEC block received from the FEC encoder. Accordingly, a parity part of an LDPC H matrix can be made into a cyclic structure like an information part. The Q-block interleaver block 14210 can permute the order of output bit blocks having Q size of the LDPC H matrix and then perform row-column block interleaving to generate final bit streams.

The complex symbol generator block 14220 receives the bit streams output from the Q-block interleaver block 14210, maps the bit streams to complex symbols and outputs the complex symbols. In this case, the complex symbol generator block 14220 can output the complex symbols through at least two paths. This can be modified by the designer.

The above-described blocks may be omitted or replaced by blocks having similar or identical functions according to design.

The coding & modulation module according to another embodiment of the present invention, illustrated in FIG. 14, can output data pipes, PLS-pre information and PLS-post information processed for respective paths to the frame structure module.

FIG. 15 illustrates a demapping & decoding module according to another embodiment of the present invention.

The demapping & decoding module shown in FIG. 15 corresponds to another embodiment of the demapping & decoding module illustrated in FIG. 11. The demapping & decoding module shown in FIG. 15 can perform a reverse operation of the operation of the coding & modulation module illustrated in FIG. 14.

As shown in FIG. 15, the demapping & decoding module according to another embodiment of the present invention can include a first block 15000 for SISO, a second block 11100 for MISO, a third block 15200 for MIMO and a fourth block 14300 for processing the PLS-pre/PLS-post information. In addition, the demapping & decoding module can include blocks for processing data pipes equally or differently according to design. The first to fourth blocks 15000 to 15300 shown in FIG. 15 are similar to the first to fourth blocks 11000 to 11300 illustrated in FIG. 11.

However, the first to fourth blocks 15000 to 15300 shown in FIG. 15 are distinguished from the first to fourth blocks 11000 to 11300 illustrated in FIG. 11 in that an I/Q deinterleaver and derotation block 15010 is present between the time interleaver and the cell deinterleaver of the first to fourth blocks 15000 to 15300, a constellation mapper 15010 included in the first to fourth blocks 15000 to 15300 has a function different from the first to fourth blocks 11000 to 11300 illustrated in FIG. 11 and the third block 15200 for MIMO has a configuration different from the third block 11200 for MIMO illustrated in FIG. 11. The following description focuses on these differences between the first to fourth blocks 15000 to 15300 shown in FIG. 15 and the first to fourth blocks 11000 to 11300 illustrated in FIG. 11.

The I/Q deinterleaver & derotation block 15010 can perform a reverse process of the process performed by the rotation & I/Q interleaver block 14020 illustrated in FIG. 14. That is, the I/Q deinterleaver & derotation block 15010 can deinterleave I and Q components I/Q-interleaved and transmitted by the apparatus for transmitting broadcast signals and derotate complex symbols having the restored I and Q components.

The I/Q deinterleaver & derotation block 15010 is commonly applicable to the first to fourth blocks 15000 to 15300, as described above. In this case, whether or not the I/Q deinterleaver & derotation block 15010 is applied to the fourth block 15300 for processing the PLS-pre/post information can be signaled through the above-described preamble.

The constellation demapper block 15020 can perform a reverse process of the process performed by the constellation mapper block 14010 illustrated in FIG. 14. That is, the constellation demapper block 15020 can demap cell-deinterleaved data without performing derotation.

The third block 15200 for MIMO can include a complex symbol parsing block 15210 and a Q-block deinterleaver block 15220, as shown in FIG. 15.

The complex symbol parsing block 15210 can perform a reverse process of the process performed by the complex symbol generator block 14220 illustrated in FIG. 14. That is, the complex symbol parsing block 15210 can parse complex data symbols and demap the same to bit data. In this case, the complex symbol parsing block 15210 can receive complex data symbols through at least two paths.

The Q-block deinterleaver block 15220 can perform a reverse process of the process carried out by the Q-block interleaver block 14210 illustrated in FIG. 14. That is, the Q-block deinterleaver block 15220 can restore Q size blocks according to row-column deinterleaving, restore the order of permuted blocks to the original order and then restore positions of parity bits to original positions according to parity deinterleaving.

The above-described blocks may be omitted or replaced by blocks having similar or identical functions according to design.

As illustrated in FIG. 15, the demapping & decoding module according to another embodiment of the present invention can output data pipes and PLS information processed for respective paths to the output processor.

FIG. 16 is a view illustrating a multi-dimensional signal diversity method according to an embodiment of the present invention.

Hereinafter, the multi-dimensional signal diversity method is abbreviated to MDSD.

MDSD according to an embodiment of the present invention may be performed by an MDSD block. The MDSD block may correspond to the above-described constellation mapper block of the coding & modulation module. In addition, according to another embodiment, the MDSD block may be added as a new block next to the above-described constellation mapper block. When added as a new block, the MDSD block may exclude the constellation mapper. That is, the MDSD block may include only an IQ demux, S2P blocks for I and Q signals, LPs, P2S blocks for the I and Q signals, and/or an IQ mux, which will be described below. The MDSD block excluding the constellation mapper may be a block corresponding to a conventional signal space diversity (SSD) block. That is, MDSD according to an embodiment of the present invention may be a new technology of conventional SSD.

MDSD (i.e., multi-dimensional signal diversity) is a coding method for acquiring signal diversity gain in the above-described future broadcasting system. In addition, if MDSD is used, a broadcasting system capable of robust signal transmission/reception even on fading channels in single-input single-output (SISO) or multiple-input single-output (MISO) mode.

The blocks of the future broadcasting system, i.e., the FEC encoder, bit interleaver, bit to cell demux, cell interleaver, time interleaver, etc., may operate as described above. When the blocks of the future broadcasting system are used together with the MDSD block, some blocks may be omitted or replaced by other blocks. (For example, the cell interleaver block may be omitted.)

FIG. 17 is a detailed block diagram of the MDSD block according to an embodiment of the present invention, and a rotated signal space diversity (SSD) block.

The detailed block diagram of the rotated SSD block may illustrate signal space diversity encoding of a legacy technology. Rotated SSD may correspond to conventional SSD. Rotated SSD may refer to a legacy SSD technology.

Hereinafter, rotated SSD is abbreviated to rSSD.

In this figure, the detailed block diagram of the MDSD block is marked "Proposed IQ-independently precoded signal diversity scheme". In addition, in this figure, the detailed block diagram of the rSSD block is marked "rotated signal space diversity (SSD) scheme".

Here, N denotes dimensions of signal diversity, or the number of dimensions thereof. S2P denotes serial-to-parallel conversion. LP denotes a linear precoder. P2S denotes parallel-to-serial conversion. IQ-P2S denotes IQ respective parallel-to-serial conversion. IQ-CI denotes IQ component interleaving.

The detailed block diagram of the MDSD block may include a constellation mapper, an IQ demux, S2P blocks for I and Q signals, LPs, P2S blocks for the I and Q signals, and/or an IQ mux.

The constellation mapper may perform the same operation as the above-described constellation mapper block. Initially, a bit-to-cell demux block determines and outputs the order of an input bitstream to the constellation mapper in consideration of both the order of the input bitstream and constellation mapping rules to allow bits within a forward error correction (FEC) block to be transmitted with appropriate robustness. The constellation mapper may form {Cn} by mapping the received bits to one constellation on a bit word basis. Here, the constellation may correspond to one point on a complex plane.

The IQ demux may receive {Cn} and split the same into I components and Q components. This serves to achieve different diversity gains for the I and Q components.

The split I and Q components are separately input to the S2P blocks. The S2P block may receive the I or Q components which are input in series, and output the same in parallel (serial-to-parallel conversion).

The output parallel I and Q components are separately input to the LPs. The LP may group N input signals, multiply the same by an NxN matrix, and output a result thereof to achieve multi-dimensional signal diversity. This is called linear precoding. In this case, the NxN matrix has real numbers as elements, and is designed orthonormally. That is, the matrix is designed in such a manner that row vectors are orthogonal to each other and a power sum of elements of each row is 1. As such, input power equals output power, and an inverse matrix is always present to enable decoding. In this case, the matrix applied to the I components does not always need to be the same as that applied to the Q components. The NxN matrix is multiplied to spread energy of one input element to N output elements, thus enabling restoration even when a few of the elements are broken, i.e., signal diversity.

The linear-precoded I and Q components are separately input to the P2S blocks. The P2S block may receive the I or Q components which are input in parallel, and output the same in series (parallel-to-serial conversion).

The IQ mux may output {C'n} by combining the received I and Q components.

As such, different diversity gains may be achieved for the I and Q components. In general, I and Q components are designed to have the same diversity gain and effect, and the same matrix is applied to the I and Q components in this case. If the same matrix is applied to the I and Q components, the IQ demux and mux may be omitted, {Cn} is directly input to the S2P block, each group of N is input to the LP block, and then the linear-precoded N cells are formed as {C'n} by the P2S block.

The detailed block diagram of the rSSD block may include a constellation mapper, an S2P block, an IQ demux, an LP, an IQ-P2S block, a Q-delay/IQ-CI block, and/or an IQ mux.

The rSSD block performs 2x2 precoding by selecting one component among the I components and one component among the Q components to achieve 2-dimensional (2D) diversity. Alternatively, the rSSD block may perform 4x4 precoding by selecting two components among the I components and two components among the Q components to achieve 2D diversity. Here, in the case of 2D, since I and Q components of one cell are precoded, separate S2P blocks are not necessary for the I and Q components.

The IQ-P2S block receives the linear-precoded I and Q components and outputs the same in series (parallel-to-serial conversion).

In the case of rSSD, Q-delay or IQ component interleaving (IQ-CI) is necessary to allow a precoded result to be interleaved to experience channels having no correlation. The Q-delay block delays the Q components, and the IQ-CI block interleaves the I and Q components.

Then, the IQ mux may output {C'n} by combining the received I and Q components.

FIG. 18 is a view illustrating precoding schemes of MDSD according to an embodiment of the present invention and rSSD.

In this figure, the precoding scheme of MDSD is marked "Proposed IQ-independent precoder". In addition, in this figure, the precoding scheme of rSSD is marked "rotated SSD based precoder".

In MDSD, precoding is applied independently to the I and Q components as described above. Accordingly, the dimension does not need to be an even number such as 2 or 4, and 3-dimensional (3D) precoding is also enabled. However, in the precoding scheme of legacy rSSD, the I and Q components are precoded together as described above. Accordingly, only precoding of an even number of dimensions is enabled.

Although not shown in this figure, according to MDSD, the order of precoding for the I components may be configured differently from that for the Q components because precoding is applied independently to the I and Q components in the case of MDSD as described above. For example, 3D precoding may be applied to the I components and 2D precoding may be applied to the Q components.

If N corresponding to the size of the precoding matrix is increased, since a single piece of information is split into and transmitted as multiple pieces of information, an effect of high diversity may be achieved and the effect is large on fading channels. However, if N is increased, hardware (H/W) complexity is increased exponentially. In addition, even when N is increased, performance improvement converges above a certain value. Based on simulations, remarkable performance improvement is shown when N <= 4, and insufficient performance improvement or even performance degradation is shown when N is increased further. Since signal diversity refers to splitting of a part of signal power into multiple levels to experience different fading channels, high diversity in a low signal-to-noise ratio (SNR) environment may lead to performance degradation.

FIG. 19 is a view illustrating precoding results of MDSD according to an embodiment of the present invention and rSSD.

In this figure, the precoding result of MDSD is marked "Proposed IQ-independent precoder". In addition, in this figure, the precoding result of rSSD is marked "rotated SSD based precoder".

This figure illustrates results achieved when a 2x2 precoding matrix (2D) and a 4x4 precoding matrix (4D) are applied using MDSD and rSSD.

According to MDSD, N cells are used for N dimensions because the I and Q components are independently precoded and, when input has a shape of square QAM, output also has a shape of square QAM. This figure shows that results of 2D precoding and 4D precoding according to MDSD have a shape of square QAM. Each point in this figure may refer to a constellation.

In the case of rSSD, N/2 cells are used for precoding of N dimensions. As illustrated in this figure, in the case of 2D, if an orthogonal matrix is applied, output has a shape in which input square QAM is rotated. This may slightly vary depending on a precoding matrix. As illustrated in this figure, in the case of 4D, 2 cells are input and 2 cells are output.

An advantage of MDSD is that constellations of precoded cells have a shape of square QAM and thus active constellation extension (ACE) is easily usable.

ACE is one scheme for reducing a peak-to-average power ratio (PAPR) when an OFDM waveform generation scheme is used. A brief description is now given of the ACE scheme. After an OFDM waveform is generated, if a part having power greater than a preset threshold is clipped, this will be expressed as distortion of a transmission signal. When distortion is allowed only within a range which does not influence decision (a shaded region indicated by an arrow in this figure), if an OFDM waveform is generated again using the distorted signal, peak power will be reduced by a certain degree. Accordingly, this process may be repeated multiple times to reduce the PAPR as much as possible.

As shown in the above description of the ACE scheme, if ACE is applied, constellations move within a range which does not influence decision and thus slight performance degradation is generated. To achieve the minimum performance degradation, constellations should move within a range which influences decision as least as possible. To achieve the minimum influence on decision, constellations after mapping should have a shape of square QAM.

Accordingly, if MDSD is used, the ACE scheme may be easily used.

Another advantage of MDSD is that precoding for achieving signal diversity of an odd number of dimensions is also enabled. That is, 3D precoding is enabled.

FIG. 20 is a view illustrating a method for generating a $2^m$-dimensional precoding matrix of MDSD according to an embodiment of the present invention.

Although MDSD according to the present invention may arbitrarily have N as described above, this document describes a method for generating a precoding matrix for N=2,3,4,8,16,.... In general, when N is expressed as a power of 2 ($2^m$), the precoding matrix may be easily generated using the Hadamard form. A method for generating a separate precoding matrix in the case of N=3 will be described below. That is, the current embodiment proposes a method for generating a precoding matrix for all usable values of N (<=4) in consideration of H/W complexity.

A description is now given of the method for generating a $2^m$-dimensional precoding matrix of MDSD.

The precoding matrix is designed to satisfy two conditions described below. One is that the precoding matrix should be an orthonormal matrix. That is, elements of each row should have a power sum of 1 and should be orthogonal to each other. The other is that dominant elements of rows (elements a in this figure) should be located at diagonal positions. A diagonal element means the influence of an $n^{th}$ input element on an $n^{th}$ output element, and an off-diagonal element means the influence on an $i^{th}$ output element (where i is not n), i.e., the size of a part of an original signal carried in another signal (path) for diversity. In this method, a ratio s therebetween may be constant to an off-diagonal position irrespective of the distance (correlation) between elements.

A 2x2 orthonormal matrix may have two types of rotation and reflection. Here, the relationship between a and b is as given by (1) of this figure. Here, s may be defined as given by (2) of this figure, and then may be determined through bit-interleaved coded modulation (BICM) capacity analysis and simulation on fading channels. A $2^m$-dimensional matrix may be generated by recursively increasing the size of a 2x2 base matrix, $A_2$. That is, $B_2$ may be calculated using $B_1$, and $A_4$ may be generated using $A_2$ and $B_2$. Here, the relationship between a and b is as given by (3) of this figure. Likewise, s is defined as given by (4) of this figure, and then an optimal value of s is determined through BICM capacity analysis and simulation. In this manner, a $2^m$-dimensional precoding matrix may be generated. Here, on the assumption of a maximum-likelihood (ML) receiver, reception performance may be determined based on an absolute value of s (|s|).

FIG. 21 is a view illustrating a method of generating a 3-dimensional precoding matrix of MDSD according to an embodiment of the present invention.

Like the above-described method for generating a $2^m$-dimensional precoding matrix, dominant elements a are located at diagonal positions of a base matrix. An $N^{th}$ row vector may be generated by circular-right-shifting a $1^{st}$ row vector (N-1) times. Here, a, b, and c may have the relationships given by (1) and (2) of this figure. As given by (3) of this figure, based on a combination of signs, orthogonal characteristics among row vectors may be expressed as a sum of ab, bc, and ca. If s1 and s2 are defined as given by (4) of this figure, (3) of this figure may be expressed as given by (5). In (5) of this figure, s2 is determined based on s1. That is, only s1 is a variable. As such, like the above-described method for generating a $2^m$-dimensional precoding matrix, optimal s1 may be calculated through analysis and simulation. Here, search ranges of s1 and s2 may be limited to |s1|<=1 and |s2|<=1 as given by (1) of this figure. For example, a solution of (sl,s2) may be (0.1111...,-0.1).

A variety of base matrices may be present depending on the signs of a, b, and c. This figure shows three more examples. However, an inner product among row vectors should be expressed as one expression. In the three examples of this figure, ab+bc-ac=0. However, the inner product is not limited thereto and may be expressed as ab-bc+ac=0 or ab-bc-ca=0.

FIG. 22 is a block diagram of a demapping & decoding module according to another embodiment of the present invention.

Compared to the above-described demapping & decoding module, in the demapping & decoding module according to another embodiment of the present invention, the constellation demapper is changed to a multi-dimensional constellation demapper, and iterative decoding is added.

The receiver may selectively perform iterative decoding to improve reception performance. However, iterative decoding is not essential. If iterative decoding is not performed, iterative decoding indicated by a box is not necessary in this figure.

When iterative decoding is performed, extrinsic information corresponding to the difference between an output log-likelihood ratio (LLR) and an input LLR of a low density parity check (LDPC) decoder of an FEC decoder is calculated and transmitted to a multi-dimensional constellation demapper. The multi-dimensional constellation demapper may use the received extrinsic information as apriori information for iterative decoding.

When iterative decoding is not performed, the multi-dimensional constellation demapper performs an inverse operation of the operation of the above-described MDSD block. In this case, the multi-dimensional constellation demapper may not use apriori information.

A description is now given of a method for calculating a log-likelihood ratio (LLR) by the receiver.

According to MDSD of the present invention, since I and Q components are independently precoded, joint demapping may not be necessary between the I and Q components. However, since N I components or N Q components are precoded together, joint demapping thereof may be necessary.

If N M($=2^m$)-ary QAM cells are grouped and precoded, N*m LLR values may be calculated per group of N. Since each cell is able to transmit m bits, this group of N may transmit N*m bits ($b_i$, i=0,1,...,N*m-1). When MDSD is applied, if an $i^{th}$ bit ($b_i$) was a bit for determining an in-phase component before precoding, the $i^{th}$ bit also determines an in-phase component after precoding. Likewise, if the $i^{th}$ bit was a bit for determining a quadrature-phase component, the $i^{th}$ bit also determines a quadrature-phase component after precoding. Since whether an $i^{th}$ bit of a transmitter is an in-phase component or a quadrature-phase component is determined based on i and is predefined, the receiver may also know whether the $i^{th}$ bit is an in-phase component or a quadrature-phase component. In the following description, a bit is assumed to be an in-phase component for convenience.

If in-phase components of the N cells are denoted by $x_i$ and $C^j_i = \{(x_0, x_1, ..., X_{N-1}) | b_i=j, j=0,1\}$, the size of the set $C^j_i$ is $|C^j_i = M^{N/2}$. If in-phase components of the received N cells are denoted by $I_n$ (n=0,1,...,N-1), the following expression may be satisfied.

Expression 1

$$\Pr(I_0, I_1, \ldots, I_{N-1} \mid b_i = 1) = \frac{1}{2^{\frac{N \cdot M}{2}} (2\pi\sigma^2)^{\frac{N}{2}}} \sum_{(x_0, x_1, \ldots, x_{N-1}) \in C_i^1} \left( e^{-\frac{(I_0 - \rho_0 x_0)^2 + \ldots + (I_{N-1} - \rho_{N-1} x_{N-1})^2}{2\sigma^2}} \Pr_{apriori}(x_0, x_1, \ldots, x_{N-1} \mid b_i = 1) \right)$$

Here, p denotes a channel size. Expression 1 shows a case in which an apriori probability is given. If the apriori probability value is not given, $Pr_{apriori}(...)=1$ in Expression 1. Iterative decoding is performed while updating the apriori probability value through LDPC, and iterative decoding is not performed if the apriori probability is not present. The following expressions show a method for extracting extrinsic information from the LDPC decoder, and then converting the same into an apriori probability of the multi-dimensional constellation demapper.

Expression 2

$$\Pr_{apriori}(x_0, x_1, \ldots, x_{N-1} \mid b_i = 1) = \prod_{k \neq i} \Pr_{LDPC}(b_k = B_k)$$

Expression 3

$$LLR_{EXT}(b) = LLR_{LDPC_OUT}(b) - LLR_{LDPC_IN}(b)$$

Expression 4

$$\Pr_{LDPC}(b = 0) = \frac{1}{1 + e^{LLR_{EXT}(b)}}, \qquad \Pr_{LDPC}(b = 1) = 1 - \Pr_{LDPC}(b = 0)$$

If Expressions 1 to 4 are integrated, the following expression may be obtained.

$$LLR(b_i) = \ln \left[ \frac{\sum_{(x_0, x_1, \ldots, x_{N-1}) \in C_i^1} \left( e^{-\frac{(I_0 - \rho_0 x_0)^2 + \ldots + (I_{N-1} - \rho_{N-1} x_{N-1})^2}{2\sigma^2}} \prod_{k \neq i} \Pr_{LDPC}(b_k = B_k) \right)}{\sum_{(x_0, x_1, \ldots, x_{N-1}) \in C_i^0} \left( e^{-\frac{(I_0 - \rho_0 x_0)^2 + \ldots + (I_{N-1} - \rho_{N-1} x_{N-1})^2}{2\sigma^2}} \prod_{k \neq i} \Pr_{LDPC}(b_k = B_k) \right)} \right]$$

An LLR may be calculated using Expression 5. The following expression may correspond to a scheme for calculating an LLR when iterative decoding is not performed.

Expression 6

$$LLR(b_i) = \ln\left\{\frac{\sum_{(x_0,x_1,\dots,x_{N-1})\in C_i^1}\left(e^{-\frac{\left(l_0-\rho_{l_{x_0}}l_{x_0}\right)^2+\dots+\left(l_{N-1}-\rho_{l_{x_{N-1}}}l_{x_{N-1}}\right)^2}{2\sigma^2}}\right)}{\sum_{(x_0,x_1,\dots,x_{N-1})\in C_i^0}\left(e^{-\frac{\left(l_0-\rho_{l_{x_0}}l_{x_0}\right)^2+\dots+\left(l_{N-1}-\rho_{l_{x_{N-1}}}l_{x_{N-1}}\right)^2}{2\sigma^2}}\right)}\right\}$$

Expressions 5 and 6 have large complexity of calculation, and thus may be simplified into the following expressions.

Expression 7

$$LLR(b_i) \approx \min_{(x_0,x_1,\dots,x_{N-1})\in C_i^0}\left(\frac{\left(l_0-\rho_{l_{x_0}}l_{x_0}\right)^2+\dots+\left(l_{N-1}-\rho_{l_{x_{N-1}}}l_{x_{N-1}}\right)^2}{2\sigma^2}-\sum_{k\neq i\text{ and }B_k=1}LLR_{EXT}(b_k)\right)$$
$$-\min_{(x_0,x_1,\dots,x_{N-1})\in C_i^1}\left(\frac{\left(l_0-\rho_{l_{x_0}}l_{x_0}\right)^2+\dots+\left(l_{N-1}-\rho_{l_{x_{N-1}}}l_{x_{N-1}}\right)^2}{2\sigma^2}-\sum_{k\neq i\text{ and }B_k=1}LLR_{EXT}(b_k)\right)$$

Expression 8

$$LLR(b_i) \approx \min_{(x_0,x_1,\dots,x_{N-1})\in C_i^0}\left(\frac{\left(l_0-\rho_{l_{x_0}}l_{x_0}\right)^2+\dots+\left(l_{N-1}-\rho_{l_{x_{N-1}}}l_{x_{N-1}}\right)^2}{2\sigma^2}\right)$$
$$-\min_{(x_0,x_1,\dots,x_{N-1})\in C_i^1}\left(\frac{\left(l_0-\rho_{l_{x_0}}l_{x_0}\right)^2+\dots+\left(l_{N-1}-\rho_{l_{x_{N-1}}}l_{x_{N-1}}\right)^2}{2\sigma^2}\right)$$

In Expressions 7 and 8, Nm/2 bits corresponding to $(x_0, x_1, \dots, x_{N-1})$ may be $(B_0, B_1, \dots, B_{Nm/2})$.

FIG. 23 is a block diagram of a coding & modulation module according to another embodiment of the present invention.

As described above, a constellation mapper block may allocate an input bit word to one constellation. In this case, rotation & Q-delay may be additionally applied. Through rotation & Q-delay, input constellations may be rotated by a rotation angle and split into in-phase components and quadrature-phase components, and then only the Q components may be delayed by an arbitrary value. After that, the newly paired I and Q components are remapped to new constellations. The constellation mapper and the rotation & Q-delay block may be omitted or replaced by other blocks having the same or similar functions.

As described above, a cell interleaver randomly permutes and outputs cells corresponding to one FEC block in such a manner that cells corresponding to each FEC block are output in a different order per FEC block. The cell interleaver block may be omitted or replaced by another block having the same or similar function.

In the coding & modulation module according to another embodiment of the present invention, shaded blocks are modified from those of the above-described coding & modulation module.

The coding & modulation module according to another embodiment of the present invention may perform periodic and random I/Q interleaving. The periodic and random I/Q interleaving technology may be a technology corresponding to operations of the Q-delay block and the cell interleaver in this figure. Furthermore, according to another embodiment, if cell interleaving is omitted, periodic and random I/Q interleaving may be applied before time interleaving. In addition, according to another embodiment, if the cell interleaver is omitted, a time interleaver block may perform periodic and random I/Q interleaving. In this case, the time interleaver block may perform only the periodic and random I/Q interleaving operation, or perform both the periodic and random I/Q interleaving operation and the above-described operation of the time interleaver block of the future broadcasting system.

Through periodic and random I/Q interleaving, briefly, constellations rotated by a rotation angle may be split into I components and Q components, only the Q components may be delayed by an arbitrary value, and then the I and Q components may be periodically and randomly permuted. Unlike this block diagram, periodic and random I/Q interleaving may be performed by one block. In addition, as described above, according to another embodiment, periodic and random I/Q interleaving may be performed by the time interleaver. A detailed description of the operation principle of periodic and random I/Q interleaving will be given below.

FIG. 24 is a view illustrating periodic and random I/Q interleaving technology according to an embodiment of the present invention.

This figure shows an embodiment in which the constellation mapper block and the cell interleaver block are replaced by a Q1/Q2-delay block and a periodic and random I/Q interleaver as described above. Here, the periodic and random I/Q interleaving technology may be a concept including the Ql/Q2-delay block and the periodic and random I/Q interleaver. Hereinafter, the periodic and random I/Q interleaver may refer to only the periodic and random I/Q interleaver block of this figure, or refer to the whole periodic and random I/Q interleaving technology including the Q1/Q2-delay block. The first block diagram shows single-input single-output (SISO) mode, and the second block diagram shows multiple-input multiple-output (MIMO) mode.

The Q1/Q2-delay block may split between in-phase components and quadrature-phase components and then delay only the quadrature-phase components. A delay value in this case may be determined based on whether 2D-SSD is used or 4D-SSD is used. The Q1-delay block may be used for 2D-SSD, and the Q2-delay block may be used for 4D-SSD.

The periodic and random I/Q interleaver block may periodically write output of the Q1/Q2-delay block in memory, and randomly read the written data. A cycle used in this case may be determined based on whether 2D-SSD is used or 4D-SSD is used.

FIG. 25 is a view illustrating a Q1-delay process for 2D-SSD, according to an embodiment of the present invention.

A description is now given of an operation process of the periodic and random I/Q interleaving technology including the Q1-delay block and the periodic and random I/Q interleaver when 2D-SSD is considered. Here, the size of memory and the number of input cells are assumed to be N.

When 2D-SSD is considered, the Q1-delay block may delay Q components by one cell, and then an output signal thereof may be input to the periodic and random I/Q interleaver. In the figure illustrating the Q1-delay process according to an embodiment of the present invention, it is shown that I components do not move and only the Q components are delayed by one cell. Since cyclic shifting is performed, an $(N-1)^{th}$ Q component is paired with a $0^{th}$ I component.

FIG. 26 is a view illustrating operation of the periodic and random I/Q interleaver for 2D-SSD, according to an embodiment of the present invention.

When 2D-SSD is considered, the output signal of the Q1-delay block is input to the memory, and an input cycle in this case may be set to 2 to separate adjacent I/Q components of 2D-SSD as far apart as possible. As such, $0^{th}$, $2^{nd}$, $4^{th}$, ..., $(N-2)^{th}$ cells may be written in the memory, and then $1^{st}$, $3^{rd}$, $5^{th}$, ..., $(N-1)^{th}$ cells may be written in the memory. Consequently, this writing process relates to an operation for improving periodicity of the interleaver.

Then, an interleaved signal may be finally output by reading the signal stored in the memory, using a random interleaver. The reading process in this case may be performed based on an output index of the random interleaver. The size of the random interleaver may be N/2, or the size of the index generated by the random interleaver may be N/2. Accordingly, 2 random interleavers may be necessary for the reading process. The output memory index of the random interleaver may be generated using a quadratic polynomial (QP) or a pseudo-random binary sequence (PRBS). In addition, the same random interleaver may be used for 2 cycles in consideration of a writing cycle, and the principle of the writing process for separating adjacent I/Q components as far apart as possible may be constantly maintained using the same random interleaver.

The above-described writing process may be expressed as given by the following expression.

Expression 9

$$\pi_w(k) = \frac{N}{2}\mathrm{mod}(k,2) + \left\lfloor \frac{k}{2} \right\rfloor, \quad 0 \le k \le N-1$$

*N*: total cell number

⌊·⌋: floor operation

mod: modulus operation

(*K*): writing memory - index for the $k^{th}$ cell

In addition, the above-described reading process may be expressed as given by the following expression.

Expression 10

$$\pi_r(k') = \left(\gamma + g \times \frac{k'(k'+1)}{2}\right) \bmod \frac{N}{2} \quad for\ k' = 0, \ldots, 2^n, where \lceil \log_2(N/4) \rceil < n \le \lceil \log_2(N/2) \rceil$$

$$if\ 0 \le \pi_r(k') \le \frac{N}{2} - 1 \quad \pi_r(k) = \frac{N}{2} g + \pi_r(k') \ for\ k = 0, \ldots, \frac{N}{2} - 1, g = 0,1$$

*N*: total cell number

⌈·⌉: cell operation

mod: modulus operation

γ: an offset value to of a quadratic polynomial (QP)

θ: reading period, i.e., g = 2 in the case of 20 - SSD

π,(*k*): output value of QP for the k' order

π,(*k*): reading memory - index for the $k^{th}$ cell

As shown in the above expressions, the writing process improves spreading property of the interleaver while the reading process improves randomness property thereof.

The random interleaving process generates a memory index using, for example, a QP algorithm. In this case, if the generated index is greater than N/2-1, the index may not be used as a memory index value but may be discarded, and the QP algorithm may be executed once again. If a re-generated index is less than N/2-1, the index may be used as a memory index value to perform the reading process. Here, the QP may be replaced by an arbitrary random interleaver such as a PRBS.

FIG. 27 is a view illustrating operation of the periodic and random I/Q interleaving technology for 2D-SSD when N is 24, according to an embodiment of the present invention.

Even when N=24, periodic and random I/Q interleaving operates as described above. Q components are delayed by one cell by the Q1-delay block, a memory writing process is performed based on an input cycle of 2, and random interleaving is performed through a memory reading process.

The effect of the periodic and random I/Q interleaving technology may be demonstrated using the example of N=24. When an output signal is compared to an input signal, it is shown that the periodic and random I/Q interleaving technology has both spreading and randomness properties.

FIG. 28 is a view illustrating a Q2-delay process for 4D-SSD, according to an embodiment of the present invention.

A description is now given of an operation process of the periodic and random I/Q interleaving technology including the Q2-delay block and the periodic and random I/Q interleaver when 4D-SSD is considered. Here, the size of memory and the number of input cells are assumed to be N.

When 4D-SSD is considered, the Q2-delay block may delay Q components by 2 cells, and then an output signal thereof may be input to the periodic and random I/Q interleaver. In the figure illustrating the Q2-delay process according to an embodiment of the present invention, it is shown that I components do not move and only the Q components are delayed by 2 cells. Since cyclic shifting is performed, $(N-2)^{th}$ and $(N-1)^{th}$ Q components are paired with $0^{th}$ and $1^{st}$ I components.

FIG. 29 is a view illustrating operation of the periodic and random I/Q interleaver for 4D-SSD, according to an embodiment of the present invention.

When 4D-SSD is considered, the output signal of the Q2-delay block is input to the memory and an input cycle in this case may be set to 4 to separate I/Q components of two adjacent cells of 4D-SSD as far apart as possible. As such, $0^{th}$, $4^{th}$, $8^{th}$, ..., $(N-4)^{th}$ cells may be written in the memory, and then $1^{st}$, $5^{th}$, $9^{th}$, ..., $(N-3)^{th}$ cells, $2^{nd}$, $6^{th}$, $10^{th}$, ..., $(N-2)^{th}$ cells, and $3^{rd}$, $7^{th}$, $11^{th}$, ..., $(N-1)^{th}$ cells may be written in the memory. Consequently, this writing process relates to an operation for improving periodicity of the interleaver.

Then, an interleaved signal may be finally output by reading the signal stored in the memory, using a random interleaver. The reading process in this case may be performed based on an output index of the random interleaver. The size of the random interleaver may be N/4, or the size of the index generated by the random interleaver may be N/4. Accordingly, 4 random interleavers may be necessary for the reading process. The output memory index of the random interleaver may be generated using a quadratic polynomial (QP) or a pseudo-random binary sequence (PRBS). In addition, the same random interleaver may be used for 4 cycles in consideration of a writing cycle, and the principle of the writing process for separating I/Q components of two adjacent cells as far apart as possible may be constantly maintained using the same random interleaver.

The above-described writing process may be expressed as given by the following expression.

Expression 11

$$\pi_r(k) = \frac{N}{4}\bmod(k,2) + \left\lfloor \frac{k}{4} \right\rfloor,\ 0 \le k \le N-1$$

*N*: total cell number
⌊·⌋: floor operation
mod: modulus operation
(*K*): writing memory - index for the $k^{th}$ cell

In addition, the above-described reading process may be expressed as given by the following expression.

Expression 12

$$\pi_r(k') = \left(\gamma + \sigma \times \frac{k(k+1)}{2}\right) \bmod \frac{N}{4}\ \ for\ k' = 0,\ldots,2^n,\ where\ \lceil \log_2(N/8) \rceil < n \le \lceil \log_2(N/4) \rceil$$

$$If\ 0 \le \pi_r(k') \le \frac{N}{4} - 1,\ \pi_r(k) = \frac{N}{4}g + \pi_r(k')\ for\ k = 0,\ldots,\frac{N}{4} - 1, g = 0,1,2,3$$

*N*: total cell number
⌈·⌉: cell operation
mod: modulus operation
$\gamma$: an offset value t of a quadralic polynomial(QP)
$\sigma$: reacting period. i.e., g = 4 in the case of 4D - SSD
$\pi_r(k)$: output value of QP for the k order
$\pi_r(k)$: reading memory - index for the $k^{th}$ cell

As shown in the above expressions, the writing process improves spreading property of the interleaver while the reading process improves randomness property thereof.

The random interleaving process generates a memory index using, for example, a QP algorithm. In this case, if the generated index is greater than N/4-1, the index may not be used as a memory index value but may be discarded, and the QP algorithm may be executed once again. If a re-generated index is less than N/4-1, the index may be used as a memory index value to perform the reading process. Here, the QP may be replaced by an arbitrary random interleaver such as a PRBS.

FIG. 30 is a view illustrating operation of the periodic and random I/Q interleaving technology for 4D-SSD when N is 24, according to an embodiment of the present invention.

Even when N=24, periodic and random I/Q interleaving operates as described above. Q components are delayed by 2 cells by the Q2-delay block, a memory writing process is performed based on an input cycle of 4, and random interleaving is performed through a memory reading process.

The effect of the periodic and random I/Q interleaving technology may be demonstrated using the example of N=24. When an output signal is compared to an input signal, it is shown that the periodic and random I/Q interleaving technology has both spreading and randomness properties.

FIG. 31 is a detailed block diagram of a demapping & decoding module according to another embodiment of the present invention.

As described above, a cell deinterleaver may deinterleave cells spread within one FEC block, to original positions thereof. The cell deinterleaver performs an inverse operation of the operation of the cell interleaver of the transmitter. In addition, an I-delay block of a constellation demapper block delays I components to restore Q components delayed by the transmitter, to original positions thereof.

In the demapping & decoding module according to another embodiment of the present invention, shaded blocks are modified from those of the above-described demapping & decoding module.

The demapping & decoding module according to another embodiment of the present invention may include a periodic and random I/Q deinterleaving process. The periodic and random I/Q deinterleaving technology may be a technology corresponding to operations of the cell deinterleaver and the I-delay block in this figure. Furthermore, according to another embodiment, if cell deinterleaving is omitted, periodic and random I/Q deinterleaving may be applied after time deinterleaving. In addition, according to another embodiment, if the cell deinterleaver is omitted, a time deinterleaver block may perform periodic and random I/Q deinterleaving. In this case, the time deinterleaver block may perform only the periodic and random I/Q deinterleaving operation, or perform both the periodic and random I/Q deinterleaving operation and the above-described operation of the time deinterleaver block of the future broadcasting system.

FIG. 32 is a view illustrating periodic and random I/Q deinterleaving technology according to an embodiment of the present invention.

This figure shows an embodiment in which the constellation demapper block and the cell deinterleaver block are replaced by a periodic and random I/Q deinterleaver and an I1/I2 delay block as described above. Here, the periodic and random I/Q deinterleaving technology may be a concept including the periodic and random I/Q deinterleaver and the I1/I2 delay block. Hereinafter, the periodic and random I/Q deinterleaver may refer to only the periodic and random I/Q deinterleaver block of this figure, or refer to the whole periodic and random I/Q deinterleaving technology including the I1/I2-delay block. The first block diagram shows single-input single-output (SISO) mode, and the second block diagram shows multiple-input multiple-output (MIMO) mode.

An overall operation process of the receiver may follow an inverse operation (restoration) process compared to the operation of the transmitter. A description of the periodic and random I/Q deinterleaving technology corresponding to the invented periodic and random I/Q interleaving technology may be as given below.

The periodic and random I/Q deinterleaver block randomly performs writing operation and then periodically performs reading operation in an opposite way to the periodic and random I/Q interleaver of the transmitter. A mathematical expression or algorithm used in this case may be the same as that used by the transmitter.

Output of the periodic and random I/Q deinterleaver block is input to the I1/I2-delay block. The I1/I2-delay block splits between in-phase components and quadrature-phase components and then delays only the in-phase components. A delay value in this case may be determined as 1 or 2 based on whether 2D-SSD is used or 4D-SSD is used. The I1-delay block may be used for 2D-SSD, and the I2-delay block may be used for 4D-SSD. Consequently, the influence of the Q1/Q2-delay block operating in the transmitter may be offset by the 11/12- delay block.

FIG. 33 is a view illustrating a broadcast signal transmission method according to an embodiment of the present invention.

The broadcast signal transmission method according to an embodiment of the present invention may include encoding data pipe (DP) data based on a code rate, generating a signal frame by mapping the encoded DP data, and/or modulating data of the signal frame using an orthogonal frequency division multiplexing (OFDM) scheme and transmitting a broadcast signal.

The encoding of the DP data based on the code rate may correspond to encoding data of each DP by the above-described coding & modulation module. The encoding of the DP data based on the code rate may include forward error correction (FEC)-encoding the DP data, bit-interleaving the FEC-encoded DP data, and/or mapping the bit-interleaved DP data to constellations based on the code rate.

The FEC-encoding of the DP data may correspond to performing FEC encoding on the DP data as described above by the above-described FEC encoder block of the coding & modulation module.

The bit-interleaving of the FEC-encoded DP data may correspond to performing bit interleaving on the FEC-encoded DP data as described above by the above-described bit interleaver block of the coding & modulation module.

The mapping of the bit-interleaved DP data to the constellations based on the code rate may correspond to mapping the bit-interleaved DP data to the constellations based on the code rate as described above by the above-described constellation mapper block of the coding & modulation module.

The generating of the signal frame by mapping the encoded DP data may correspond to generating the signal frame by mapping the encoded DP data as described above by the above-described frame structure module.

The modulating of the data of the signal frame using the OFDM scheme and the transmitting of the broadcast signal may correspond to modulating the data of the signal frame and transmitting the broadcast signal as described above by the above-described waveform generation module. In this case, the modulating may be performed using the OFDM scheme.

The broadcast signal transmission method according to another embodiment of the present invention may further include signal space diversity (SSD)-encoding the DP data mapped to the constellations. Here, the SSD-encoding may include grouping the DP data mapped to the constellations in units of N cells and/or applying an NxN matrix to the grouped N cells. Here, N may denote the number of dimensions of the SSD-encoding. Here, the SSD-encoding may be encoding based on the above-described MDSD.

In the broadcast signal transmission method according to another embodiment of the present invention, N may be one of 2, 3, and 4. That is, the SSD-encoding may be performed on 2, 3, or 4 dimensions. Here, the SSD-encoding may be encoding based on the above-described MDSD.

In the broadcast signal transmission method according to another embodiment of the present invention, if N is 3, the NxN matrix may be expressed as given by the following expression.

Expression 13

$$\begin{bmatrix} +a & +b & +c \\ +c & +a & +b \\ +b & +c & +a \end{bmatrix}$$

Here, a, b, and c may satisfy a condition expressed as given by the following expression.

Expression 14

$$a=\sqrt{1-b^2-c^2}$$

In the broadcast signal transmission method according to another embodiment of the present invention, the grouping of the DP data mapped to the constellations in units of N cells may include grouping each of real number components and imaginary number components of the DP data mapped to the constellations, in units of N cells. That is, I components and Q components may be split and then separately grouped as described above.

In the broadcast signal transmission method according to another embodiment of the present invention, the encoding of the DP data may further include interleaving the DP data mapped to the constellations. Here, the interleaving of the DP data mapped to the constellations may correspond to performing interleaving as described above by the above-described cell interleaver block. Alternatively, the interleaving of the DP data mapped to the constellations may correspond to performing interleaving as described above by the above-described time interleaver block. Otherwise, the interleaving of the DP data mapped to the constellations may correspond to performing interleaving as described above by the above-described periodic and random I/Q interleaver. In this case, the cell interleaver block may be omitted.

In the broadcast signal transmission method according to another embodiment of the present invention, the interleaving of the DP data mapped to the constellations may include splitting the DP data into real number components and imaginary number components and delaying the imaginary number components, and/or writing the delayed DP data in a memory based on a certain cycle T and reading cells written in the memory using T random interleavers. The interleaving of the DP data mapped to the constellations may correspond to performing interleaving as described above by the above-described periodic and random I/Q interleaver. The splitting of the DP data into the real number components and the imaginary number components and the delaying of the imaginary number components may correspond to delaying Q components by a certain value by the Q1 or Q2 delay block. The writing of the delayed DP data in the memory based on the certain cycle T and the reading of the cells written in the memory using the T random interleavers may correspond to performing interleaving as described above by the above-described periodic and random I/Q interleaver.

FIG. 34 is a view illustrating a broadcast signal reception method according to an embodiment of the present invention.

The broadcast signal reception method according to an embodiment of the present invention may include receiving a broadcast signal and demodulating data of a signal frame using an orthogonal frequency division multiplexing (OFDM) scheme, parsing the signal frame by demapping data pipe (DP) data, and/or decoding the DP data based on a code rate.

The receiving of the broadcast signal and the demodulating of the data of the signal frame using the OFDM scheme may correspond to receiving the broadcast signal and demodulating the data of the signal frame using the OFDM scheme as described above by the above-described synchronization & demodulation module. The above-described synchronization & demodulation module may perform an inverse operation of the operation of the waveform generation module as described above.

The parsing of the signal frame by demapping the DP data may correspond to parsing the signal frame by demapping the DP data as described above by the above-described frame parsing module.

The decoding of the DP data based on the code rate may correspond to performing decoding based on the code rate as described above by the above-described demapping & decoding module. The decoding of the DP data based on the code rate may include demapping the DP data from constellations based on the code rate, bit-deinterleaving the DP data demapped from the constellations, and/or forward error correction (FEC)-decoding the bit-deinterleaved DP data.

The demapping of the DP data from the constellations based on the code rate may correspond to demapping the DP data from the constellations based on the code rate as described above by the above-described constellation demapper module.

The bit-deinterleaving of the DP data demapped from the constellations may correspond to bit-deinterleaving the DP data demapped from the constellations as described above by the above-described bit deinterleaver block.

The FEC-decoding of the bit-deinterleaved DP data may correspond to FEC-decoding the bit-deinterleaved DP data as described above by the above-described FEC decoder block.

The broadcast signal reception method according to another embodiment of the present invention may further include signal space diversity (SSD)-decoding the DP data. Here, the SSD-decoding may be decoding based on the above-described MDSD.

In the broadcast signal reception method according to another embodiment of the present invention, the number of dimensions of the above-described SSD-decoding may be one of 2, 3, and 4. That is, the above-described SSD-decoding may be performed on 2, 3, or 4 dimensions. Here, the SSD-decoding may be decoding based on the above-described MDSD.

In the broadcast signal reception method according to another embodiment of the present invention, the decoding of the DP data may further include deinterleaving the DP data. Here, the deinterleaving of the DP data may correspond to performing deinterleaving as described above by the above-described cell deinterleaver block. Alternatively, the interleaving of the DP data may correspond to performing deinterleaving as described above by the above-described time deinterleaver block. Otherwise, the deinterleaving of the DP data may correspond to performing deinterleaving as described above by the above-described periodic and random I/Q deinterleaver. In this case, the cell deinterleaver block may be omitted.

In the broadcast signal reception method according to another embodiment of the present invention, the deinterleaving of the DP data may include writing the DP data in a memory using T random deinterleavers and reading the DP data written in the memory based on a certain cycle T, and/or splitting the read DP data into real number components and imaginary number components and delaying the real number components. Here, the writing of the DP data in the memory using the T random deinterleavers and the reading of the DP data written in the memory based on the certain cycle T may correspond to performing deinterleaving as described above by the above-described periodic and random I/Q deinterleaver. Here, the splitting of the read DP data into the real number components and the imaginary number components and the delaying of the real number components may correspond to delaying I components by a certain value by the above-described I1 or I2 delay block.

While the present invention has been described with reference to separate drawings for convenience, a new embodiment may be implemented by combining embodiments described in the drawings. When needed, designing a computer-readable recording medium having recorded thereon a program for executing the afore-described embodiments of the present invention may fall within the scope of the present invention.

The apparatus and method according to the present invention are not limited to the above-described embodiments. The whole or part of each embodiment may be selectively combined with that of another embodiment so as to make various modifications to the embodiments.

The broadcast signal transmission/reception method according to the present invention can also be embodied as processor-readable code on a processor-readable recording medium. The processor-readable recording medium is any data storage device that can store data which can be thereafter read by a processor. Examples of the processor-readable recording medium include read-only memory (ROM), random-access memory (RAM), magnetic tapes, floppy disks, optical data storage devices and carrier waves (e.g., transmission through the Internet). The processor-readable recording medium can also be distributed over network coupled computer systems so that the processor-readable code is stored and executed in a distributed fashion.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

In addition, the disclosure describes both a product invention as well as a method invention, and descriptions of both inventions may be complementarily applied as needed.

[Mode for Invention]

Various embodiments have been described in the best mode for carrying out the invention.

[Industrial Applicability]

The present invention is applicable to industrial fields related to a broadcast signal transmission method, broadcast signal reception method, broadcast signal transmission apparatus, and broadcast signal reception apparatus.

**Claims**

**1.** A broadcast signal transmission method comprising:

encoding data pipe (DP) data based on a code rate,
wherein the encoding of the DP data comprises:

forward error correction (FEC)-encoding the DP data;
bit-interleaving the FEC-encoded DP data; and
mapping the bit-interleaved DP data to constellations based on the code rate;

generating at least one signal frame by mapping the encoded DP data; and
modulating data of the generated signal frame using an orthogonal frequency division multiplexing (OFDM) scheme and transmitting a broadcast signal comprising the modulated data of the signal frame.

**2.** The broadcast signal transmission method according to claim 1, further comprising signal space diversity (SSD)-encoding the DP data mapped to the constellations,
wherein the SSD-encoding comprises:

grouping the DP data mapped to the constellations in units of N cells; and
applying an NxN matrix to the grouped N cells,
wherein N denotes a number of dimensions of the SSD-encoding.

**3.** The broadcast signal transmission method according to claim 1, wherein the encoding of the DP data further comprises interleaving the DP data mapped to the constellations.

**4.** The broadcast signal transmission method according to claim 3, wherein the interleaving of the DP data mapped to the constellations further comprises:

splitting the DP data into real number components and imaginary number components and delaying the imaginary number components; and
writing the delayed DP data in a memory based on a certain cycle T and reading cells written in the memory using T random interleavers.

**5.** A broadcast signal reception method comprising:

receiving a broadcast signal and demodulating data of a signal frame comprised in the received broadcast signal, using an orthogonal frequency division multiplexing (OFDM) scheme;
parsing the signal frame by demapping data pipe (DP) data; and
decoding the DP data based on a code rate,
wherein the decoding of the DP data comprises:

demapping the DP data from constellations based on the code rate;
bit-deinterleaving the DP data demapped from the constellations; and
forward error correction (FEC)-decoding the bit-deinterleaved DP data.

**6.** The broadcast signal reception method according to claim 5, further comprising signal space diversity (SSD)-decoding the DP data.

**7.** The broadcast signal reception method according to claim 5, wherein the decoding of the DP data further comprises deinterleaving the DP data.

**8.** A broadcast signal transmission apparatus comprising:

an encoding module for encoding data pipe (DP) data based on a code rate,
wherein the encoding module comprises:

a forward error correction (FEC) encoding module for FEC-encoding the DP data;

a bit interleaving module for bit-interleaving the FEC-encoded DP data; and
a constellation mapping module for mapping the bit-interleaved DP data to constellations based on the code rate;

a frame building module for generating at least one signal frame by mapping the encoded DP data; and
an orthogonal frequency division multiplexing (OFDM) module for modulating data of the generated signal frame using an OFDM scheme and transmitting a broadcast signal comprising the modulated data of the signal frame.

**9.** The broadcast signal transmission apparatus according to claim 8, further comprising a signal space diversity (SSD) encoding module for SSD-encoding the DP data mapped to the constellations,
wherein the SSD encoding module groups the DP data mapped to the constellations in units of N cells, and applies an NxN matrix to the grouped N cells,
wherein N denotes a number of dimensions of the SSD-encoding.

**10.** The broadcast signal transmission apparatus according to claim 8, wherein the encoding module further comprises an interleaving module for interleaving the DP data mapped to the constellations.

**11.** The broadcast signal transmission apparatus according to claim 10, wherein the interleaving module for interleaving the DP data mapped to the constellations splits the DP data into real number components and imaginary number components, delays the imaginary number components, writes the delayed DP data in a memory based on a certain cycle T, and reads cells written in the memory using T random interleavers.

**12.** A broadcast signal reception apparatus comprising:

an orthogonal frequency division multiplexing (OFDM) module for receiving a broadcast signal and demodulating data of a signal frame comprised in the received broadcast signal, using an OFDM scheme;
a frame parsing module for parsing the signal frame by demapping data pipe (DP) data; and
a decoding module for decoding the DP data based on a code rate,
wherein the decoding module comprises:

a constellation demapping module for demapping the DP data from constellations based on the code rate;
a bit deinterleaving module for bit-deinterleaving the DP data demapped from the constellations; and
a forward error correction (FEC) decoding module for FEC-decoding the bit-deinterleaved DP data.

**13.** The broadcast signal reception apparatus according to claim 12, further comprising a signal space diversity (SSD) decoding module for SSD-decoding the DP data.

**14.** The broadcast signal reception apparatus according to claim 12, wherein the decoding module further comprises a deinterleaving module for deinterleaving the DP data.

FIG. 1

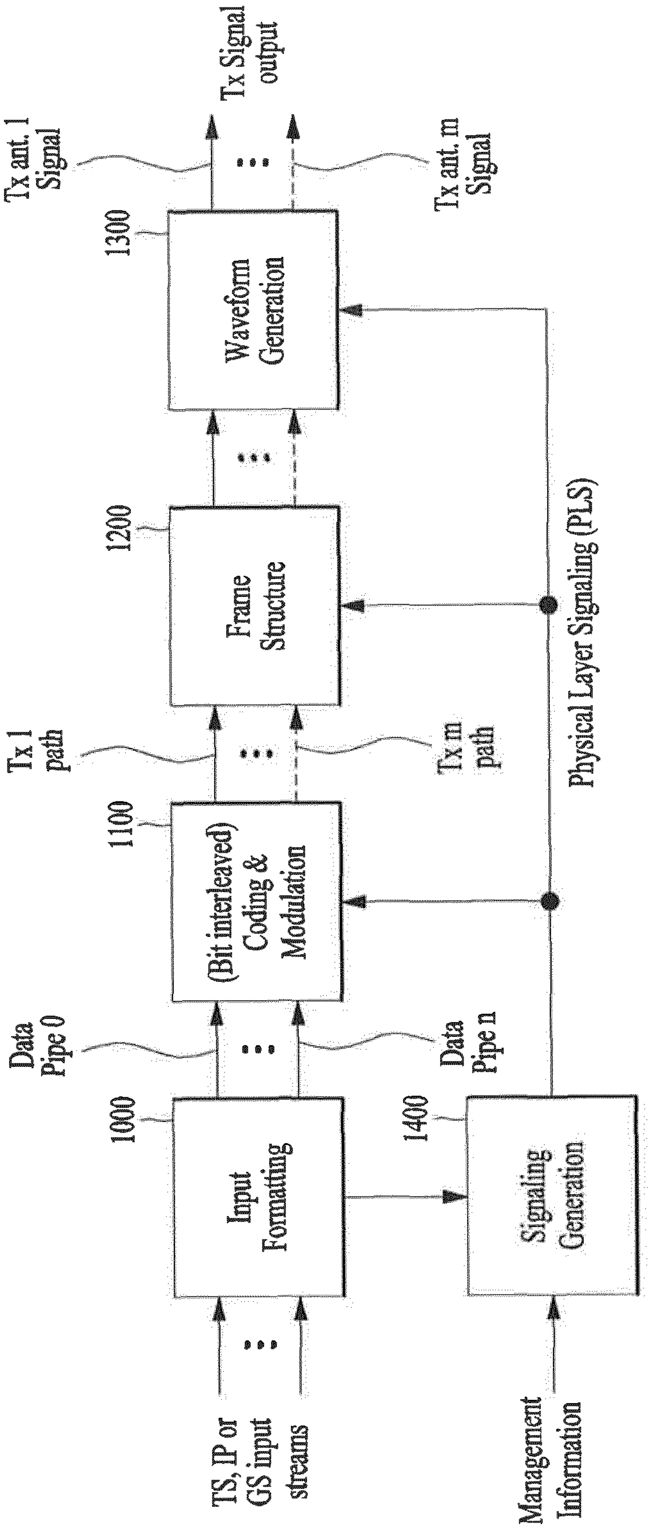
TS, IP or GS input streams
Management Information
Input Formatting
1000
Signaling Generation
1400
Data Pipe 0
Data Pipe n
(Bit interleaved) Coding & Modulation
1100
Tx 1 path
Tx m path
Frame Structure
1200
Waveform Generation
1300
Physical Layer Signaling (PLS)
Tx ant. 1 Signal
Tx ant. m Signal
Tx Signal output

FIG. 2

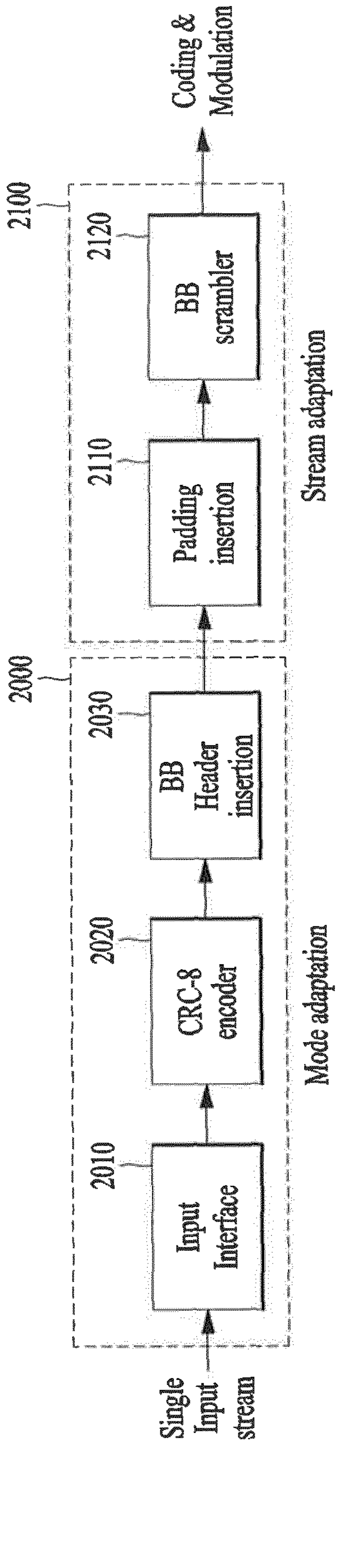
Single Input stream
Input Interface
2010
CRC-8 encoder
2020
BB Header insertion
2030
2000
Mode adaptation
Padding insertion
2110
BB scrambler
2120
2100
Stream adaptation
Coding & Modulation

FIG. 3

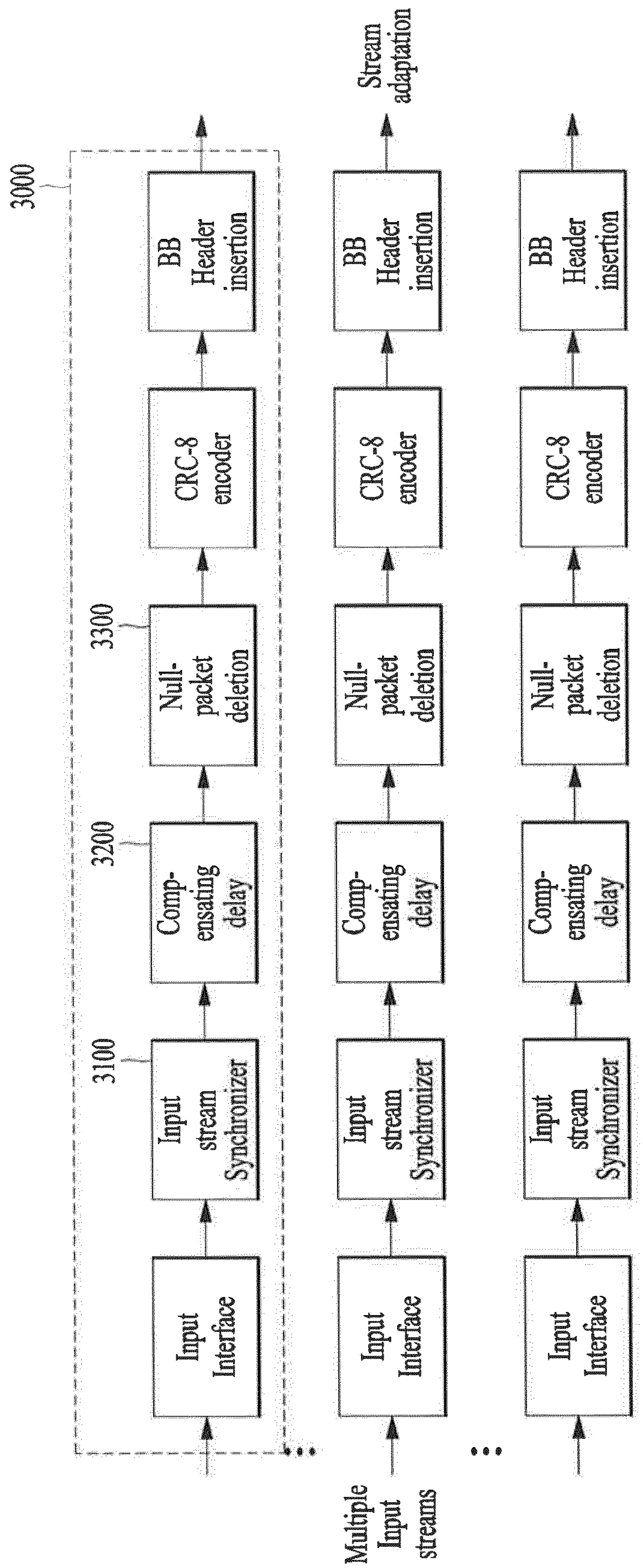
3000
3100
3200
3300
Input Interface
Input stream Synchronizer
Comp-ensating delay
Null-packet deletion
CRC-8 encoder
BB Header insertion
Multiple Input streams
Stream adaptation

FIG. 4

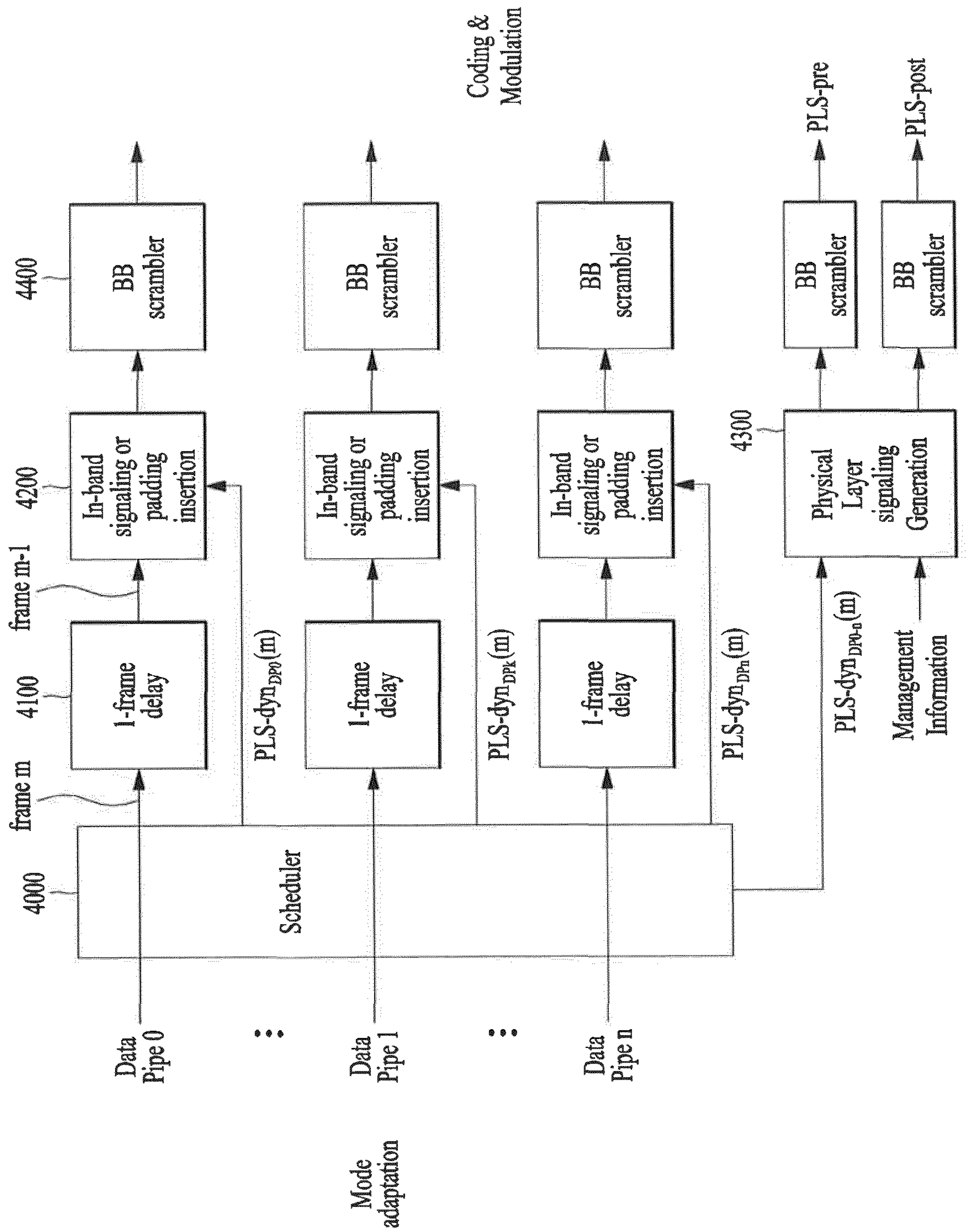
Mode adaptation
Data Pipe 0
Data Pipe 1
Data Pipe n
4000
Scheduler
frame m
4100
1-frame delay
frame m-1
4200
In-band signaling or padding insertion
4400
BB scrambler
Coding & Modulation
PLS-dyn$_{DP0}$(m)
PLS-dyn$_{DPk}$(m)
PLS-dyn$_{DPn}$(m)
PLS-dyn$_{DP0-n}$(m)
Management Information
4300
Physical Layer signaling Generation
PLS-pre
PLS-post

FIG. 5

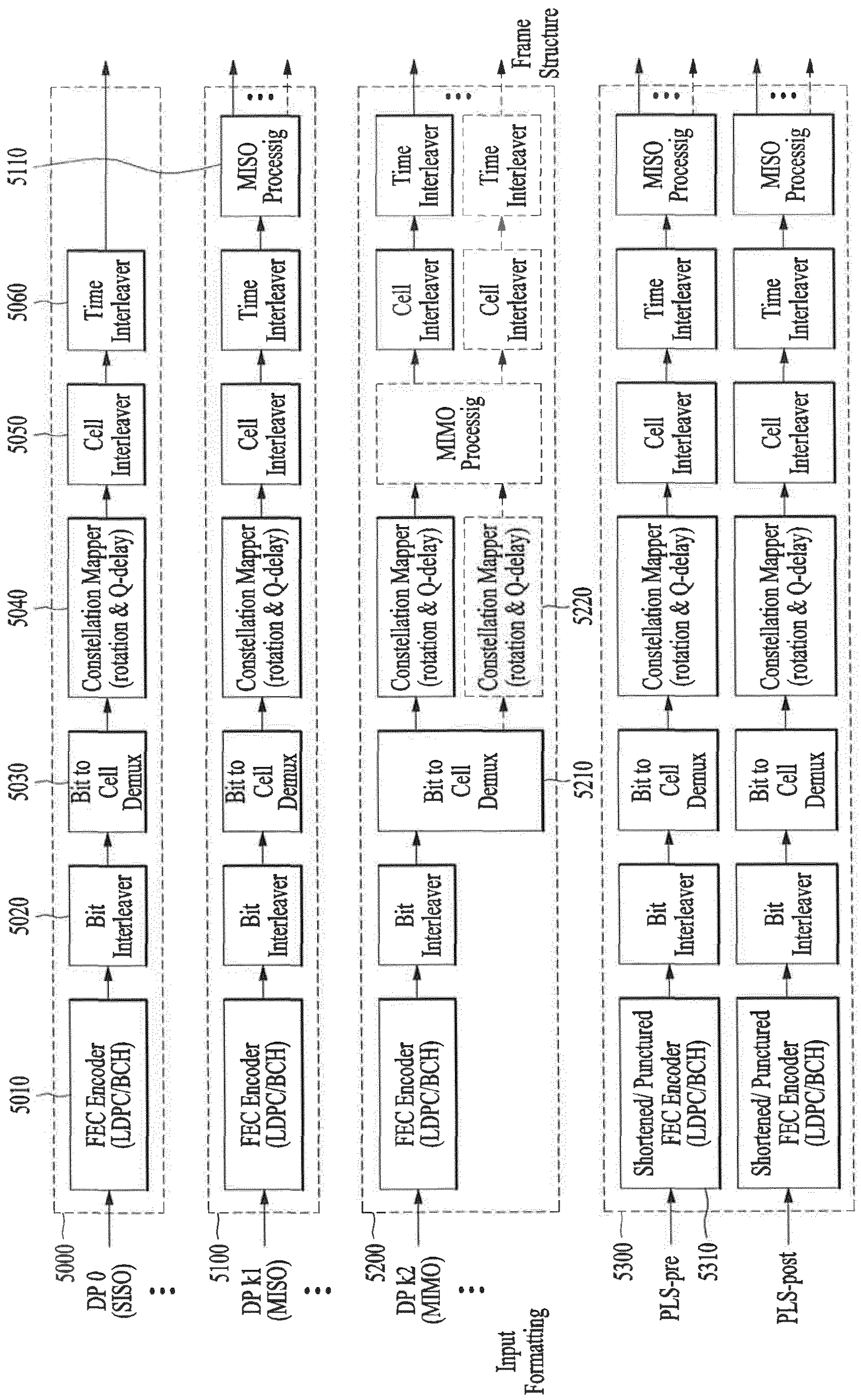

5000
DP 0 (SISO)
5010
FEC Encoder (LDPC/BCH)
5020
Bit Interleaver
5030
Bit to Cell Demux
5040
Constellation Mapper (rotation & Q-delay)
5050
Cell Interleaver
5060
Time Interleaver
5110
5100
DP k1 (MISO)
FEC Encoder (LDPC/BCH)
Bit Interleaver
Bit to Cell Demux
Constellation Mapper (rotation & Q-delay)
Cell Interleaver
Time Interleaver
MISO Processig
5200
DP k2 (MIMO)
FEC Encoder (LDPC/BCH)
Bit Interleaver
Bit to Cell Demux
5210
Constellation Mapper (rotation & Q-delay)
Constellation Mapper (rotation & Q-delay)
5220
MIMO Processig
Cell Interleaver
Cell Interleaver
Time Interleaver
Time Interleaver
Input Formatting
Frame Structure
5300
PLS-pre
5310
PLS-post
Shortened/ Punctured FEC Encoder (LDPC/BCH)
Bit Interleaver
Bit to Cell Demux
Constellation Mapper (rotation & Q-delay)
Cell Interleaver
Time Interleaver
MISO Processig
Shortened/ Punctured FEC Encoder (LDPC/BCH)
Bit Interleaver
Bit to Cell Demux
Constellation Mapper (rotation & Q-delay)
Cell Interleaver
Time Interleaver
MISO Processig

FIG. 6

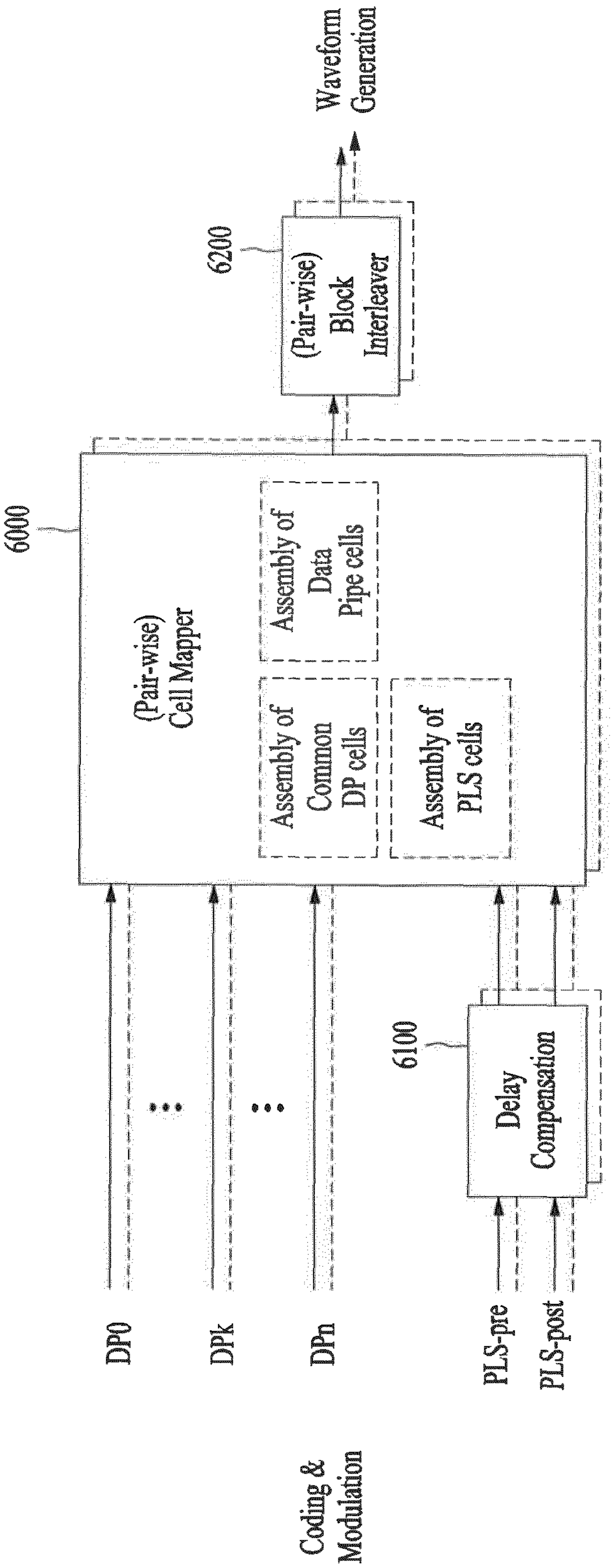
Coding & Modulation
DP0
DPk
DPn
PLS-pre
PLS-post
6100
Delay Compensation
6000
(Pair-wise) Cell Mapper
Assembly of Common DP cells
Assembly of PLS cells
Assembly of Data Pipe cells
6200
(Pair-wise) Block Interleaver
Waveform Generation

FIG. 7

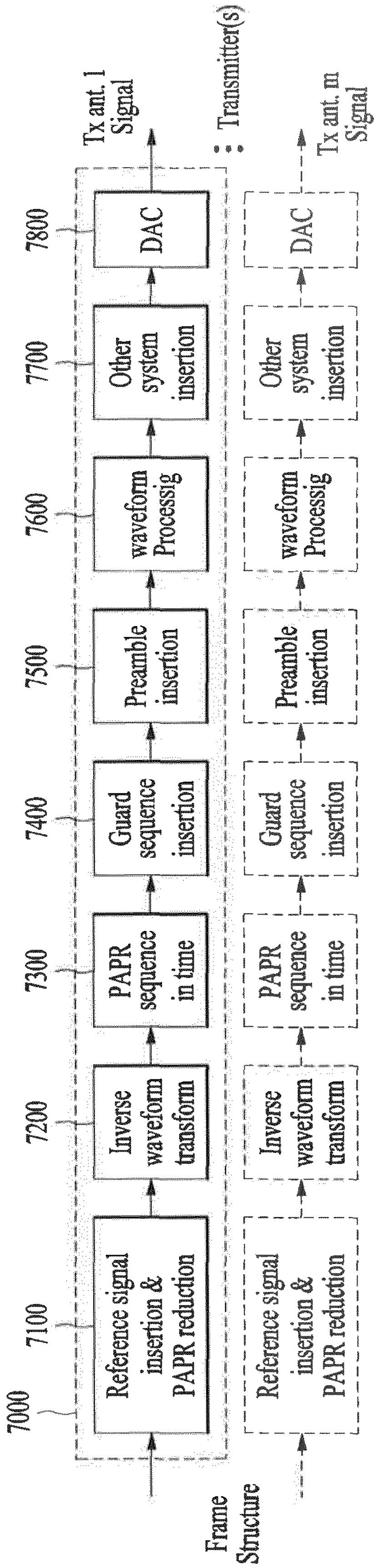

Frame Structure
7000
7100
Reference signal insertion & PAPR reduction
7200
Inverse waveform transform
7300
PAPR sequence in time
7400
Guard sequence insertion
7500
Preamble insertion
7600
waveform Processig
7700
Other system insertion
7800
DAC
Tx ant. 1 Signal
Transmitter(s)
Reference signal insertion & PAPR reduction
Inverse waveform transform
PAPR sequence in time
Guard sequence insertion
Preamble insertion
waveform Processig
Other system insertion
DAC
Tx ant. m Signal

FIG. 8

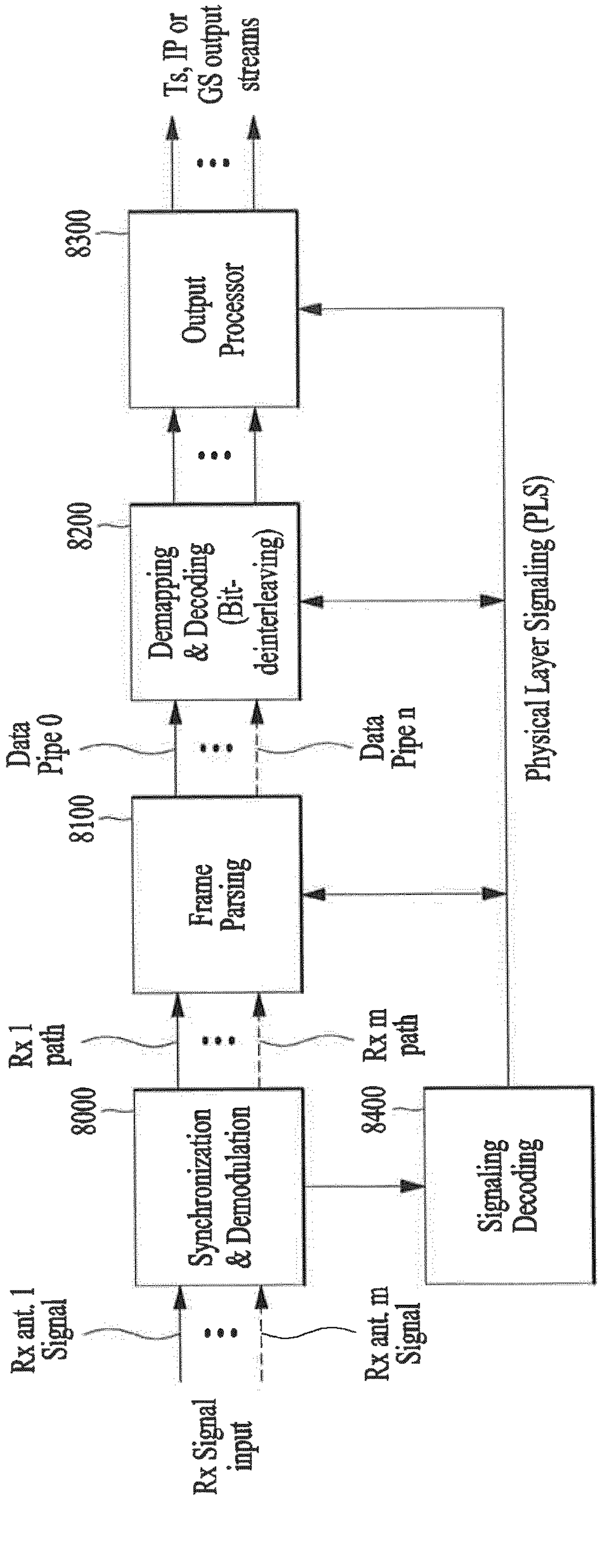
Rx Signal input
Rx ant. 1 Signal
Rx ant. m Signal
8000
Synchronization & Demodulation
Rx 1 path
Rx m path
8100
Frame Parsing
Data Pipe 0
Data Pipe n
8200
Demapping & Decoding (Bit-deinterleaving)
8300
Output Processor
Ts, IP or GS output streams
8400
Signaling Decoding
Physical Layer Signaling (PLS)

FIG. 9

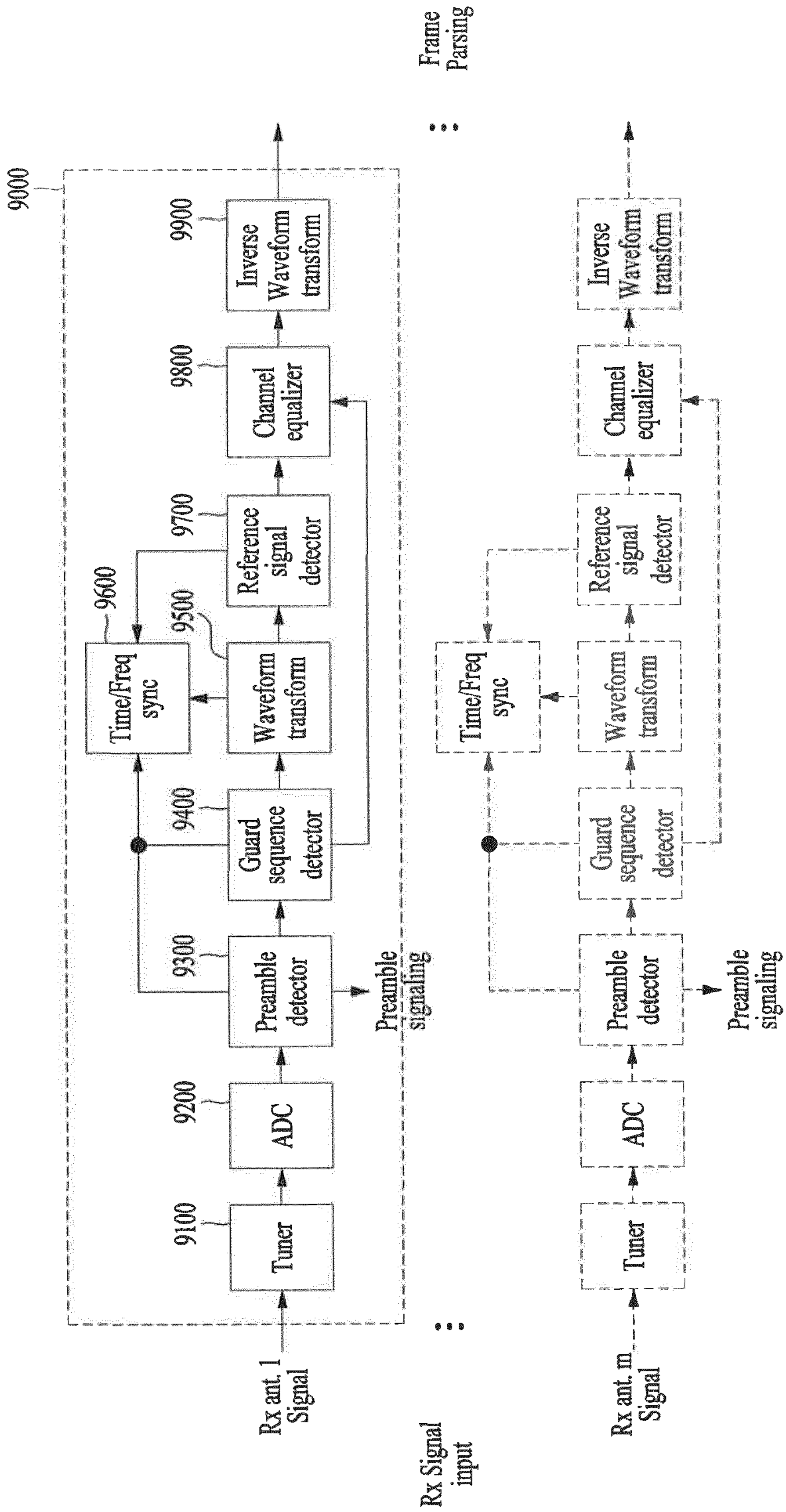
9000
Rx ant. 1 Signal
9100
Tuner
9200
ADC
9300
Preamble detector
Preamble signaling
9400
Guard sequence detector
9500
Waveform transform
9600
Time/Freq sync
9700
Reference signal detector
9800
Channel equalizer
9900
Inverse Waveform transform
Rx Signal input
Frame Parsing
Rx ant. m Signal
Tuner
ADC
Preamble detector
Preamble signaling
Guard sequence detector
Waveform transform
Time/Freq sync
Reference signal detector
Channel equalizer
Inverse Waveform transform

FIG. 10

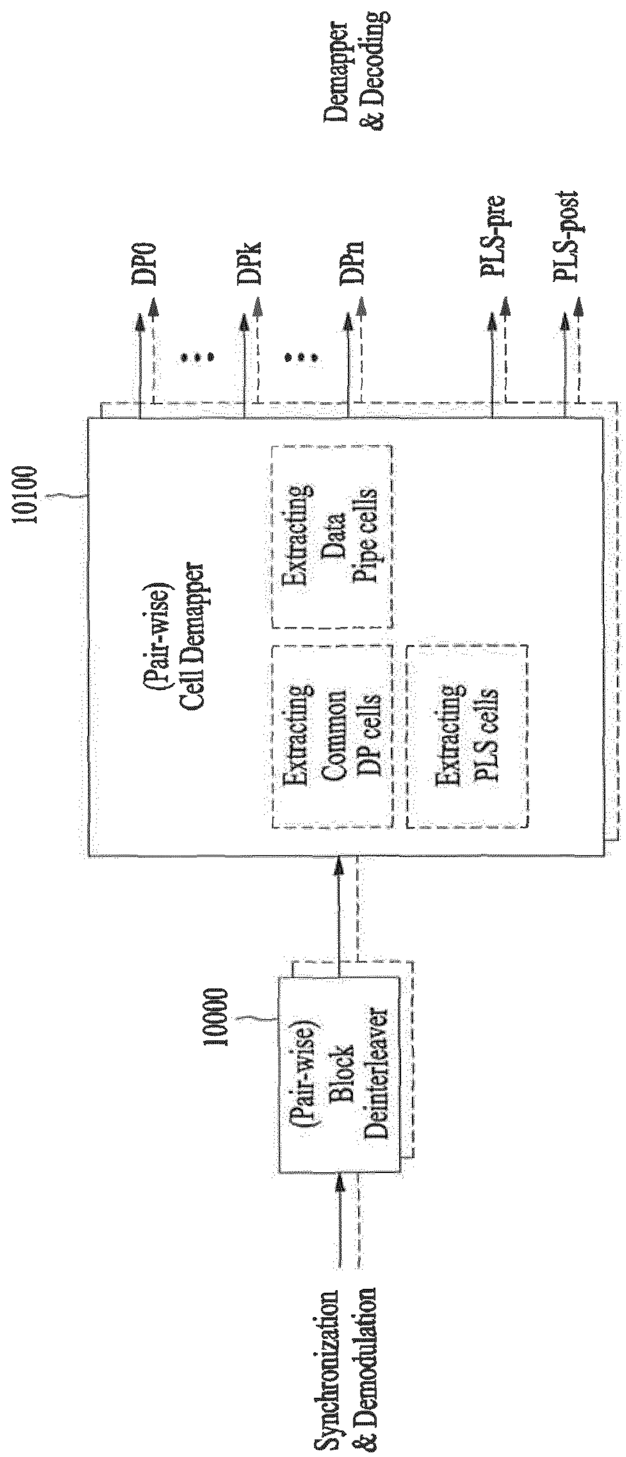
Synchronization & Demodulation
(Pair-wise) Block Deinterleaver
10000
(Pair-wise) Cell Demapper
10100
Extracting Common DP cells
Extracting PLS cells
Extracting Data Pipe cells
DP0
DPk
DPn
PLS-pre
PLS-post
Demapper & Decoding

FIG. 11

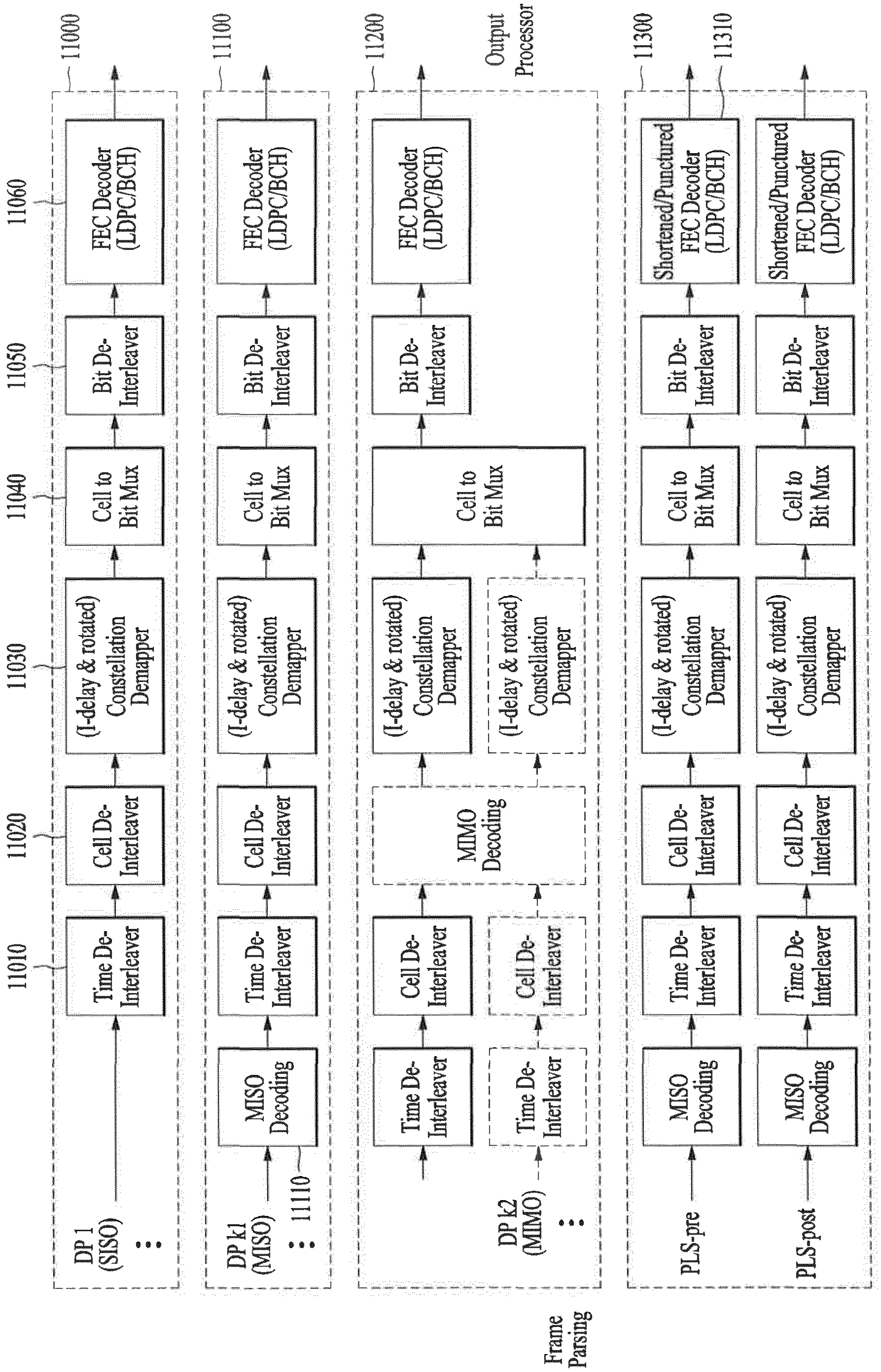
11000
11100
11200
11300
11310
Output Processor
11010
11020
11030
11040
11050
11060
11110
DP 1 (SISO)
DP k1 (MISO)
DP k2 (MIMO)
PLS-pre
PLS-post
MISO Decoding
Time De-Interleaver
Cell De-Interleaver
MIMO Decoding
(I-delay & rotated) Constellation Demapper
Cell to Bit Mux
Bit De-Interleaver
FEC Decoder (LDPC/BCH)
Shortened/Punctured FEC Decoder (LDPC/BCH)
Frame Parsing

FIG. 12

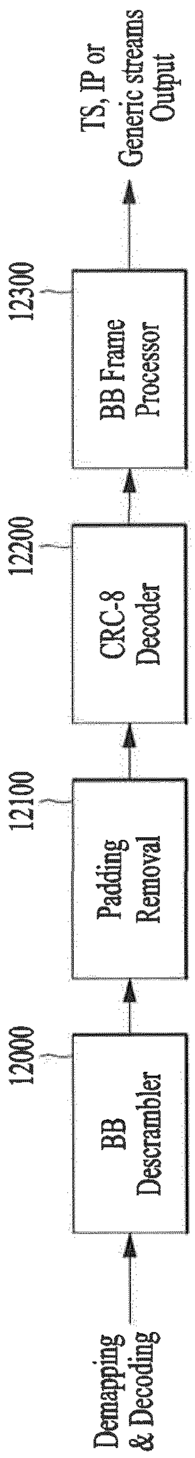
Demapping & Decoding
BB Descrambler
12000
Padding Removal
12100
CRC-8 Decoder
12200
BB Frame Processor
12300
TS, IP or Generic streams Output

FIG. 13

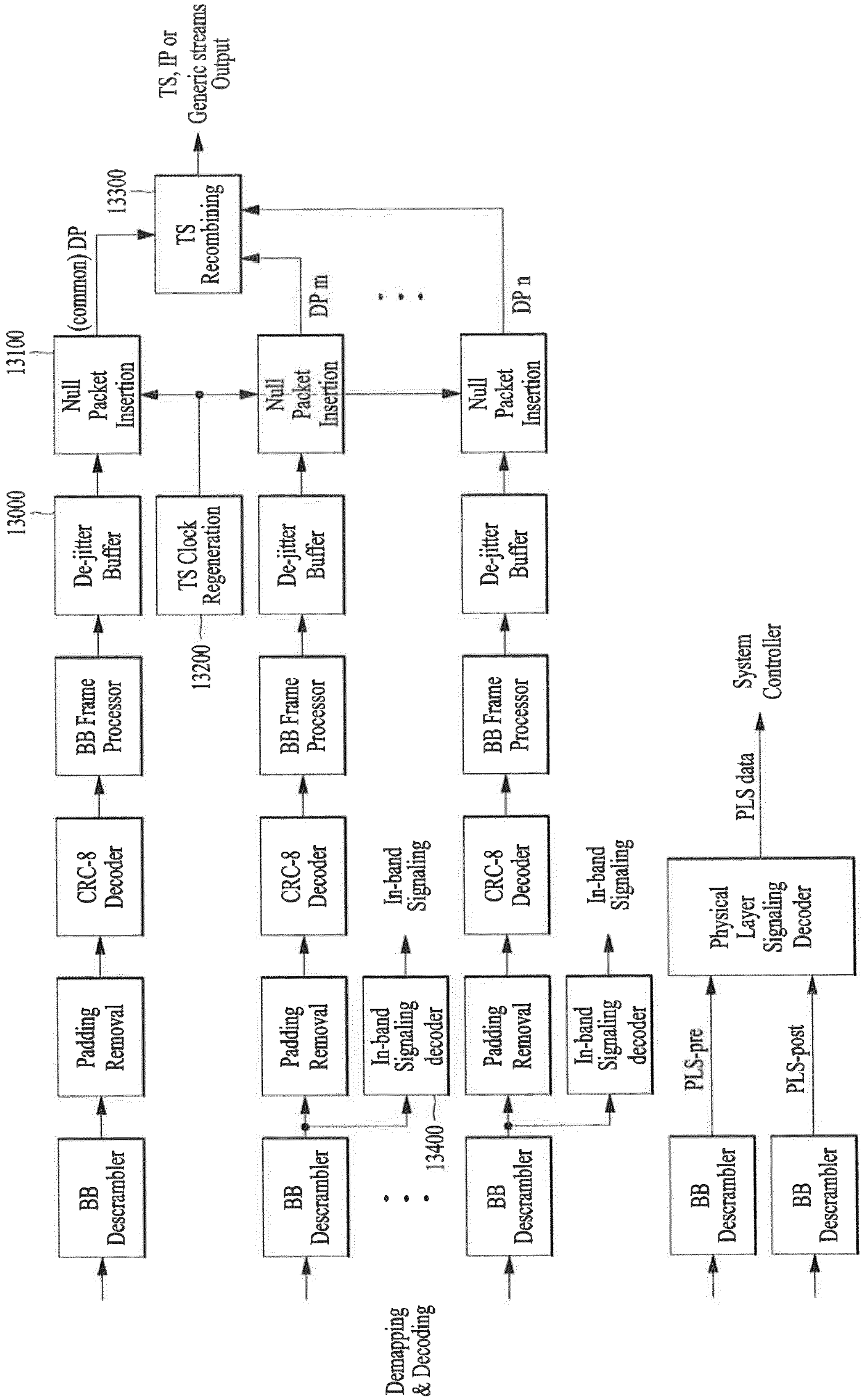
BB Descrambler
Padding Removal
CRC-8 Decoder
BB Frame Processor
De-jitter Buffer
Null Packet Insertion
(common) DP
TS Recombining
TS, IP or Generic streams Output
13000
13100
13200
13300
13400
TS Clock Regeneration
DP m
DP n
In-band Signaling decoder
In-band Signaling
Demapping & Decoding
PLS-pre
PLS-post
Physical Layer Signaling Decoder
PLS data
System Controller

FIG. 14

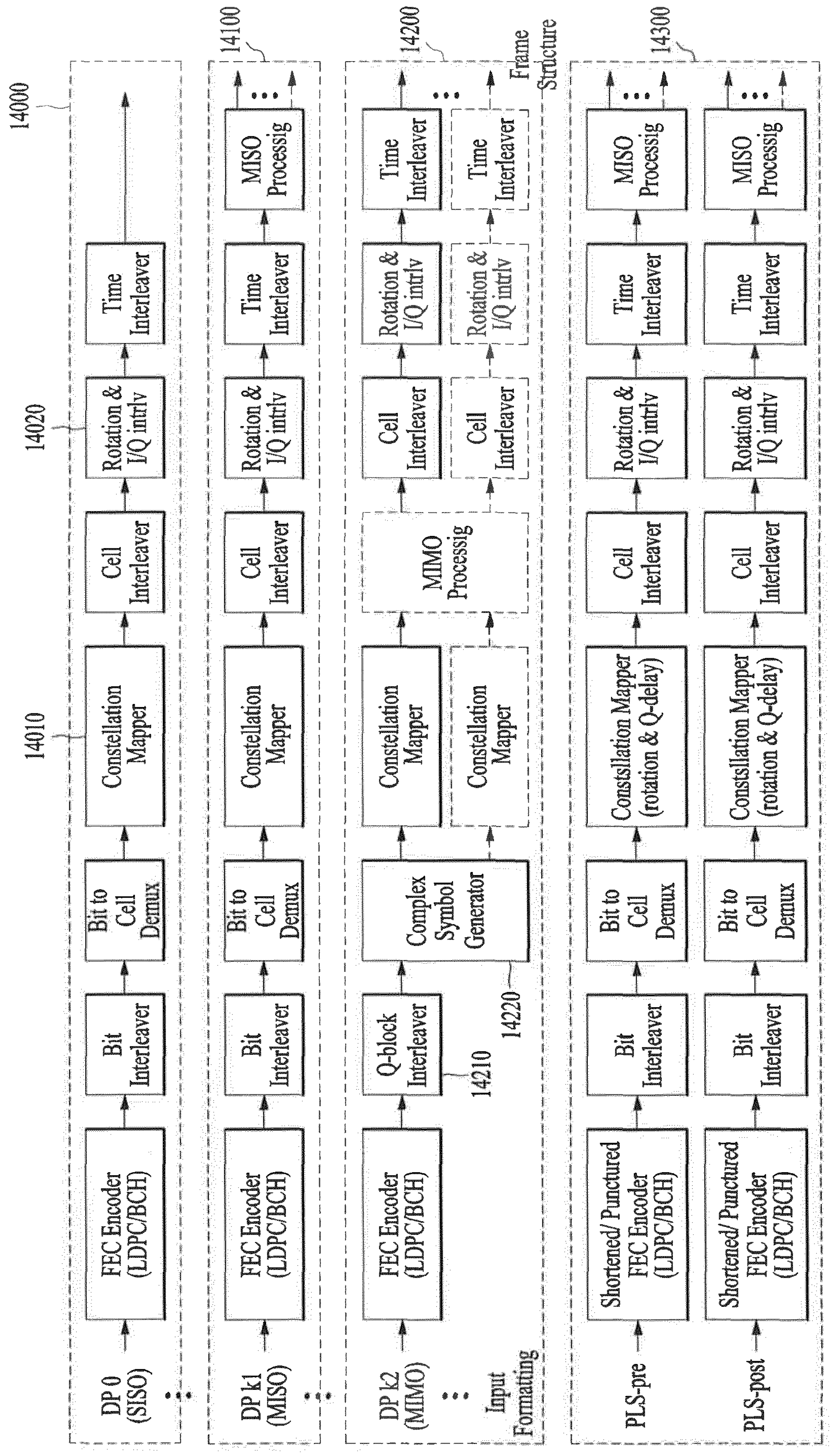
14000
14010
14020
DP 0 (SISO)
FEC Encoder (LDPC/BCH)
Bit Interleaver
Bit to Cell Demux
Constellation Mapper
Cell Interleaver
Rotation & I/Q intrlv
Time Interleaver
14100
DP k1 (MISO)
FEC Encoder (LDPC/BCH)
Bit Interleaver
Bit to Cell Demux
Constellation Mapper
Cell Interleaver
Rotation & I/Q intrlv
Time Interleaver
MISO Processig
14200
DP k2 (MIMO)
FEC Encoder (LDPC/BCH)
Q-block Interleaver
14210
Complex Symbol Generator
14220
Constellation Mapper
Constellation Mapper
MIMO Processig
Cell Interleaver
Cell Interleaver
Rotation & I/Q intrlv
Rotation & I/Q intrlv
Time Interleaver
Time Interleaver
Input Formatting
Frame Structure
14300
PLS-pre
PLS-post
Shortened/ Punctured FEC Encoder (LDPC/BCH)
Bit Interleaver
Bit to Cell Demux
Constsllation Mapper (rotation & Q-delay)
Cell Interleaver
Rotation & I/Q intrlv
Time Interleaver
MISO Processig

FIG. 15

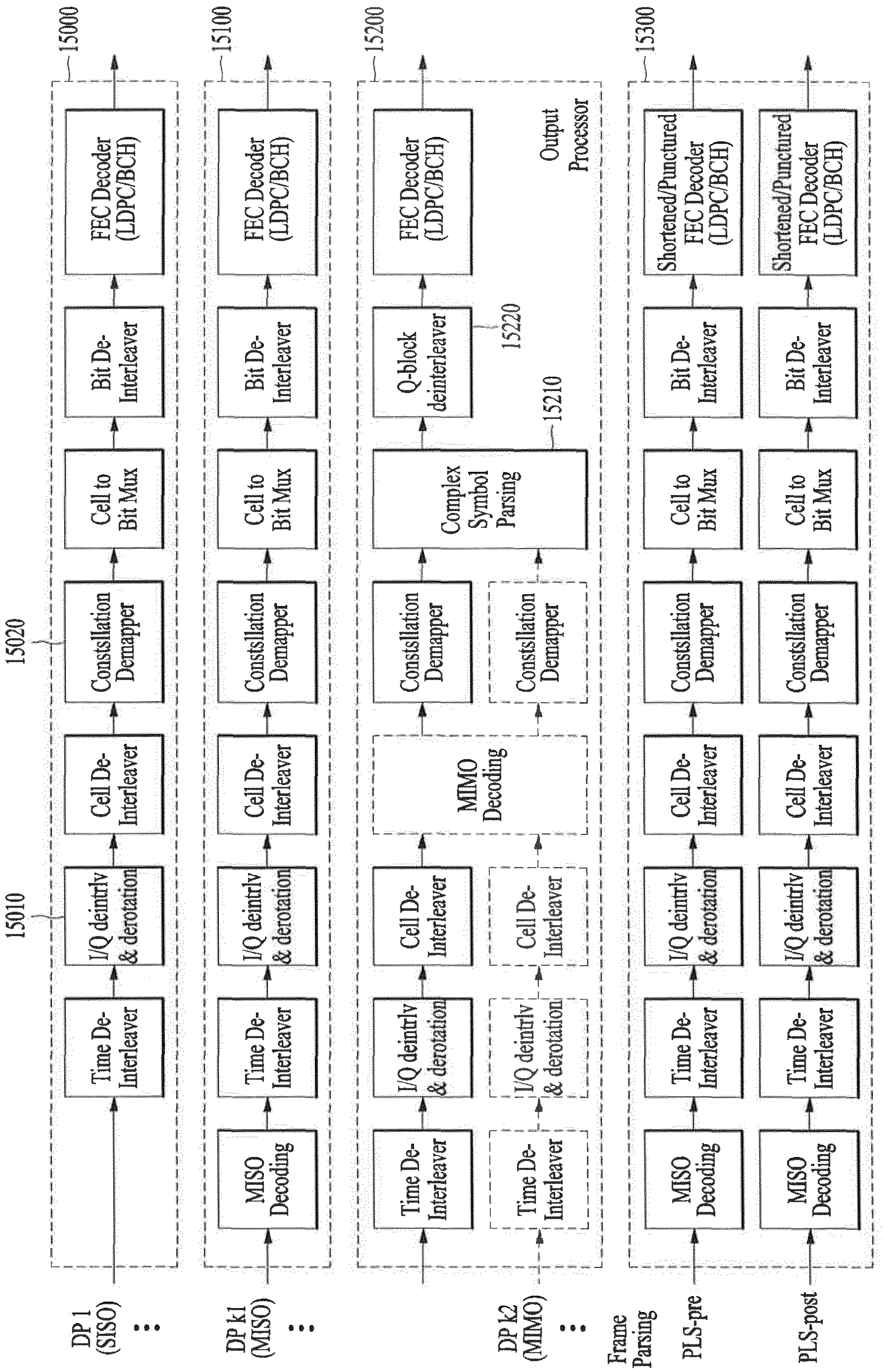
15000
15100
15200
15300
15010
15020
15210
15220
DP 1 (SISO)
DP k1 (MISO)
DP k2 (MIMO)
Frame Parsing
PLS-pre
PLS-post
MISO Decoding
Time De-Interleaver
I/Q deintrlv & derotation
Cell De-Interleaver
MIMO Decoding
Constellation Demapper
Cell to Bit Mux
Complex Symbol Parsing
Bit De-Interleaver
Q-block deinterleaver
FEC Decoder (LDPC/BCH)
Shortened/Punctured FEC Decoder (LDPC/BCH)
Output Processor

FIG. 16

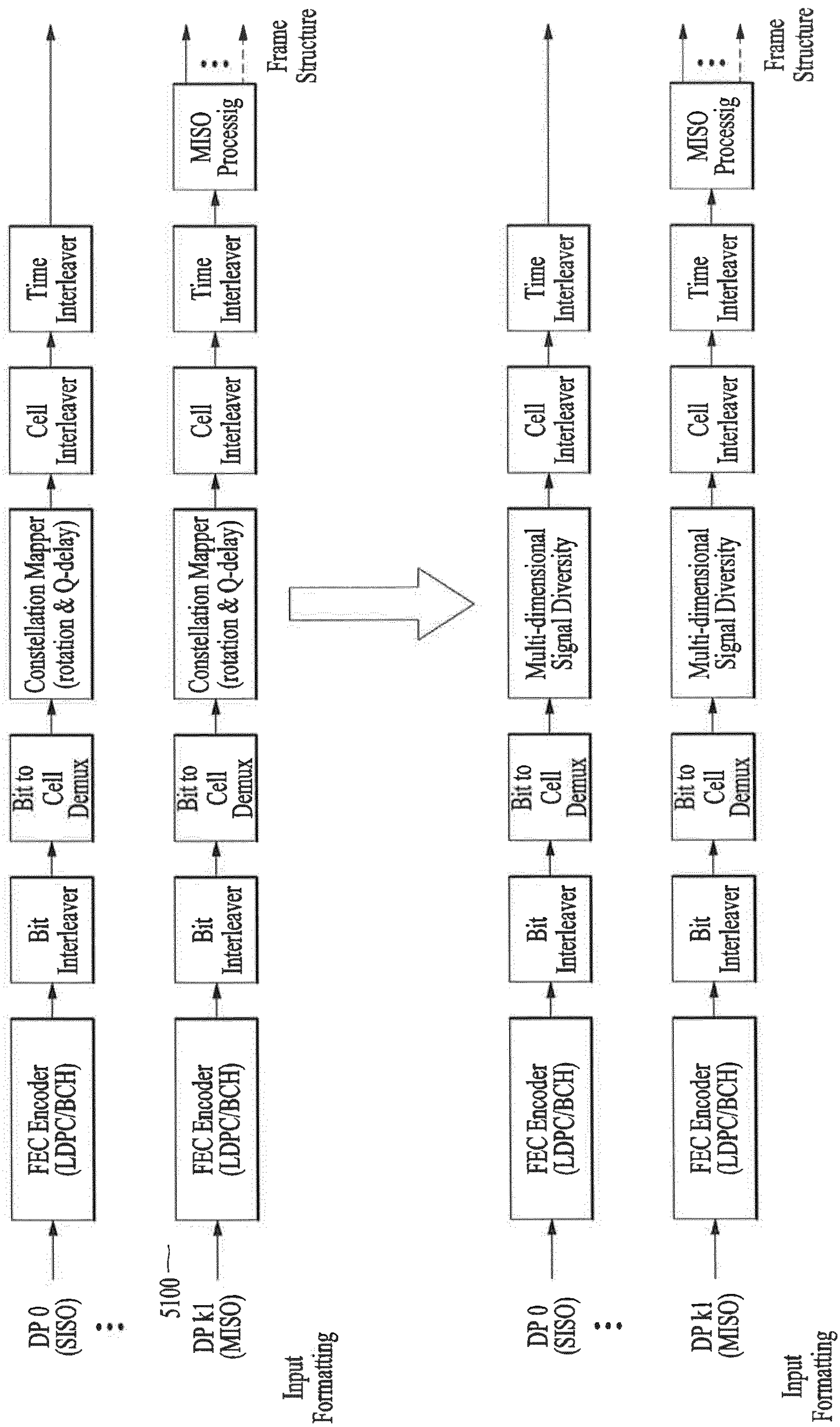
DP 0 (SISO)
DP k1 (MISO)
5100
Input Formatting
FEC Encoder (LDPC/BCH)
Bit Interleaver
Bit to Cell Demux
Constellation Mapper (rotation & Q-delay)
Cell Interleaver
Time Interleaver
MISO Processig
Frame Structure
DP 0 (SISO)
DP k1 (MISO)
Input Formatting
FEC Encoder (LDPC/BCH)
Bit Interleaver
Bit to Cell Demux
Multi-dimensional Signal Diversity
Cell Interleaver
Time Interleaver
MISO Processig
Frame Structure

FIG. 17

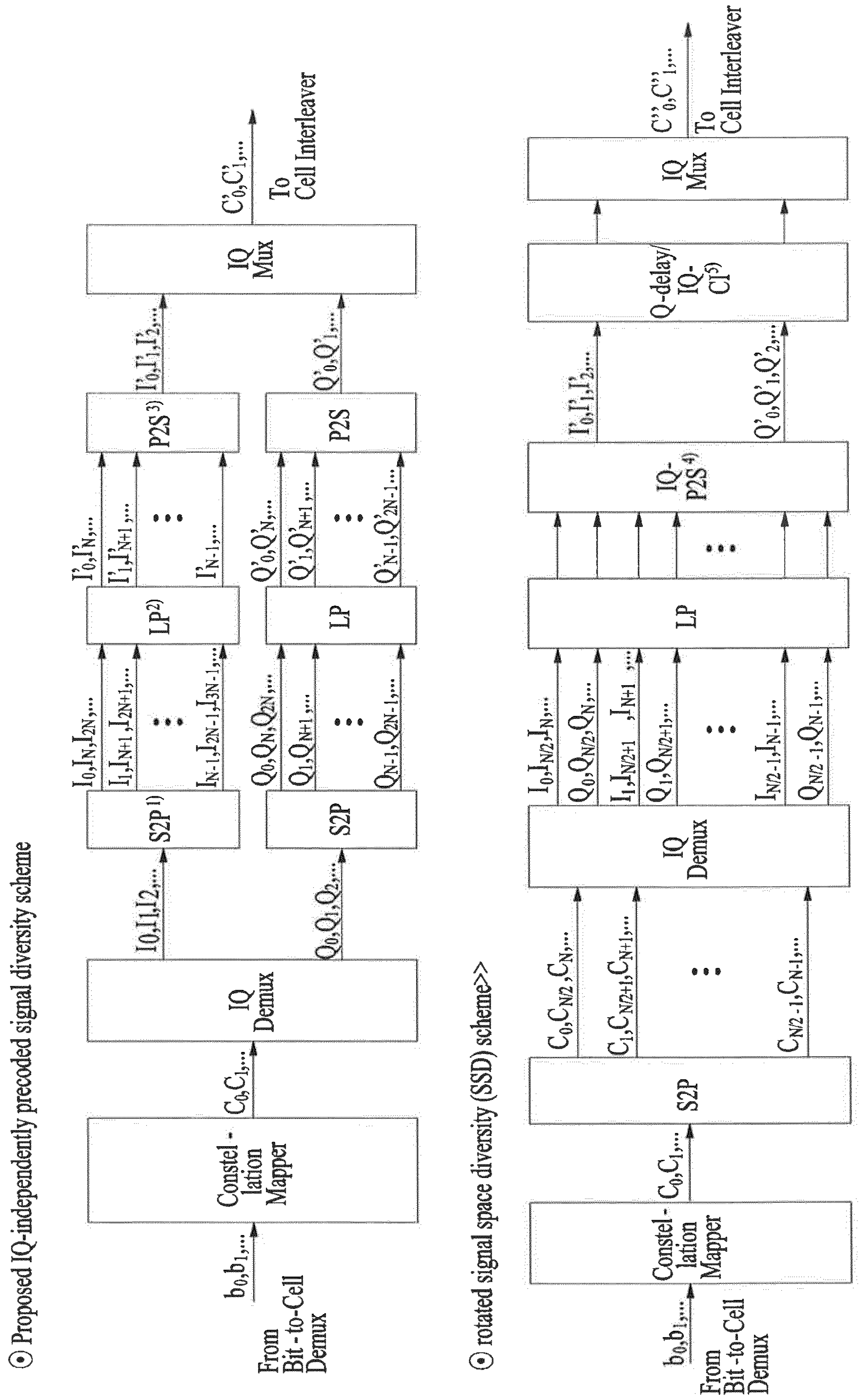
Proposed IQ-independently precoded signal diversity scheme
From Bit-to-Cell Demux
b0,b1,...
Constellation Mapper
C0,C1,...
IQ Demux
I0,I1,I2,...
Q0,Q1,Q2,...
S2P 1)
S2P
I0,IN,I2N,...
I1,IN+1,I2N+1,...
IN-1,I2N-1,I3N-1,...
Q0,QN,Q2N,...
Q1,QN+1,...
QN-1,Q2N-1,...
LP 2)
LP
I'0,I'N,...
I'1,I'N+1,...
I'N-1,...
Q'0,Q'N,...
Q'1,Q'N+1,...
Q'N-1,Q'2N-1,...
P2S 3)
P2S
I'0,I'1,I'2,...
Q'0,Q'1,...
IQ Mux
C'0,C'1,...
To Cell Interleaver
rotated signal space diversity (SSD) scheme>
From Bit-to-Cell Demux
b0,b1,...
Constellation Mapper
C0,C1,...
S2P
C0,CN/2,CN,...
C1,CN/2+1,CN+1,...
CN/2-1,CN-1,...
IQ Demux
I0,IN/2,IN,...
Q0,QN/2,QN,...
I1,IN/2+1 ,IN+1 ,...
Q1,QN/2+1,...
IN/2-1,IN-1,...
QN/2-1,QN-1,...
LP
IQ-P2S 4)
I'0,I'1,I'2,...
Q'0,Q'1,Q'2,...
Q-delay/IQ-CI 5)
IQ Mux
C''0,C''1,...
To Cell Interleaver

FIG. 18

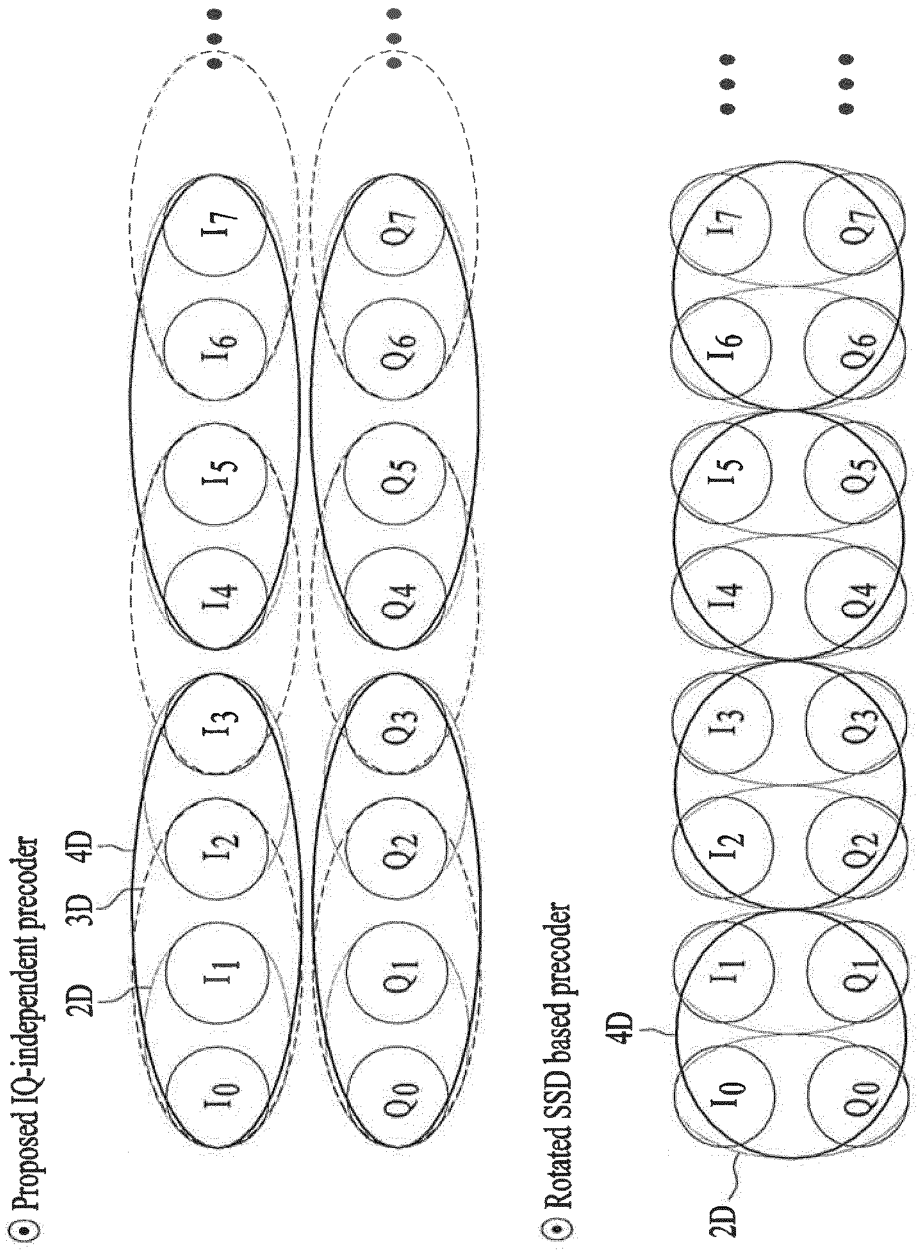
Proposed IQ-independent precoder
2D
3D
4D
$I_0$ $I_1$ $I_2$ $I_3$ $I_4$ $I_5$ $I_6$ $I_7$
$Q_0$ $Q_1$ $Q_2$ $Q_3$ $Q_4$ $Q_5$ $Q_6$ $Q_7$
Rotated SSD based precoder
4D
2D
$I_0$ $I_1$ $I_2$ $I_3$ $I_4$ $I_5$ $I_6$ $I_7$
$Q_0$ $Q_1$ $Q_2$ $Q_3$ $Q_4$ $Q_5$ $Q_6$ $Q_7$

FIG. 19

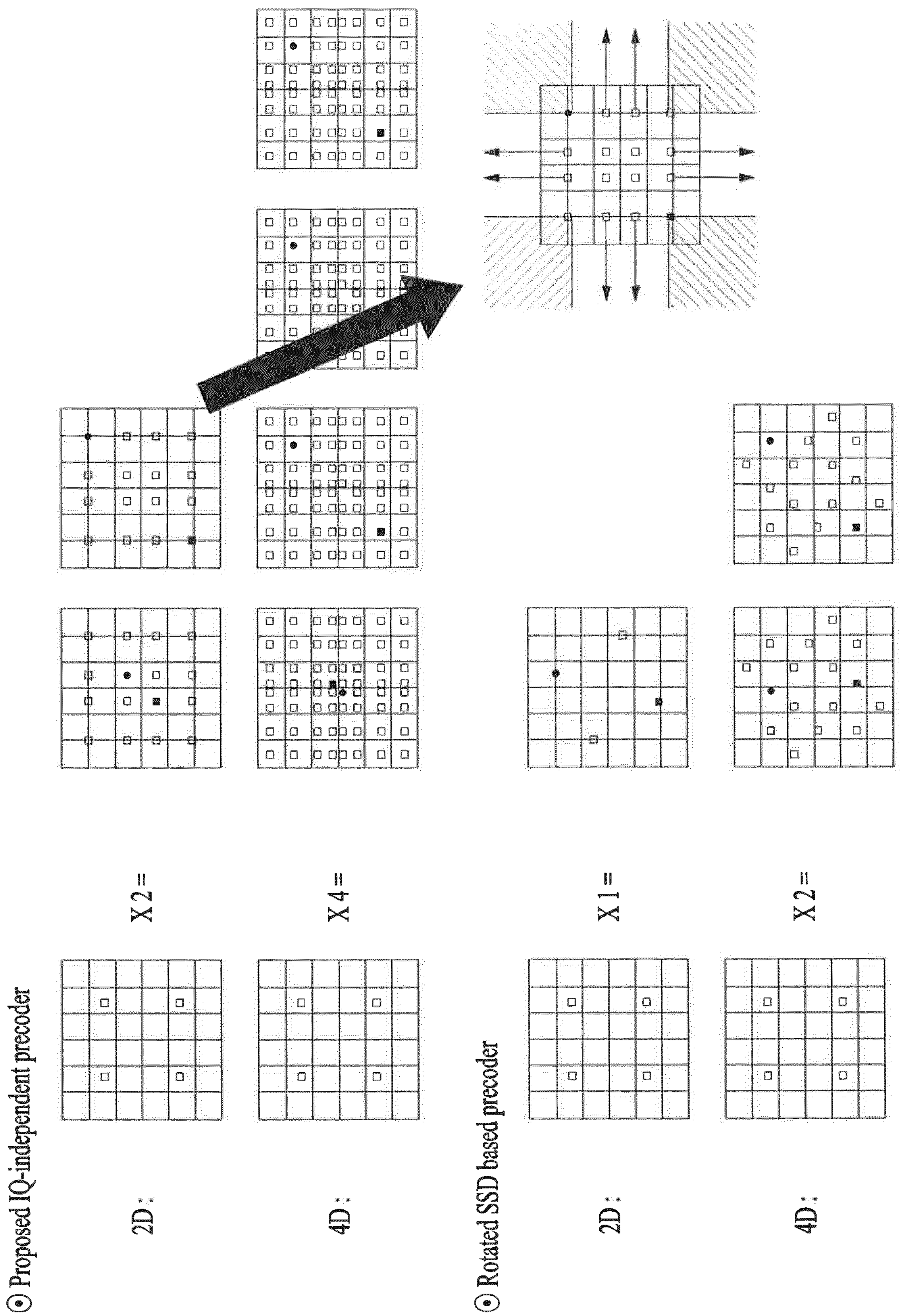
Proposed IQ-independent precoder
2D :
X 2 =
4D :
X 4 =
Rotated SSD based precoder
2D :
X 1 =
4D :
X 2 =

# FIG. 20

⊙ $2^m$ dimensional precoding matrix

2D : $A_2 = \begin{bmatrix} a & -b \\ b & a \end{bmatrix}$ (rotation), $\begin{bmatrix} a & b \\ b & -a \end{bmatrix}$ (reflection)

$$|a|^2 \geq |b|^2, \quad a^2 + b^2 = 1 \quad ...(1)$$

$$\frac{b}{a} \overset{\Delta}{=} s \quad ...(2)$$

Find S by analysis and simulation !!!

N(=$2^m$)D: $A_{2^m} = \begin{bmatrix} A_{2^{m-1}} & -B_{2^{m-1}} \\ B_{2^{m-1}} & A_{2^{m-1}} \end{bmatrix}$, $\begin{bmatrix} A_{2^{m-1}} & B_{2^{m-1}} \\ B_{2^{m-1}} & -A_{2^{m-1}} \end{bmatrix}$

where $B_{2^{m-1}} = \begin{bmatrix} B_{2^{m-2}} & -B_{2^{m-2}} \\ B_{2^{m-2}} & B_{2^{m-2}} \end{bmatrix}$, $\begin{bmatrix} B_{2^{m-2}} & B_{2^{m21}} \\ B_{2^{m-2}} & -B_{2^{m-2}} \end{bmatrix}$, $B_1 = [1], [-1]$

$$|a|^2 \geq |b|^2, \quad a^2 + (N-1)b^2 = 1 \quad ...(3)$$

$$\frac{b}{a} \overset{\Delta}{=} s \quad ...(4)$$

Find S by analysis and simulation !!!

# FIG. 21

⊙ 3 dimensional precoding matrix

Base matrix : $\begin{bmatrix} a & b & c \\ c & a & b \\ b & c & a \end{bmatrix}$ ⇨ Determine signs using (3)

$|a|^2 \geq |b|^2$ , $|a|^2 \geq |c|^2$ ...(1)

$a^2 + b^2 + c^2 = 1$ ...(2)

$ab + bc + ca = 0$ ...(3)

$\frac{b}{a} \triangleq s_1$ , $\frac{b}{a} \triangleq s_2$ ...(4)  Find S1, S2 by analysis and simulation !!!

$(1 + s_1)(1 + s_2) = 1$ ...(5)  example $s_1$ =0.1111..., $s_2$ = -0.1

Various Base matrix :

$\begin{bmatrix} a & b & c \\ -c & a & b \\ -b & -c & a \end{bmatrix}$ (a)

$\begin{bmatrix} a & -b & c \\ c & a & -b \\ -b & c & a \end{bmatrix}$ (b)

$\begin{bmatrix} a & b & -c \\ -c & a & -b \\ b & c & a \end{bmatrix}$ (c)

FIG. 22

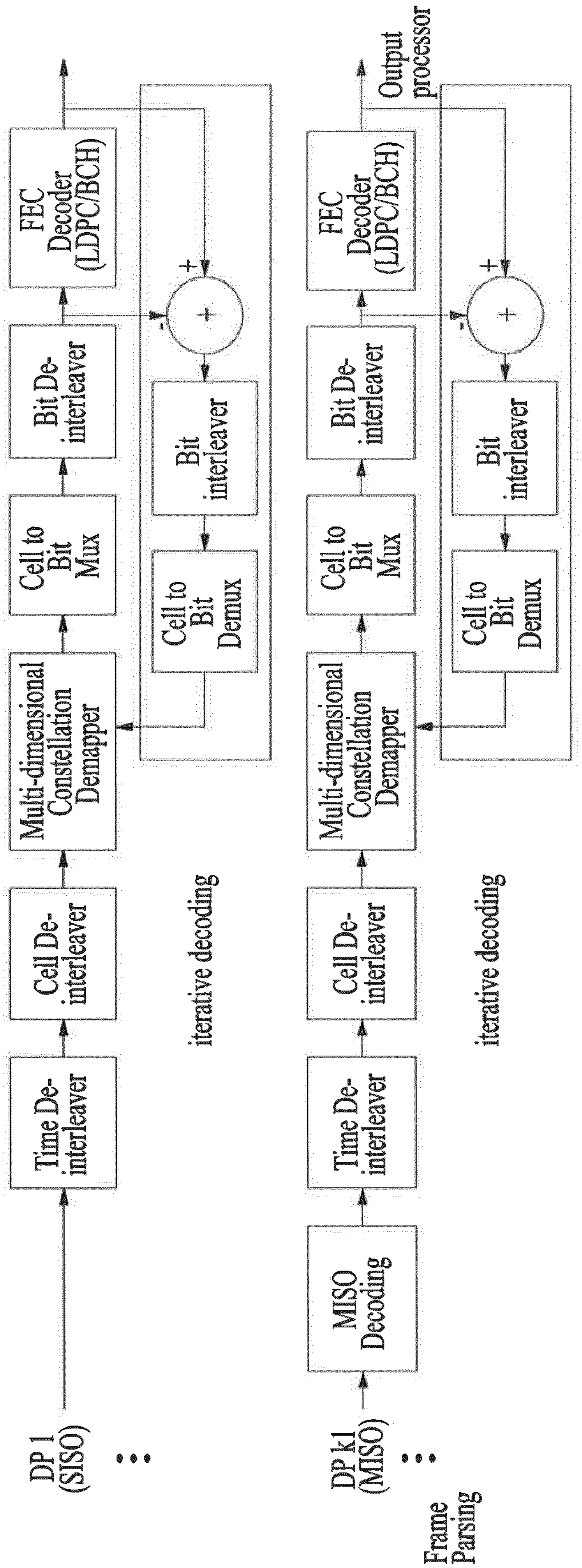
DP 1 (SISO)
Time De-interleaver
Cell De-interleaver
Multi-dimensional Constellation Demapper
Cell to Bit Mux
Bit De-interleaver
FEC Decoder (LDPC/BCH)
Bit interleaver
Cell to Bit Demux
iterative decoding
DP k1 (MISO)
MISO Decoding
Time De-interleaver
Cell De-interleaver
Multi-dimensional Constellation Demapper
Cell to Bit Mux
Bit De-interleaver
FEC Decoder (LDPC/BCH)
Bit interleaver
Cell to Bit Demux
iterative decoding
Output processor
Frame Parsing

FIG. 23

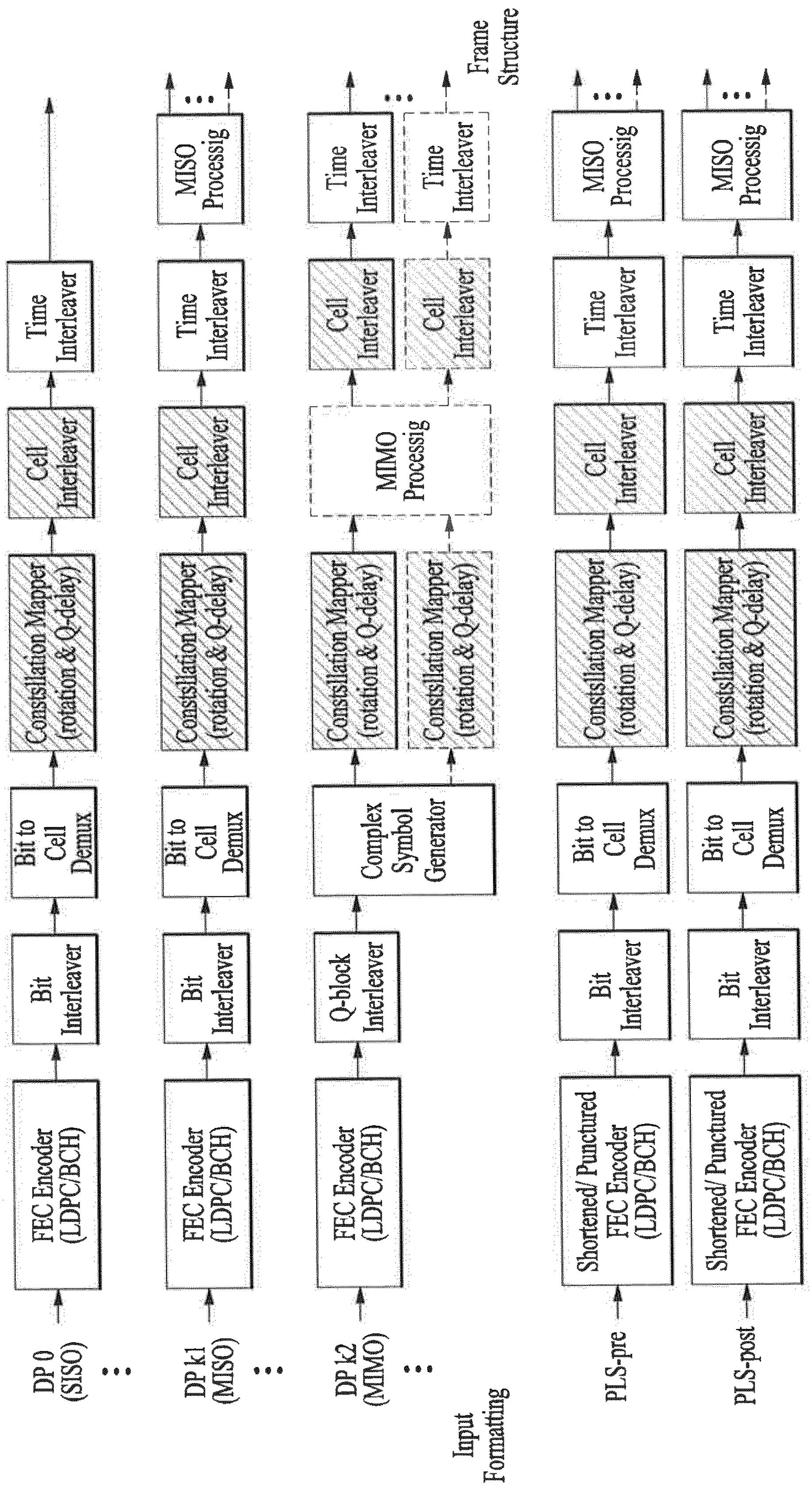
DP 0 (SISO)
FEC Encoder (LDPC/BCH)
Bit Interleaver
Bit to Cell Demux
Constsllation Mapper (rotation & Q-delay)
Cell Interleaver
Time Interleaver
DP k1 (MISO)
MISO Processig
DP k2 (MIMO)
Q-block Interleaver
Complex Symbol Generator
MIMO Processig
PLS-pre
PLS-post
Shortened/ Punctured FEC Encoder (LDPC/BCH)
Input Formatting
Frame Structure

FIG. 24

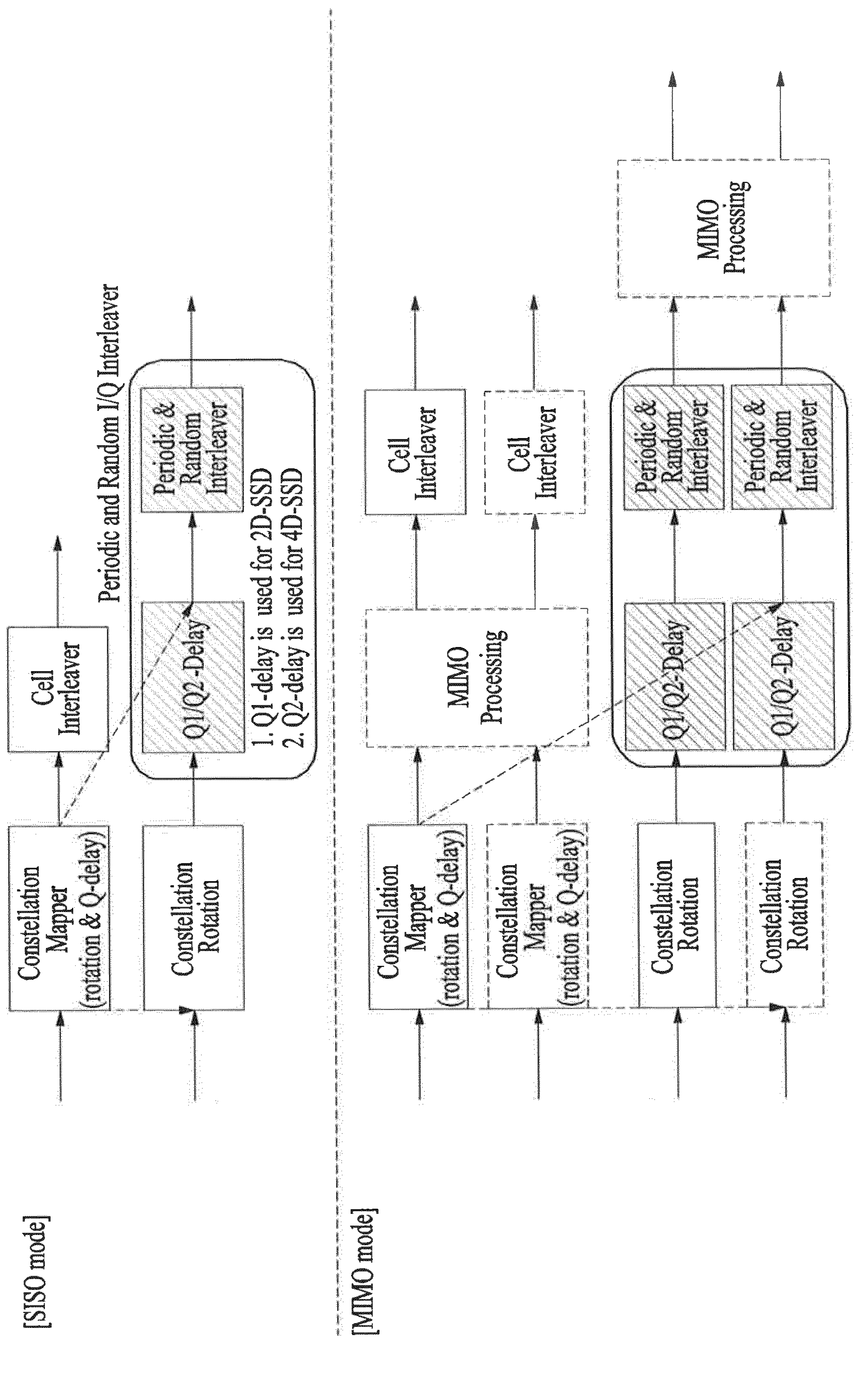

[SISO mode]
Constellation Mapper (rotation & Q-delay)
Cell Interleaver
Constellation Rotation
Q1/Q2-Delay
Periodic & Random Interleaver
Periodic and Random I/Q Interleaver
1. Q1-delay is used for 2D-SSD
2. Q2-delay is used for 4D-SSD
[MIMO mode]
Constellation Mapper (rotation & Q-delay)
Constellation Mapper (rotation & Q-delay)
MIMO Processing
Cell Interleaver
Cell Interleaver
Constellation Rotation
Constellation Rotation
Q1/Q2-Delay
Q1/Q2-Delay
Periodic & Random Interleaver
Periodic & Random Interleaver
MIMO Processing

FIG. 25

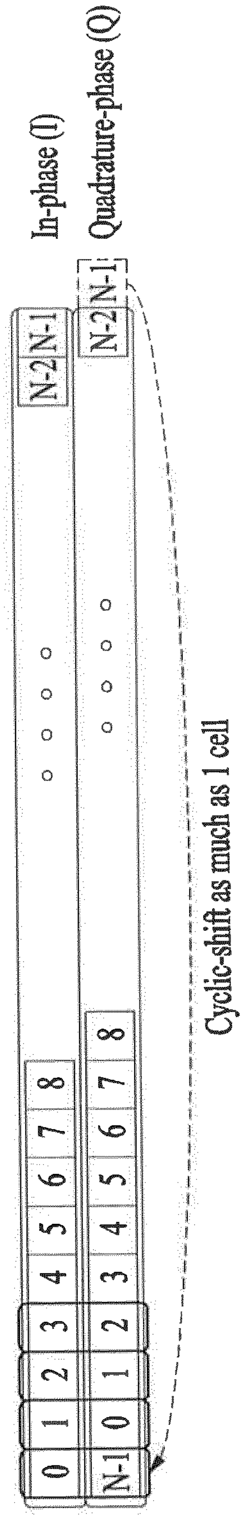
In-phase (I)
Quadrature-phase (Q)
0 1 2 3 4 5 6 7 8
N-2 N-1
N-1 0 1 2 3 4 5 6 7 8
N-2 N-1
Cyclic-shift as much as 1 cell

FIG. 26

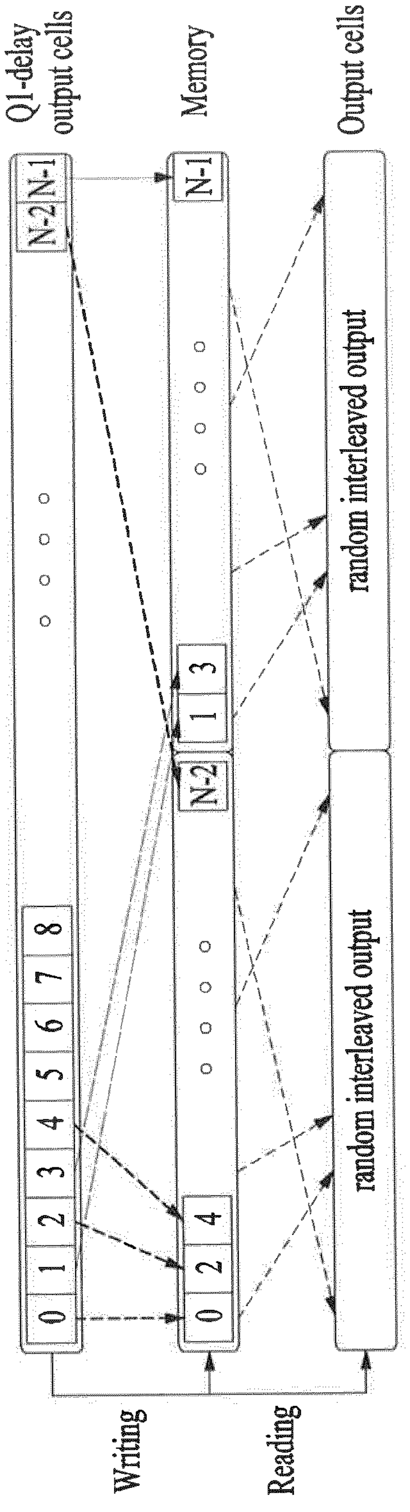
Q1-delay output cells
Memory
Output cells
0
1
2
3
4
5
6
7
8
N-2
N-1
random interleaved output
random interleaved output
Writing
Reading

FIG. 27

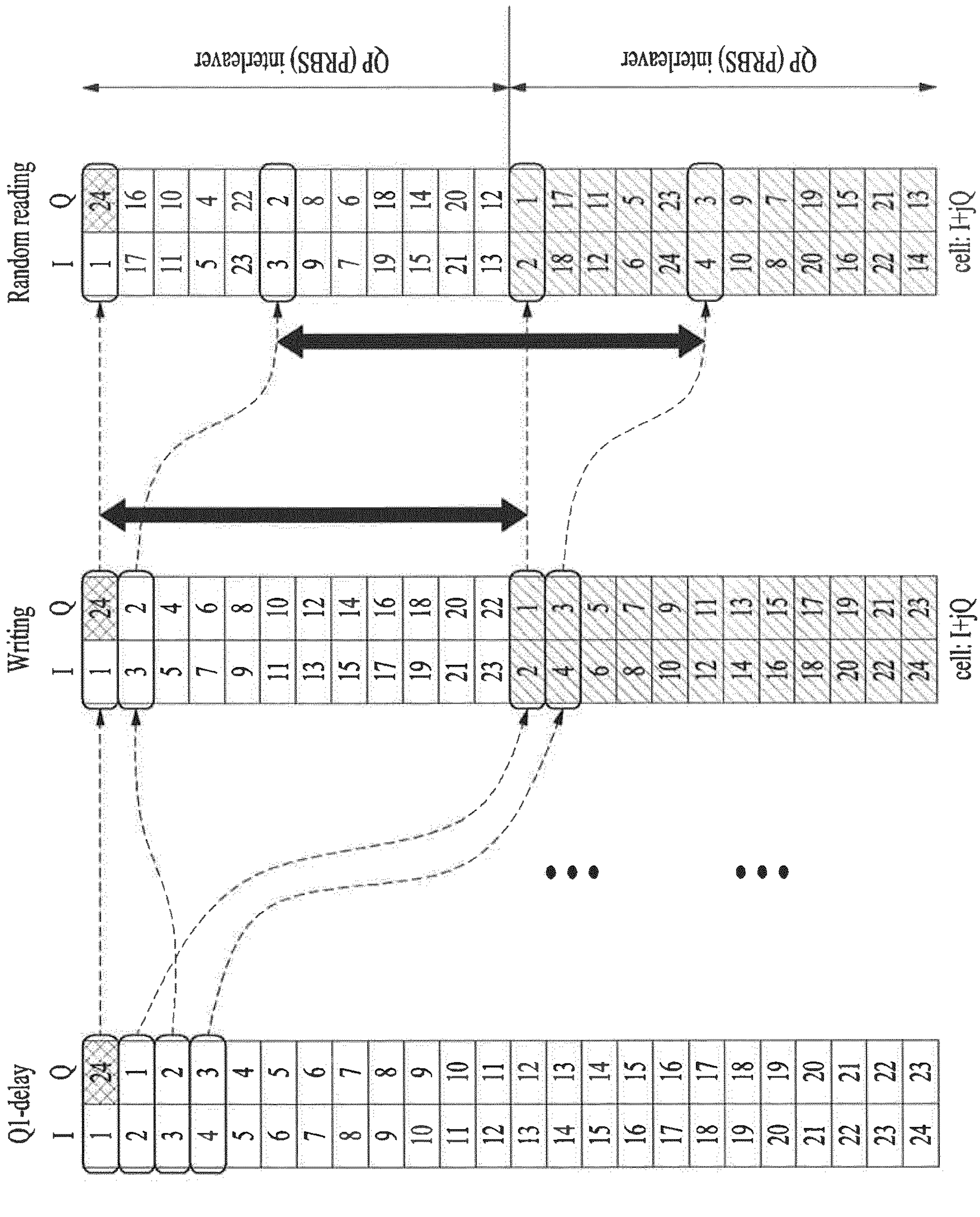

Q1-delay
Writing
Random reading
I
Q
QP (PRBS) interleaver
QP (PRBS) interleaver
cell: I+jQ
cell: I+jQ

FIG. 28

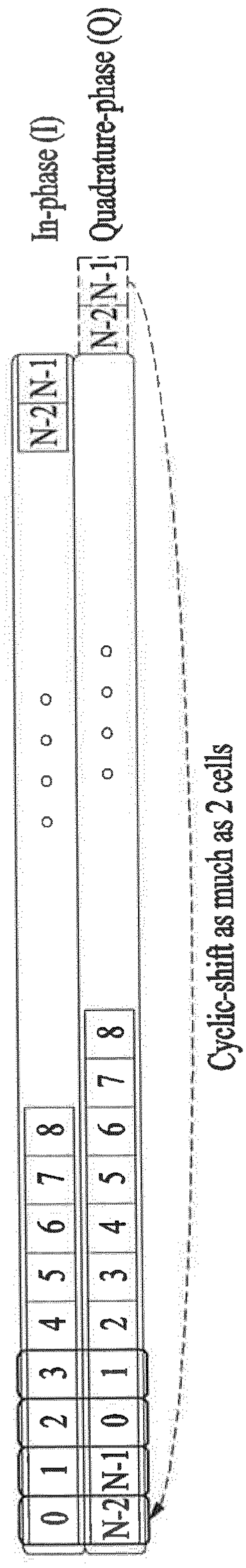
In-phase (I)
Quadrature-phase (Q)
0
1
2
3
4
5
6
7
8
N-2
N-1
N-2
N-1
0
1
2
3
4
5
6
7
8
N-2
N-1
Cyclic-shift as much as 2 cells

FIG. 29

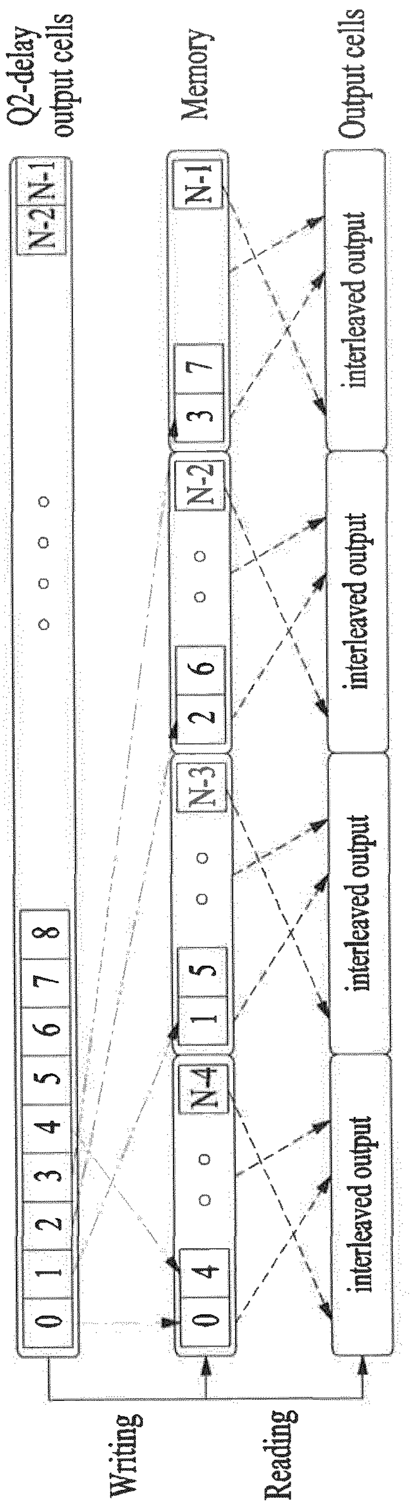
Q2-delay output cells
0 1 2 3 4 5 6 7 8
N-2 N-1
Memory
0 4 N-4
1 5 N-3
2 6 N-2
3 7 N-1
Output cells
interleaved output
interleaved output
interleaved output
interleaved output
Writing
Reading

FIG. 30

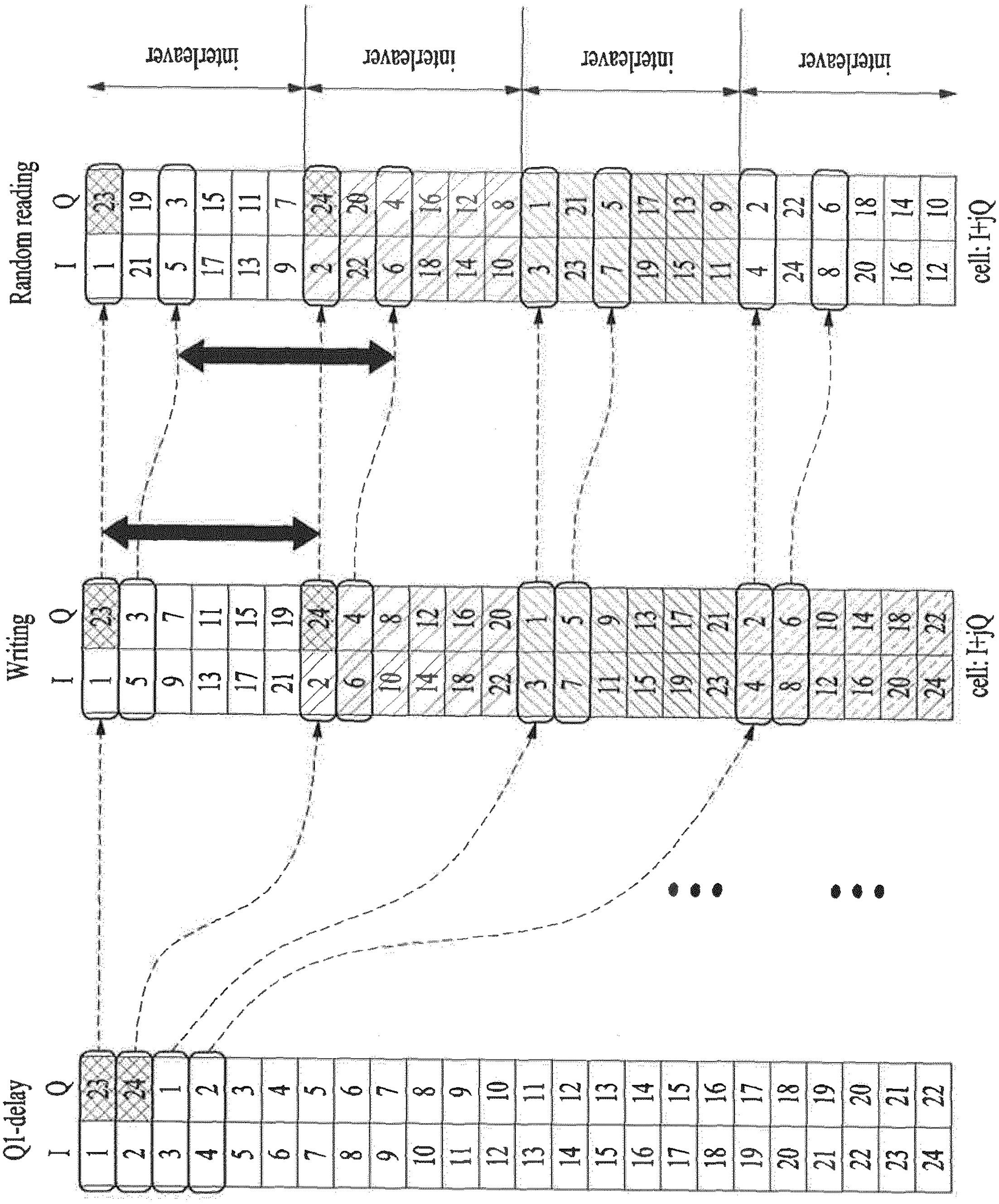
Q1-delay
I Q
Writing
I Q
Random reading
I Q
interleaver
interleaver
interleaver
interleaver
cell: I+jQ
cell: I+jQ

FIG. 31

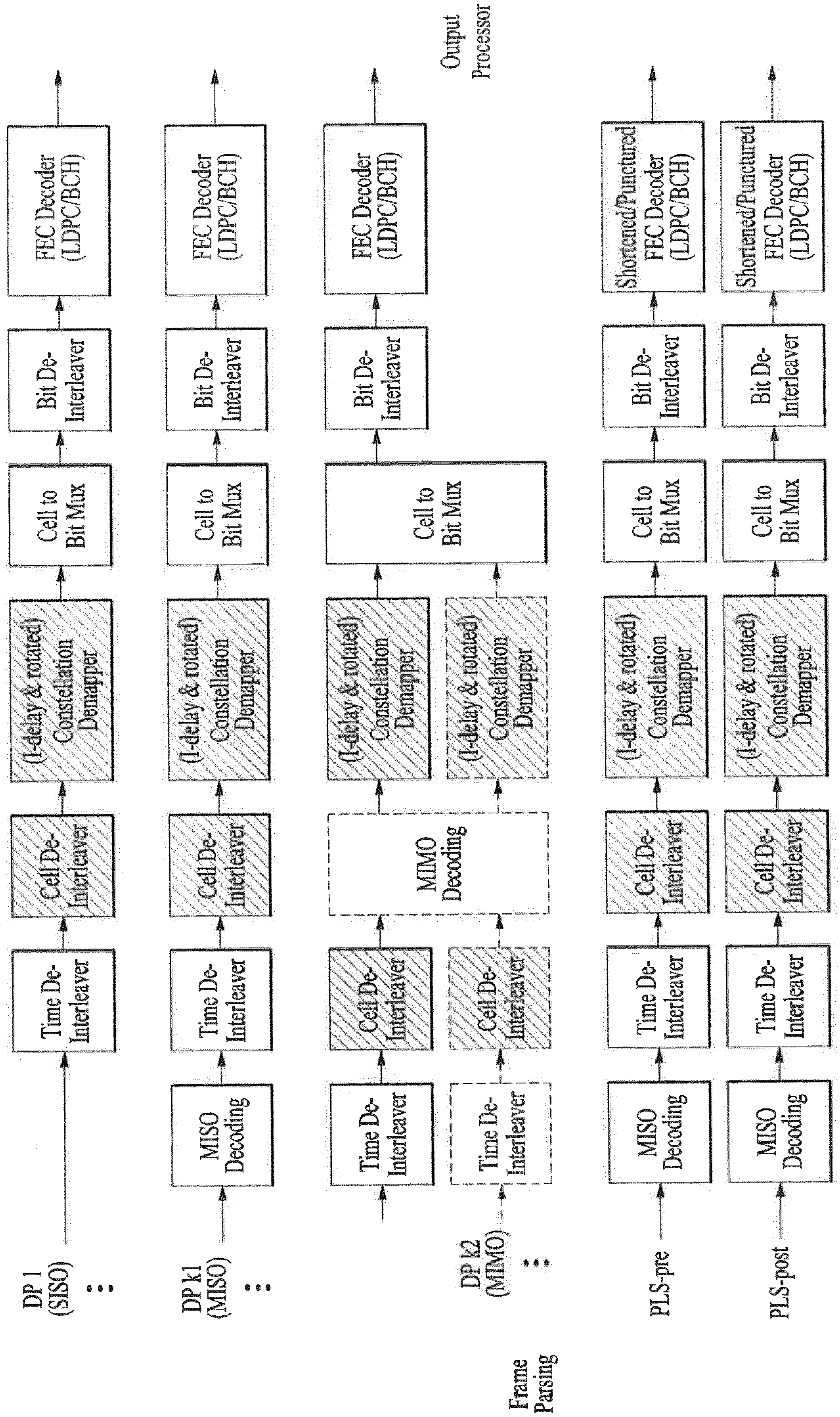
Frame Parsing
DP 1 (SISO)
DP k1 (MISO)
DP k2 (MIMO)
PLS-pre
PLS-post
MISO Decoding
Time De-Interleaver
Cell De-Interleaver
MIMO Decoding
(I-delay & rotated) Constellation Demapper
Cell to Bit Mux
Bit De-Interleaver
FEC Decoder (LDPC/BCH)
Shortened/Punctured FEC Decoder (LDPC/BCH)
Output Processor

FIG. 32

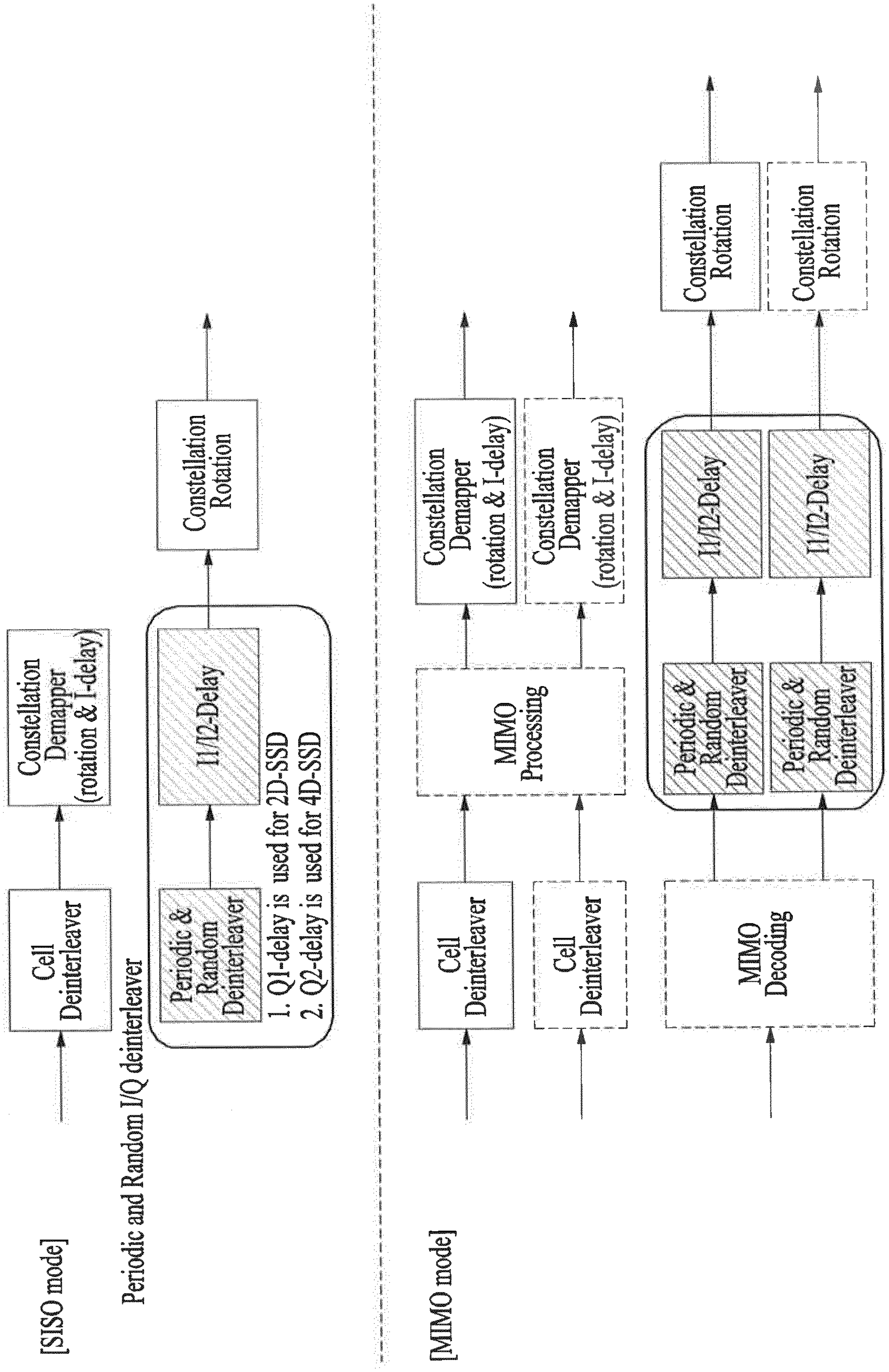
[SISO mode]
Cell Deinterleaver
Constellation Demapper (rotation & I-delay)
Periodic and Random I/Q deinterleaver
Periodic & Random Deinterleaver
I1/I2-Delay
Constellation Rotation
1. Q1-delay is used for 2D-SSD
2. Q2-delay is used for 4D-SSD
[MIMO mode]
Cell Deinterleaver
Cell Deinterleaver
MIMO Processing
Constellation Demapper (rotation & I-delay)
Constellation Demapper (rotation & I-delay)
MIMO Decoding
Periodic & Random Deinterleaver
Periodic & Random Deinterleaver
I1/I2-Delay
I1/I2-Delay
Constellation Rotation
Constellation Rotation

FIG. 33

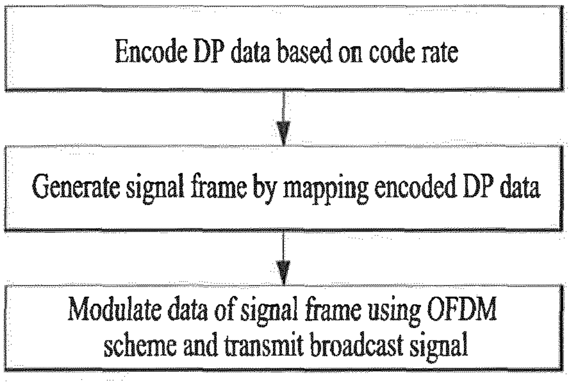
Encode DP data based on code rate
Generate signal frame by mapping encoded DP data
Modulate data of signal frame using OFDM scheme and transmit broadcast signal

FIG. 34

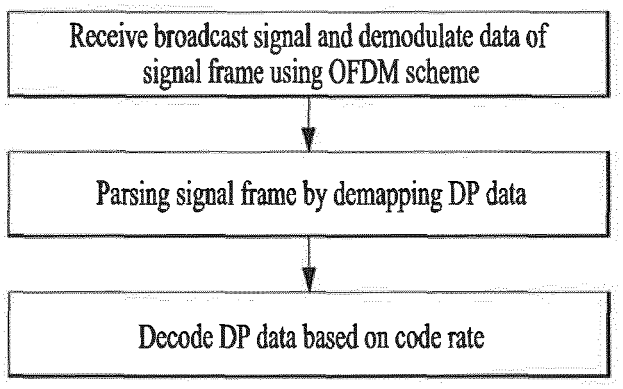
Receive broadcast signal and demodulate data of signal frame using OFDM scheme
Parsing signal frame by demapping DP data
Decode DP data based on code rate

**INTERNATIONAL SEARCH REPORT**

International application No.
**PCT/KR2014/002239**

A. CLASSIFICATION OF SUBJECT MATTER

***H04N 21/23(2011.01)i, H04N 21/43(2011.01)i***

According to International Patent Classification (IPC) or to both national classification and IPC

B. FIELDS SEARCHED

Minimum documentation searched (classification system followed by classification symbols)

H04N 21/23; H04N 7/015; H04L 5/00; H04N 7/24; H04L 1/00; H04B 3/02; H04L 12/56; H04L 27/26; H04N 21/43

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: DP(data pipe), FEC incoding, interleaving, broadcast signal, constellation, mapping, code rate.

C. DOCUMENTS CONSIDERED TO BE RELEVANT

| Category* | Citation of document, with indication, where appropriate, of the relevant passages | Relevant to claim No. |
|---|---|---|
| X<br>A | KR 10-2011-0108395 A (LG ELECTRONICS INC.) 05 October 2011<br>See paragraphs 140, 239, 241, 243, 248-250; claims 9-10, 12-13; and figures 60, 113-114. | 1,6,8,11,13,18,20,23<br>2-5,7,9-10,12,14-17,19,21-22,24 |
| A | WO 2011-104534 A2 (SONY CORPORATION) 01 September 2011<br>See page 12, line 1 - page 13, line 7; claim 1; and figure 4. | 1-24 |
| A | WO 2011-105093 A2 (PANASONIC CORPORATION) 01 September 2011<br>See abstract; and claims 1, 8. | 1-24 |
| A | KR 10-2012-0056640 A (ELECTRONICS AND TELECOMMUNICATIONS RESEARCH INSTITUTE) 04 June 2012<br>See paragraphs 22-23; claims 1, 3; and figure 2. | 1-24 |
| A | KR 10-2011-0095353 A (THOMSON LICENSING) 24 August 2011<br>See paragraphs 16-19; claims 1-3; and figure 3. | 1-24 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 JUNE 2014 (26.06.2014) | **26 JUNE 2014 (26.06.2014)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.
PCT/KR2014/002239

| Patent document cited in search report | Publication date | Patent family member | Publication date |
|---|---|---|---|
| KR 10-2011-0108395 A | 05/10/2011 | AT 521153 T | 15/09/2011 |
| | | CN 102301700 A | 28/12/2011 |
| | | DK 2216926 T3 | 05/12/2011 |
| | | DK 2378694 T3 | 18/02/2013 |
| | | DK 2381606 T3 | 18/02/2013 |
| | | EP 2216926 A1 | 11/08/2010 |
| | | EP 2216926 B1 | 17/08/2011 |
| | | EP 2378694 A1 | 19/10/2011 |
| | | EP 2378694 B1 | 14/11/2012 |
| | | EP 2381606 A1 | 26/10/2011 |
| | | EP 2381606 B1 | 14/11/2012 |
| | | ES 2372023 T3 | 13/01/2012 |
| | | ES 2399620 T3 | 02/04/2013 |
| | | ES 2399707 T3 | 02/04/2013 |
| | | PL 2216926 T3 | 31/01/2012 |
| | | PT 2216926 E | 07/12/2011 |
| | | PT 2378694 E | 15/02/2013 |
| | | PT 2381606 E | 13/02/2013 |
| | | SI 2216926 T1 | 30/12/2011 |
| | | WO 2010-090373 A1 | 12/08/2010 |
| WO 2011-104534 A2 | 01/09/2011 | AU 2011-219600 A1 | 30/08/2012 |
| | | CN 102783111 A | 14/11/2012 |
| | | EA 201201181 A1 | 30/04/2013 |
| | | EP 2540044 A2 | 02/01/2013 |
| | | GB 201003221 D0 | 14/04/2010 |
| | | GB 201017562 D0 | 01/12/2010 |
| | | GB 2478140 A | 31/08/2011 |
| | | GB 2478172 A | 31/08/2011 |
| | | KR 10-2013-0028898 A | 20/03/2013 |
| | | TW 201212596 A | 16/03/2012 |
| | | US 2012-0314786 A1 | 13/12/2012 |
| | | WO 2011-104534 A3 | 27/10/2011 |
| WO 2011-105093 A2 | 01/09/2011 | EP 2362654 A1 | 31/08/2011 |
| | | EP 2540083 A2 | 02/01/2013 |
| | | JP 05431594 B2 | 05/03/2014 |
| | | JP 2013-520850 A | 06/06/2013 |
| | | JP 2014-075827 A | 24/04/2014 |
| | | TW 201145878 A | 16/12/2011 |
| | | US 2012-0314762 A1 | 13/12/2012 |
| | | WO 2011-105093 A3 | 20/10/2011 |
| KR 10-2012-0056640 A | 04/06/2012 | DE 102011055315 A1 | 31/05/2012 |
| KR 10-2011-0095353 A | 24/08/2011 | CN 102257754 A | 23/11/2011 |
| | | CN 102257754 B | 01/01/2014 |
| | | EP 2366230 A1 | 21/09/2011 |
| | | EP 2366230 B1 | 28/11/2012 |

Form PCT/ISA/210 (patent family annex) (July 2009)

**INTERNATIONAL SEARCH REPORT**
Information on patent family members

International application No.
**PCT/KR2014/002239**

| Patent document cited in search report | Publication date | Patent family member | Publication date |
| --- | --- | --- | --- |
| | | WO 2010-069996 A1 | 24/06/2010 |

Form PCT/ISA/210 (patent family annex) (July 2009)